(19) Europäisches Patentamt
European Patent Office
Office européen des brevets

(11) **EP 3 570 610 B1**

(12) **EUROPEAN PATENT SPECIFICATION**

(45) Date of publication and mention
of the grant of the patent:
**10.11.2021 Bulletin 2021/45**

(51) Int Cl.:
***H04W 72/04*** (2009.01)

(21) Application number: **18860437.5**

(22) Date of filing: **27.09.2018**

(86) International application number:
**PCT/CN2018/107799**

(87) International publication number:
**WO 2019/062789 (04.04.2019 Gazette 2019/14)**

(54) **METHOD AND DEVICE FOR DETERMINING TIME DOMAIN INFORMATION**

VERFAHREN UND VORRICHTUNG ZUR BESTIMMUNG VON ZEITBEREICHSINFORMATIONEN

PROCÉDÉ ET DISPOSITIF DE DÉTERMINATION D'INFORMATIONS DU DOMAINE TEMPOREL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2017 CN 201710922516**
**09.01.2018 CN 201810019319**

(43) Date of publication of application:
**20.11.2019 Bulletin 2019/47**

(73) Proprietor: **Huawei Technologies Co., Ltd.**
**Longgang District**
**Shenzhen, Guangdong 518129 (CN)**

(72) Inventors:
• **WANG, Ting**
**Shenzhen**
**Guangdong 518129 (CN)**
• **WANG, Yi**
**Shenzhen**
**Guangdong 518129 (CN)**
• **TANG, Zhenfei**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
WO-A1-2017/136592     CN-A- 102 316 535
CN-A- 106 559 886      CN-A- 107 027 181
US-A1- 2017 188 340

• HUAWEI ET AL: "Discussion on data transmission duration", 3GPP DRAFT; R1-1709994, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 26 June 2017 (2017-06-26), XP051299219, Retrieved from the Internet: URL:http://www.3gpp.org/ftp/Meetings_3GPP_SYNC/RAN1/Docs/ [retrieved on 2017-06-26]
• INTERDIGITAL ET AL: "On data resource allocation for NR", 3GPP DRAFT; R1-1716482 ON DATA RESOURCE ALLOCATION FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 17 September 2017 (2017-09-17), XP051339935, Retrieved from the Internet: URL:http://www.3gpp.org/ftp/Meetings_3GPP_SYNC/RAN1/Docs/ [retrieved on 2017-09-17]
• LG ELECTRONICS: "Discussion on resource allocation and TBS determination", 3GPP TSG RAN WG1 Meeting NR#3, R1-1715885, 21 September 2017 (2017-09-21), XP051329569,

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the field of wireless communications technologies, and in particular, to a method and an apparatus for determining time domain information.

**BACKGROUND**

In a wireless communications system, a base station sends control information to a terminal, and based on the control information, the base station performs data transmission with the terminal by using a data channel. An example of this is provided in US 2017/0188340 A1. The control information may be downlink control information (downlink control information, DCI). The base station sends the downlink control information (downlink control information, DCI) to the terminal by using a physical downlink control channel (physical downlink control channel, PDCCH). The terminal detects the PDCCH in a control channel resource set (control resource set, CORESET) based on a configured detection period. Specifically, a cyclic redundancy check (cyclic redundancy check, CRC) of information carried on the PDCCH may be scrambled by using a corresponding radio network temporary identifier (radio network temporary identifier, RNTI). If the terminal correctly decodes the control channel by using the RNTI corresponding to the PDCCH, the terminal considers that the terminal has detected the control channel, and further obtains the control information carried on the control channel.

In a new radio (new radio, NR) system, a data channel supports flexible time domain resource scheduling, that is, a starting position and an ending position of the data channel are flexibly variable in time domain; therefore, the starting position and the ending position of the data channel may need to be indicated. To take various data transmission scenarios into account, time domain information in control information is designed in a unified manner, and this may cause relatively high signaling overheads of the control information.

Therefore, how to reduce the signaling overheads of the control information is a problem to be urgently resolved.

**SUMMARY**

This application provides a method and an apparatus for determining time domain information according to the independent claims, to resolve a problem in the prior art that signaling overheads of control information are relatively high.

According to a first aspect, this application provides a method for determining time domain information, where the method includes: determining time domain information in control information based on a detection period of a control channel, where the control information is used for performing data transmission; and determining, based on the time domain information, a time domain resource for performing data transmission.

In the method, a terminal determines the time domain information in the control information based on the detection period of the control channel, where the control information is used for performing data transmission; and the terminal determines, based on the time domain information, the time domain resource for performing data transmission. In the method, the time domain information in the control information is independently designed for different scenarios and requirements. This reduces signaling overheads of the control information in comparison with a method for designing time domain information in control information in a unified manner.

In a possible design, the method further includes: receiving configuration information, where the configuration information is used to indicate the detection period of the control channel.

In the method, the terminal determines the detection period of the control channel based on the received configuration information, and different detection periods may correspond to different time domain information. Because different detection periods of the control channel are configured, detection can be more flexible, an energy loss during detection of the control channel by the terminal is reduced, and different transmission requirements of the control channel are satisfied.

In a possible design, the determining time domain information in control information based on a detection period of a control channel includes: determining, based on the detection period of the control channel, at least one of a quantity of bits of the time domain information, information indicated by the time domain information, and a time domain information indication method.

In the method, a specific parameter included in the time domain information may be accurately obtained based on the detection period of the control channel.

In a possible design, the determining, based on the detection period of the control channel, a quantity of bits of the time domain information includes: determining the quantity of bits of the time domain information based on the detection period of the control channel and a correspondence between the detection period of the control channel and the quantity of bits of the time domain information. The quantity of bits of the time domain information may also be a quantity of bits of the time domain information and frequency domain information.

In the method, setting the correspondence between the detection period of the control channel and the quantity of bits of the time domain information can simplify a design of the quantity of bits of the time domain information.

Optionally, the setting in the present invention may be predefining or configuring, and is not specifically limited herein.

In a possible design, the determining, based on the detection period of the control channel, information indicated by the time domain information includes: determining, based on the detection period of the control channel and a correspondence between the detection period of the control channel and the information indicated by the time domain information, the information indicated by the time domain information.

In a possible design, the time domain information is used to indicate a start and length indicator SLIV; and the determining, based on the detection period of the control channel, information indicated by the time domain information includes: determining a correspondence between a value of the time domain information and the SLIV based on the detection period of the control channel, and determining, based on the value of the time domain information and the correspondence between the value of the time domain information and the SLIV, the SLIV indicated by the time domain information.

In a possible design, the time domain information is used to indicate a start and length indicator SLIV; and the determining, based on the detection period of the control channel, information indicated by the time domain information includes: determining a SLIV set based on the detection period of the control channel, and determining the SLIV based on the time domain information, where the SLIV is included in the SLIV set. When the SLIV is determined based on the time domain information, the SLIV is determined based on a value of the time domain information and a correspondence between the value of the time domain information and the SLIV in the SLIV set.

In the method, a correspondence between the detection period of the control channel and the information indicated by the time domain information is set, so that the information indicated by the time domain information can be determined flexibly for different detection periods of the control channel.

In a possible design, the determining, based on the detection period of the control channel, a time domain information indication method includes: determining the time domain information indication method based on the detection period of the control channel and a correspondence between the detection period of the control channel and the time domain information indication method. The indication method may include at least one of the following: indicating a starting first time unit and an ending first time unit; indicating a starting first time unit and a quantity of first time units; indicating an ending first time unit and a quantity of first time units; indicating a starting second time unit; indicating an ending second time unit; and indicating a quantity of second time units.

In the method, the correspondence between the detection period of the control channel and the time domain information indication method is set, so that the time domain information indication method can be determined flexibly for different detection periods of the control channel.

In a possible design, the determining, based on the detection period of the control channel, a quantity of bits of the time domain information and information indicated by the time domain information includes: determining, based on the detection period of the control channel and a correspondence between the detection period of the control channel and the quantity of bits of the time domain information and the information indicated by the time domain information, the quantity of bits of the time domain information and the information indicated by the time domain information.

In the method, the correspondence between the detection period of the control channel and the quantity of bits of the time domain information and the information indicated by the time domain information is set, so that the quantity of bits of the time domain information and the information indicated by the time domain information can be determined flexibly for different detection periods of the control channel.

In a possible design, the determining, based on the detection period of the control channel, a quantity of bits of the time domain information and a time domain information indication method includes: determining the quantity of bits of the time domain information and the time domain information indication method based on the detection period of the control channel and a correspondence between the detection period of the control channel and the quantity of bits of the time domain information and the time domain information indication method.

In the method, the correspondence between the detection period of the control channel and the quantity of bits of the time domain information and the time domain information indication method is set, so that the quantity of bits of the time domain information and the time domain information indication method can be determined flexibly for different detection periods of the control channel.

In a possible design, the determining, based on the detection period of the control channel, information indicated by the time domain information and a time domain information indication method includes: determining, based on the detection period of the control channel and a correspondence between the detection period of the control channel and the information indicated by the time domain information and the time domain information indication method, the information indicated by the time domain information and the time domain information indication method.

In the method, the correspondence between the detection period of the control channel and the information indicated by the time domain information and the time domain information indication method is set, so that the information indicated by the time domain information and the time domain information indication method can be determined flexibly for different detection periods of the control channel.

In a possible design, the method further includes:

determining an indication granularity of the time domain information based on the detection period, where the indication granularity may be a quantity of third time units included in the first time unit and/or the second time unit.

The method can reduce signaling overheads of the control information, and ensure flexibility of the first time unit and/or the second time unit.

According to a second aspect, this application provides a method for determining time domain information, where the method includes: determining time domain information in control information based on a detection period of a control channel, where the control information is used for performing data transmission, and the time domain information is used to indicate a time domain resource for performing data transmission; and sending the control information.

In the method, a base station determines the time domain information in the control information based on the detection period of the control channel, where the control information is used for performing data transmission; the base station determines, based on the time domain information, the time domain resource for performing data transmission; and the base station sends the control information. In the method, the time domain information in the control information is independently designed for different scenarios and requirements. This reduces signaling overheads of the control information in comparison with a method for designing time domain information in control information in a unified manner.

In a possible design, the method further includes: sending configuration information, where the configuration information is used to indicate the detection period of the control channel.

In a possible design, the determining time domain information in control information based on a detection period of a control channel includes: determining, based on the detection period of the control channel, at least one of a quantity of bits of the time domain information, information indicated by the time domain information, and a time domain information indication method.

In a possible design, the determining, based on the detection period of the control channel, a quantity of bits of the time domain information includes: determining the quantity of bits of the time domain information based on the detection period of the control channel and a correspondence between the detection period of the control channel and the quantity of bits of the time domain information.

In a possible design, the quantity of bits of the time domain information may also be a quantity of bits of the time domain information and frequency domain information.

In a possible design, the determining, based on the detection period of the control channel, information indicated by the time domain information includes: determining, based on the detection period of the control channel and a correspondence between the detection period of the control channel and the information indicated by the time domain information, the information indicated by the time domain information.

In a possible design, the determining, based on the detection period of the control channel, a time domain information indication method includes: determining the time domain information indication method based on the detection period of the control channel and a correspondence between the detection period of the control channel and the time domain information indication method.

In a possible design, the indication method includes at least one of the following: indicating a starting first time unit and an ending first time unit; indicating a starting first time unit and a quantity of first time units; indicating an ending first time unit and a quantity of first time units; indicating a starting second time unit; indicating an ending second time unit; and indicating a quantity of second time units.

In a possible design, the determining, based on the detection period of the control channel, a quantity of bits of the time domain information and information indicated by the time domain information includes: determining, based on the detection period of the control channel and a correspondence between the detection period of the control channel and the quantity of bits of the time domain information and the information indicated by the time domain information, the quantity of bits of the time domain information and the information indicated by the time domain information.

In the method, the correspondence between the detection period of the control channel and the quantity of bits of the time domain information and the information indicated by the time domain information is set, so that the quantity of bits of the time domain information and the information indicated by the time domain information can be determined flexibly for different detection periods of the control channel.

In a possible design, the determining, based on the detection period of the control channel, a quantity of bits of the time domain information and a time domain information indication method includes: determining the quantity of bits of the time domain information and the time domain information indication method based on the detection period of the control channel and a correspondence between the detection period of the control channel and the quantity of bits of the time domain information and the time domain information indication method.

In the method, the correspondence between the detection period of the control channel and the quantity of bits of the time domain information and the time domain information indication method is set, so that the quantity of bits of the time domain information and the time domain information indication method can be determined flexibly for different detection periods of the control channel.

In a possible design, the determining, based on the detection period of the control channel, information indicated by the time domain information and a time domain information indication method includes: determining, based on the detection period of the control channel and a correspondence between the detection period of the control channel and the information indicated by the time domain information and the time domain information indication method, the information indicated by the time domain information and the time domain information indication method.

In the method, the correspondence between the detection period of the control channel and the information indicated by the time domain information and the time domain information indication method is set, so that the information indicated by the time domain information and the time domain information indication method can be determined flexibly for different detection periods of the control channel.

In a possible design, the method further includes: determining an indication granularity of the time domain information based on the detection period, where the indication granularity may be a quantity of third time units included in the first time unit and/or the second time unit.

According to a third aspect, this application provides an apparatus, where the apparatus can implement the method in the first aspect and each design of the first aspect. The function may be implemented by hardware, or may be implemented by corresponding software executed by hardware. The hardware or software includes one or more modules corresponding to the function.

The apparatus may be a terminal or a chip. For example, the chip may be a chip applied to the terminal.

In a possible design, the apparatus includes a processor, where the processor is configured to support the terminal in performing a corresponding function in the foregoing method. Further, the apparatus may further include a transmitter/receiver, and the transmitter/receiver is configured to support communication between the apparatus and another apparatus. Further, the apparatus may further include a memory. The memory is coupled to the processor, and configured to store a program instruction and data.

In a possible design, the processor is configured to determine time domain information in control information based on a detection period of a control channel, where the control information is used for performing data transmission; and
the processor is further configured to determine, based on the time domain information, a time domain resource for performing data transmission.

In a possible design, the processor is further configured to receive configuration information by using the transmitter/receiver, where the configuration information is used to indicate the detection period of the control channel.

In a possible design, that the processor is configured to determine time domain information in control information based on a detection period of a control channel includes: the processor is configured to determine, based on the detection period of the control channel, at least one of a quantity of bits of the time domain information, information indicated by the time domain information, and a time domain information indication method.

In a possible design, the determining, based on the detection period of the control channel, a quantity of bits of the time domain information includes: determining the quantity of bits of the time domain information based on the detection period of the control channel and a correspondence between the detection period of the control channel and the quantity of bits of the time domain information.

In a possible design, the quantity of bits of the time domain information may also be a quantity of bits of the time domain information and frequency domain information.

In a possible design, the determining, based on the detection period of the control channel, information indicated by the time domain information includes: determining, based on the detection period of the control channel and a correspondence between the detection period of the control channel and the information indicated by the time domain information, the information indicated by the time domain information.

In a possible design, the determining, based on the detection period of the control channel, a time domain information indication method includes: determining the time domain information indication method based on the detection period of the control channel and a correspondence between the detection period of the control channel and the time domain information indication method.

In a possible design, the indication method includes at least one of the following: indicating a starting first time unit and an ending first time unit; indicating a starting first time unit and a quantity of first time units; indicating an ending first time unit and a quantity of first time units; indicating a starting second time unit; indicating an ending second time unit; and indicating a quantity of second time units.

In a possible design, the determining, based on the detection period of the control channel, a quantity of bits of the time domain information and information indicated by the time domain information includes: determining, based on the detection period of the control channel and a correspondence between the detection period of the control channel and the quantity of bits of the time domain information and the information indicated by the time domain information, the quantity of bits of the time domain information and the information indicated by the time domain information.

In the method, the correspondence between the detection period of the control channel and the quantity of bits of the time domain information and the information indicated by the time domain information is set, so that the quantity of bits of the time domain information and the information indicated by the time domain information can be determined flexibly for different detection periods of the control channel.

In a possible design, the determining, based on the detection period of the control channel, a quantity of bits of the time domain information and a time domain information indication method includes: determining the quantity of bits of the time domain information and the time domain information indication method based on the detection period of the control channel and a correspondence between the detection period of the control channel and the quantity of bits of the time domain information and the time domain information indication method.

In the method, the correspondence between the detection period of the control channel and the quantity of bits of the time domain information and the time domain information indication method is set, so that the quantity of bits of the time domain information and the time domain information indication method can be determined flexibly for different detection periods of the control channel.

In a possible design, the determining, based on the detection period of the control channel, information indicated by the time domain information and a time domain information indication method includes: determining, based on the detection period of the control channel and a correspondence between the detection period of the control channel and the information indicated by the time domain information and the time domain information indication method, the information indicated by the time domain information and the time domain information indication method.

In the method, the correspondence between the detection period of the control channel and the information indicated by the time domain information and the time domain information indication method is set, so that the information indicated by the time domain information and the time domain information indication method can be determined flexibly for different detection periods of the control channel.

In a possible design, the processor is further configured to determine an indication granularity of the time domain information based on the detection period, where the indication granularity may be a quantity of third time units included in the first time unit and/or the second time unit.

According to a fourth aspect, this application provides another apparatus, where the apparatus can implement the method in the second aspect and each design of the first aspect. The function may be implemented by hardware, or may be implemented by corresponding software executed by hardware. The hardware or software includes one or more modules corresponding to the function.

The apparatus may be a base station or a chip. For example, the chip may be a chip applied to the base station.

In a possible design, the apparatus includes a processor, where the processor is configured to support the base station in performing a corresponding function in the foregoing method. Further, the apparatus may further include a transmitter/receiver, and the transmitter/receiver is configured to support communication between the base station and a terminal. Further, the apparatus may further include a memory. The memory is coupled to the processor, and configured to store a program instruction and data.

In a possible design, the processor is configured to determine time domain information in control information based on a detection period of a control channel, where the control information is used for performing data transmission, and the time domain information is used to indicate a time domain resource for performing data transmission; and the processor is further configured to send the control information by using the transmitter/receiver.

In a possible design, the processor is further configured to send configuration information by using the transmitter/receiver, where the configuration information is used to indicate the detection period of the control channel.

In a possible design, the processor is configured to determine, based on the detection period of the control channel, at least one of a quantity of bits of the time domain information, information indicated by the time domain information, and a time domain information indication method.

In a possible design, the determining, based on the detection period of the control channel, a quantity of bits of the time domain information includes: determining the quantity of bits of the time domain information based on the detection period of the control channel and a correspondence between the detection period of the control channel and the quantity of bits of the time domain information.

In a possible design, the quantity of bits of the time domain information may also be a quantity of bits of the time domain information and frequency domain information.

In a possible design, the determining, based on the detection period of the control channel, information indicated by the time domain information includes: determining, based on the detection period of the control channel and a correspondence between the detection period of the control channel and the information indicated by the time domain information, the information indicated by the time domain information.

In a possible design, the determining, based on the detection period of the control channel, a time domain information indication method includes: determining the time domain information indication method based on the detection period of the control channel and a correspondence between the detection period of the control channel and the time domain information indication method.

In a possible design, the indication method includes at least one of the following: indicating a starting first time unit and an ending first time unit; indicating a starting first time unit and a quantity of first time units; indicating an ending first time unit and a quantity of first time units; indicating a starting second time unit; indicating an ending second time unit; and indicating a quantity of second time units.

In a possible design, the determining, based on the detection period of the control channel, a quantity of bits of the time domain information and information indicated by the time domain information includes: determining, based on the detection period of the control channel and a correspondence between the detection period of the control channel and the quantity of bits of the time domain information and the information indicated by the time domain information, the quantity of bits of the time domain information and the information indicated by the time domain information.

In the method, the correspondence between the detection period of the control channel and the quantity of bits of the time domain information and the information indicated by the time domain information is set, so that the quantity of bits of the time domain information and the information indicated by the time domain information can be determined flexibly for different detection periods of the control channel.

In a possible design, the determining, based on the detection period of the control channel, a quantity of bits of the time domain information and a time domain information indication method includes: determining the quantity of bits of the time domain information and the time domain information indication method based on the detection period of the control channel and a correspondence between the detection period of the control channel and the quantity of bits of the time domain information and the time domain information indication method.

In the method, the correspondence between the detection period of the control channel and the quantity of bits of the time domain information and the time domain information indication method is set, so that the quantity of bits of the time domain information and the time domain information indication method can be determined flexibly for different detection periods of the control channel.

In a possible design, the determining, based on the detection period of the control channel, information indicated by the time domain information and a time domain information indication method includes: determining, based on the detection period of the control channel and a correspondence between the detection period of the control channel and the information indicated by the time domain information and the time domain information indication method, the information indicated by the time domain information and the time domain information indication method.

In the method, the correspondence between the detection period of the control channel and the information indicated by the time domain information and the time domain information indication method is set, so that the information indicated by the time domain information and the time domain information indication method can be determined flexibly for different detection periods of the control channel.

In a possible design, the processor is further configured to determine an indication granularity of the time domain information based on the detection period, where the indication granularity may be a quantity of third time units included in the first time unit and/or the second time unit.

According to a fifth aspect, this application provides a communications system, where the communications system includes the apparatus in the third aspect and the apparatus in the fourth aspect.

According to a sixth aspect, this application provides a computer-readable medium, configured to store a computer program, where the computer program includes an instruction used to perform the method in the first aspect or any design of the first aspect.

According to a seventh aspect, this application provides a computer-readable medium, configured to store a computer program, where the computer program includes an instruction used to perform the method in the second aspect or any design of the second aspect.

According to an eighth aspect, this application provides a computer program product including an instruction, where when the computer program product runs on a computer, the computer is enabled to perform the method in the first aspect and/or any design of the first aspect.

According to a ninth aspect, this application provides a computer program product including an instruction, where when the computer program product runs on a computer, the computer is enabled to perform the method in the second aspect and/or any design of the second aspect.

According to a tenth aspect, an embodiment of this application provides a chip system, where the chip system includes a processor, and may further include a memory, and the chip system is configured to implement a function of the terminal in the foregoing method. The chip system may include a chip, or may include a chip and other discrete components.

According to an eleventh aspect, an embodiment of this application provides a chip system, where the chip system includes a processor, and may further include a memory, and the chip system is configured to implement a function of the network device in the foregoing method. The chip system may include a chip, or may include a chip and other discrete components.

According to a twelfth aspect, this application provides a method for determining time domain information, where the method includes: determining time domain information in control information based on a time domain position in which a control channel is located or based on a time domain position in which a detected control channel is located, where the control information is used for performing data transmission; and determining, based on the time domain information, a time domain resource for performing data transmission. For example, the time domain position in which the control channel is located is a time domain position in which a control channel resource set is located.

In a possible design, the determining time domain information in control information based on a time domain position in which a control channel is located or based on a time domain position in which a detected control channel is located includes: determining, based on the time domain position in which the control channel is located or based on the time domain position in which the detected control channel is located, information indicated by the time domain information.

In a possible design, the time domain information is used to indicate a SLIV; and the determining, based on the time domain position in which the control channel is located or based on the time domain position in which the detected control channel is located, information indicated by the time domain information includes: determining a correspondence between a value of the time domain information and the SLIV based on the time domain position in which the control channel is located or based on the time domain position in which the detected control channel is located, and determining, based on the value of the time domain information and the correspondence between the value of the time domain information and the SLIV, the SLIV indicated by the time domain information.

In a possible design, the time domain information is used to indicate a SLIV; and the determining, based on the time domain position in which the control channel is located or based on the time domain position in which the detected control channel is located, information indicated by the time domain information includes: determining a SLIV set based on the time domain position in which the control channel is located or based on the time domain position in which the detected control channel is located, and determining the SLIV based on the time domain information, where the SLIV is included in the SLIV set. The determining the SLIV based on the time domain information includes: determining the SLIV based on a value of the time domain information and a correspondence between the value of the time domain information and the SLIV in the SLIV set.

According to a thirteenth aspect, this application provides a method for determining time domain information, where the method includes: determining time domain information in control information based on a time domain position in which a control channel is located or based on a time domain position in which a detected control channel is located, where the control information is used for performing data transmission, and the time domain information is used to indicate a time domain resource for performing data transmission; and sending the control information. For example, the time domain position in which the control channel is located is a time domain position in which a control channel resource set is located.

A method for determining the time domain information in the control information based on the time domain position in which the control channel is located or based on the time domain position in which the detected control channel is located is the same as that described in the twelfth aspect, and is not described again herein.

According to a fourteenth aspect, this application provides an apparatus, where the apparatus can implement the method in the twelfth aspect and/or any design of the twelfth aspect. The function may be implemented by hardware, or may be implemented by corresponding software executed by hardware. The hardware or software includes one or more modules corresponding to the function.

The apparatus may be a terminal or a chip. For example, the chip may be a chip applied to the terminal.

In a possible design, the apparatus includes a processor, where the processor is configured to support the terminal in performing a corresponding function in the method in the twelfth aspect and/or any design of the twelfth aspect. Further, the apparatus may further include a transmitter/receiver, and the transmitter/receiver is configured to support communication between the apparatus and another apparatus. Further, the apparatus may further include a memory. The memory is coupled to the processor, and configured to store a program instruction and data.

In a possible design, the processor is configured to determine time domain information in control information based on a time domain position in which a control channel is located or based on a time domain position in which a detected control channel is located, where the control information is used for performing data transmission; and the processor is further configured to determine, based on the time domain information, a time domain resource for performing data transmission. For example, the time domain position in which the control channel is located is a time domain position in which a control channel resource set is located.

In a possible design, the determining time domain information in control information based on a time domain position in which a control channel is located or based on a time domain position in which a detected control channel is located includes: determining, based on the time domain position in which the control channel is located or based on the time domain position in which the detected control channel is located, information indicated by the time domain information.

In a possible design, the time domain information is used to indicate a SLIV; and the determining, based on the time domain position in which the control channel is located or based on the time domain position in which the detected control channel is located, information indicated by the time domain information includes: determining a correspondence between a value of the time domain information and the SLIV based on the time domain position in which the control channel is located or based on the time domain position in which the detected control channel is located, and determining, based on the value of the time domain information and the correspondence between the value of the time domain information and the SLIV, the SLIV indicated by the time domain information.

In a possible design, the time domain information is used to indicate a SLIV; and the determining, based on the time domain position in which the control channel is located or based on the time domain position in which the detected control channel is located, information indicated by the time domain information includes: determining a SLIV set based on the time domain position in which the control channel is located or based on the time domain position in which the detected control channel is located, and determining the SLIV based on the time domain information, where the SLIV is included in the SLIV set. The determining the SLIV based on the time domain information includes: determining the SLIV based on a value of the time domain information and a correspondence between the value of the time domain information and the SLIV in the SLIV set.

According to a fifteenth aspect, this application provides an apparatus, where the apparatus can implement the method in the thirteenth aspect and/or any design of the thirteenth aspect. The function may be implemented by hardware, or may be implemented by corresponding software executed by hardware. The hardware or software includes one or more modules corresponding to the function.

The apparatus may be a base station or a chip. For example, the chip may be a chip applied to the base station.

In a possible design, the apparatus includes a processor, where the processor is configured to support the base station in performing a corresponding function in the method in the thirteenth aspect and/or any design of the thirteenth aspect. Further, the apparatus may further include a transmitter/receiver, and the transmitter/receiver is configured to support communication between the apparatus and another apparatus. Further, the apparatus may further include a memory. The memory is coupled to the processor, and configured to store a program instruction and data.

In a possible design, the processor is configured to determine time domain information in control information based on a time domain position in which a control channel is located or based on a time domain position in which a detected control channel is located, where the control information is used for performing data transmission, and the time domain information is used to indicate a time domain resource for performing data transmission; and the processor is further configured to send the control information by using the transmitter/receiver. For example, the time domain position in which the control channel is located is a time domain position in which a control channel resource set is located.

A method used by the processor for determining the time domain information in the control information based on the time domain position in which the control channel is located or based on the time domain position in which the detected control channel is located is the same as that described in the fourteenth aspect, and is not described again herein.

According to a sixteenth aspect, this application provides a computer program product including an instruction, where when the computer program product runs on a computer, the computer is enabled to perform the method in the twelfth aspect and/or any design of the twelfth aspect.

According to a seventeenth aspect, this application provides a computer program product including an instruction, where when the computer program product runs on a computer, the computer is enabled to perform the method in the thirteenth aspect and/or any design of the thirteenth aspect.

According to an eighteenth aspect, an embodiment of this application provides a chip system, where the chip system includes a processor, and may further include a memory, and the chip system is configured to implement the method in the twelfth aspect and/or any design of the twelfth aspect. The chip system may include a chip, or may include a chip and other discrete components.

According to a nineteenth aspect, an embodiment of this application provides a chip system, where the chip system includes a processor, and may further include a memory, and the chip system is configured to implement the method in the thirteenth aspect and/or any design of the thirteenth aspect. The chip system may include a chip, or may include a chip and other discrete components.

## DESCRIPTION OF DRAWINGS

FIG. 1 is a schematic diagram of a location of a frequency resource according to an embodiment of this application;
FIG. 2 is a schematic structural diagram of a bandwidth of a resource that may be used for performing data transmission according to an embodiment of this application;
FIG. 3 is a schematic structural diagram of a bandwidth resource in a system frequency resource according to an embodiment of this application;
FIG. 4 is a schematic diagram of a downlink data channel according to an embodiment of this application;
FIG. 5 is a schematic diagram of a single-cell transmission scenario according to an embodiment of this application;

FIG. 6 is a schematic diagram of a coordinated multipoint transmission/reception transmission scenario according to an embodiment of this application;

FIG. 7 is a flowchart of a method for determining time domain information according to an embodiment of this application;

FIG. 8 is a schematic structural diagram of a slot according to an embodiment of this application;

FIG. 9 is another schematic structural diagram of a slot according to an embodiment of this application;

FIG. 10 is still another schematic structural diagram of a slot according to an embodiment of this application;

FIG. 11 is a flowchart of another method for determining time domain information according to an embodiment of this application;

FIG. 12 is a schematic block diagram of an apparatus according to an embodiment of this application; and

FIG. 13 is a schematic block diagram of another apparatus according to an embodiment of this application.

## DESCRIPTION OF EMBODIMENTS

The following further describes in detail this application with reference to accompanying drawings.

This application provides a method and an apparatus for determining time domain information, to resolve a problem that signaling overheads of control information are relatively high when time domain information in control information is designed in a unified manner. The method and the apparatus are based on a same inventive concept. Principles of the method and the apparatus for resolving the problem are similar. Therefore, for implementations of the apparatus and the method, mutual reference may be made, and details of repeated parts are not described.

This application may be applied to a wireless communications system, including a terminal and a base station. Sending data to the terminal by the base station is downlink transmission. Sending data to the base station by the terminal is uplink transmission. The base station may be a base station in a Long Term Evolution (long term evolution, LTE) system or the fifth generation mobile communications technology (the fifth generation mobile communications technology, 5G) system or an evolved system that may emerge in the future. The terminal may be a terminal in the LTE system or the 5G system or the evolved system that may emerge in the future. This is not limited in this application.

This application may also be applied to communication between base stations or communication between terminals, or the like. This is not limited in this application.

In embodiments of this application, terms "network" and "system" are usually used alternately, but a person skilled in the art may understand their meanings. Terminals in the embodiments of this application may also be referred to as terminal devices. The terminals may include various handheld devices, in-vehicle devices, wearable devices, computing devices, or other processing devices that have wireless communication functions, and user equipment (User Equipment, UE), mobile stations (Mobile station, MS), terminal apparatuses (terminal device), or the like in various forms. For ease of description, the devices mentioned above are collectively referred to as terminals. A base station in the embodiments of this application is an apparatus that is deployed in a radio access network and configured to provide a wireless communication function for a terminal. For example, the base station may include macro base stations, micro base stations, relay stations, access points, transmission and reception points (transmission and receiver point, TRP), or the like in various forms. The transmission and reception points may be different base stations, or may be different antenna panels of a same base station, and are not specifically limited herein. In systems using different radio access technologies, names of devices having functions of a base station may vary. For ease of description, in the embodiments of this application, the foregoing apparatuses that provide wireless communication functions for terminals are collectively referred to as base stations. It should be noted that names of the base station and the terminal may change when the solutions in the embodiments of this application are applied to the 5G system or another system that may emerge in the future, but this does not affect implementations of the solutions in the embodiments of this application.

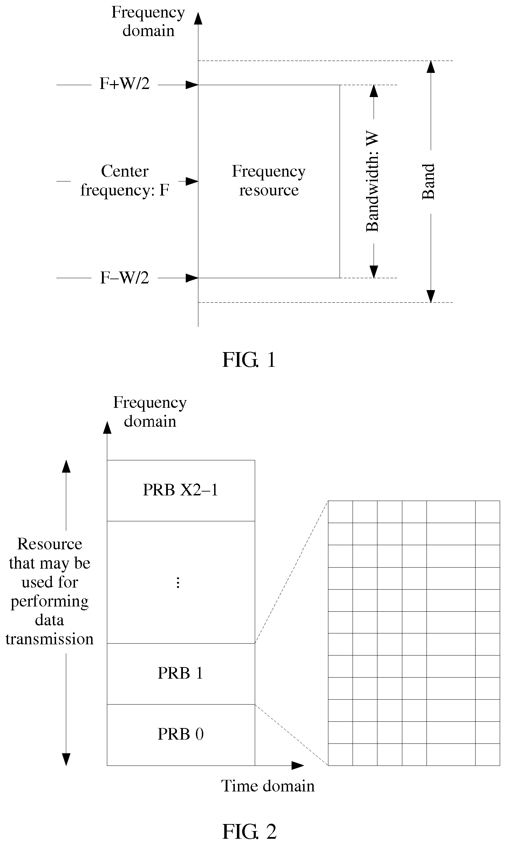

In the wireless communications system, the base station may perform wireless communication with the terminal by using an air interface resource. For example, in the 5G system, the air interface resource includes a frequency resource, and the frequency resource may be located in a specified frequency range. The frequency range may also be referred to as a band (band) or a frequency band. In frequency domain, a center point of the frequency resource may be referred to as a center frequency, and a width of the frequency domain resource may be referred to as a bandwidth (bandwidth, BW). For example, FIG. 1 is a schematic diagram of a location of a frequency resource. As shown in FIG. 1, the frequency resource may be some or all resources in a band, a bandwidth of the frequency resource is W, and a center frequency is F. Frequencies at boundaries of the frequency resource are F-W/2 and F+W/2 respectively. This may also be described as "a highest frequency of the frequency resource is F+W/2, and a lowest frequency of the frequency resource is F-W/2". In the wireless communications system, a frequency resource for performing downlink communication may be the same as or different from a frequency resource for performing uplink communication. This is not limited in this application.

When the base station performs wireless communication with the terminal by using a frequency resource, the base station manages a system frequency resource, and allocates a frequency resource from the system frequency resource to the terminal, so that the base station and the terminal can perform communication by using the allocated frequency resource. The system frequency resource may be a frequency resource that may be managed and allocated by the base station, or may be a frequency resource that may be used for performing communication between the base station and the terminal. In the embodiments of this application, the system frequency resource may also be referred to as a system resource or a transmission resource. In frequency domain, a width of the system frequency resource may be referred to as a bandwidth of the system frequency resource, or may be referred to as a system bandwidth or a transmission bandwidth.

In the wireless communications system, such as an orthogonal frequency division multiplexing (orthogonal frequency division multiplexing, OFDM)-based communications system, in frequency domain, a resource that may be used for performing data transmission includes several resource grids. One resource grid corresponds to one subcarrier, and one physical resource block (physical resource block, PRB) includes X1 resource grids, where X1 is an integer greater than or equal to 1. For example, X1 is 12. The resource that may be used for performing data transmission may be some or all resources in the system resource. This is not limited in this application. A bandwidth of the resource that may be used for performing data transmission may be referred to as X2 PRBs, where X2 is an integer greater than or equal to 1. For PRBs in the resource that may be used for performing data transmission, the PRBs may be numbered in sequence from 0 to X2-1 in a frequency increase direction, and a number of each PRB is obtained. In the embodiments of this application, the term "number" may also be referred to as "an identifier" or "an index". In time domain, one PRB may include X3 symbols, where X3 is an integer greater than or equal to 1. For example, X3 is 1 or 7 or 14. In an example in which one PRB includes 12 resource grids in frequency domain and 7 symbols in time domain, FIG. 2 is a schematic structural diagram of a bandwidth of a resource that may be used for performing data transmission. As shown in the figure, the bandwidth of the resource that may be used for performing data transmission includes X2 PRBs in total: a PRB 0 to a PRB X2-1.

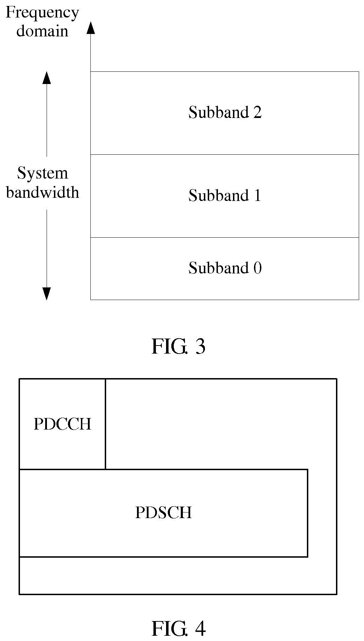

In the 5G system, a possible design in which the base station allocates a frequency resource to the terminal is: the base station allocates a bandwidth resource from the system frequency resource to the terminal, and the base station schedules the terminal on the configured bandwidth resource. This may also be described as "the base station configures a bandwidth resource from the system frequency resource for the terminal, so that the base station can allocate some or all resources in the configured bandwidth resource to the terminal for performing communication between the base station and the terminal". The bandwidth resource is included in the system frequency resource, and may be some consecutive or inconsecutive resources in the system frequency resource, or may be all resources in the system frequency resource. The bandwidth resource may also be referred to as a bandwidth part (bandwidth part, BP), a frequency resource part, a part of frequency resources, a carrier bandwidth part, or another name. This is not limited in this application. When the bandwidth resource is a segment of consecutive resources in the system frequency resource, the bandwidth resource may also be referred to as a subband, a narrowband, or another name. This is not limited in this application. For example, FIG. 3 is a schematic structural diagram of a bandwidth resource in a system frequency resource. The system frequency resource includes three different bandwidth resources in total: a bandwidth resource 0, that is, a subband 0; a bandwidth resource 1, that is, a subband 1; and a bandwidth resource 2, that is, a subband 2. In an actual application, the system frequency resource may include any integral number of bandwidth resources. This is not limited in this application. For different bandwidth resources, using a bandwidth resource A and a bandwidth resource B as an example, that the bandwidth resource A is different from the bandwidth resource B includes: some frequency resources included in the bandwidth resource A are not included in the bandwidth resource B, or none of frequency resources included in the bandwidth resource A is included in the bandwidth resource B; or some frequency resources included in the bandwidth resource B are not included in the bandwidth resource A, or none of frequency resources included in the bandwidth resource B is included in the bandwidth resource A. For example, in the OFDM-based communications system, that the bandwidth resource A is different from the bandwidth resource B may be: at least one subcarrier included in the bandwidth resource A is not included in the bandwidth resource B; or at least one subcarrier included in the bandwidth resource B is not included in the bandwidth resource A.

For example, alternatively, that the bandwidth resource A is different from the bandwidth resource B may be that frequency domain resources are completely the same but frame structure parameters are different, for example, may be that subcarrier spacings and/or CP lengths are different. Other different features are not specifically limited herein.

In the 5G system, a resource for transmitting a data channel may include a time domain resource and a frequency domain resource. The time domain resource and the frequency domain resource may also be referred to as a time-frequency resource, a scheduled resource, or another name. This is not limited in this application. The frequency domain resource may be a bandwidth part, and the bandwidth part may also be described as some frequency domain resources within an entire bandwidth. The time domain resource may be a symbol. The symbol may also be referred to as a time domain symbol. This is not limited in this application. An allocated time domain symbol for transmitting the data channel may be changed dynamically, that is, data transmission may be performed on any symbol in a subframe. For example, in time domain, a starting position of the data channel may be a first symbol in a slot or a subframe or may not be a first symbol, and an ending symbol position may be a last symbol in a slot or a subframe or may not be a last symbol in a slot or a subframe, as shown in FIG. 4. In the 5G system, there are a plurality of possibilities for the time-frequency resource position of the data channel, and the time-frequency resource position of the data channel may be indicated by using control information. To indicate that the data channel may be transmitted on any symbol, a plurality of pieces of bit (bit) information in the control information need to be used to indicate various data transmission cases. Consequently, signaling overheads are relatively high. In an example in which the data channel is a downlink data channel, if the downlink data channel supports transmission on a flexible time domain resource, that is, when a starting position and an ending position of the downlink data channel in time domain are flexibly variable, in a possible implementation, the control information includes time domain information of the downlink data channel, where the time domain information is used to indicate the starting position and the ending position of the data channel in time domain. The downlink data channel may also be referred to as a physical downlink shared channel (physical downlink shared channel, PDSCH) or another name. If various data transmission scenarios are considered, for example, data transmission using a slot as a scheduling unit (slot-based), data transmission using a mini-slot as a scheduling unit (mini-slot based), and data transmission using slot aggregation as a scheduling unit (slot aggregation or multi-slot based), if the control information is designed in a unified manner, signaling overheads of the control information are relatively high, because various possibilities of data channel transmission in various scenarios need to be considered. Slot aggregation indicates that the data channel is transmitted on a time domain resource of one or more slots (slot), where the slot (slot) is a unit of measurement for data scheduling in time domain. The unit of measurement for data scheduling in time domain may be referred to as a time unit or a time scheduling unit. The time scheduling unit or the time unit may be a radio frame, a subframe, a slot, a mini-slot, or the like. The time scheduling unit or the time unit may also be one or more symbols or the like, where the symbol is a basic unit in time domain.

In the embodiments of this application, data transmission may also be referred to as data channel transmission or another name. This is not limited in this application.

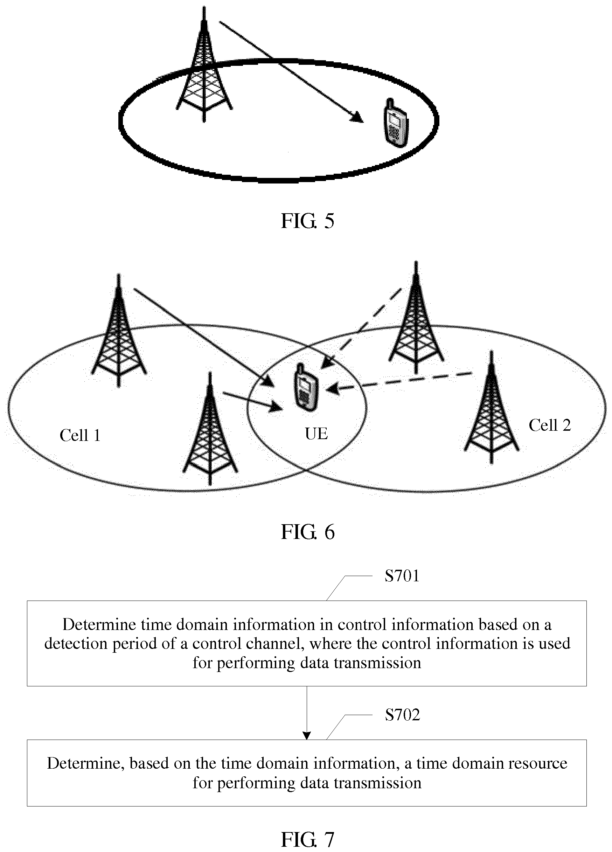

The embodiments of this application are applicable to a single-cell transmission scenario shown in FIG. 5, a coordinated multipoint transmission/reception (coordinated multiple points transmission/reception, CoMP) transmission scenario shown in FIG. 6, or another scenario. The single cell indicates that the base station performs data transmission with the terminal in only one cell. CoMP indicates that the base station performs data transmission with the terminal in a plurality of cells in a coordinated manner. The plurality of cells may correspond to at least one base station. In CoMP, transmission points are not limited. CoMP may be coordinated multipoint transmission between macro base stations, between micro base stations, and between a macro base station and a micro base station. Other scenarios may include: a homogeneous network scenario, a heterogeneous network scenario, a frequency division duplex (frequency division duplex, FDD) or time division duplex (time division duplex, TDD) system, a low-frequency scenario (sub 6G), a high-frequency scenario (higher than 6G), and the like.

"A plurality of" in this application refers to two or more.

In addition, it should be understood that, terms such as "first" and "second" in the descriptions of this application are used only for description purposes and should not be understood as an indication or implication of relative significance or as an indication or implication of an order.

In the embodiments of this application, a terminal determines time domain information in control information based on a detection period of a control channel, where the control information is used for performing data transmission; and the terminal determines, based on the time domain information, a time domain resource for performing data transmission. The time domain information is used to indicate information related to a time domain resource, a frequency domain resource, or a time domain and a frequency domain resource for data transmission, and the data transmission includes data sending and/or data receiving. The data transmission may be uplink data transmission or may be downlink data transmission, and is not specifically limited herein. According to the foregoing method, signaling overheads of the control information are reduced, and a problem in the prior art that signaling overheads of control information are relatively high because time domain information in the control information is designed in a unified manner is resolved.

Time domain information indication solutions provided by this application are hereinafter described in detail with reference to accompanying drawings.

In the embodiments of this application, an apparatus performing a method on a terminal side may be a terminal, or may be an apparatus in a terminal. The apparatus in the terminal may be a circuit, a chip, or a module. This is not limited in this application. In the method provided by the embodiments of this application, the terminal is used as an example for description.

In the embodiments of this application, an apparatus performing a method on a base station side may be a base station, or may be an apparatus in a base station. The apparatus in the base station may be a circuit, a chip, or a module. This is not limited in this application. In the method provided by the embodiments of this application, the base station is used as an example for description.

FIG. 7 is a flowchart of a method for determining time domain information according to this application. The method includes the following steps.

S701. Determine time domain information in control information based on a detection period of a control channel, where the control information is used for performing data transmission.

Specifically, a terminal determines the time domain information in the control information based on the detection period of the control channel, where the control information is used for performing data transmission.

Specifically, the terminal determines, based on the detection period of the control channel, at least one of a quantity of bits of the time domain information, information indicated by the time domain information, and a time domain information indication method.

The control information may be physical layer control information, for example, downlink control information DCI, or may be control information in higher layer signaling, where the higher layer signaling may be RRC signaling or MAC information, or the like.

The control information may be used for performing data transmission. Optionally, scheduling information for performing data transmission may be determined based on the control information.

The control information may be information sent by a base station and received by the terminal.

S702. Determine, based on the time domain information, a time domain resource for performing data transmission.

Specifically, the terminal determines, based on the time domain information, the time domain resource for performing data transmission.

In this embodiment of this application, the terminal determines the time domain information in the control information based on the detection period of the control channel, where the control information is used for performing data transmission; and the terminal determines, based on the time domain information, the time domain resource for performing data transmission. In the method, the time domain information in the control information is independently designed for different scenarios and requirements. This reduces signaling overheads of the control information in comparison with a method for designing time domain information in control information in a unified manner. The method for designing the time domain information in the control information in the unified manner may be indicating the time domain information in the control information in a plurality of scenarios by using the time domain information in the control information. Consequently, a quantity of bits required by control information signaling is relatively large.

In a possible implementation, the method further includes: receiving configuration information, where the configuration information is used to indicate the detection period of the control channel. Specifically, the terminal receives the configuration information sent by the base station, where the configuration information is used to indicate the detection period of the control channel. The configuration information may be indicated by using higher layer signaling, for example, RRC signaling and/or MAC signaling.

Specifically, the detection period of the control channel may be 2 symbols, 7 symbols, 14 symbols, 1 slot, a plurality of slots, a slot aggregation level, or the like. This is not limited in this application. The slot aggregation level is a quantity of slots that are aggregated. For example, if the aggregation level is 4, it represents that four slots are aggregated, that is, time domain resources in eight slots are occupied for data transmission; or if the aggregation level is 8, it represents that eight slots are aggregated, that is, time domain resources in eight slots are occupied for data transmission.

The detection period of the control channel is a blind detection period of a control channel search space, or is a blind detection period of a control channel candidate, or is a blind detection period of a control channel element, or is a blind detection period of a control channel resource set (CORESET, control resource set). The control channel is used to carry the control information, and the control information includes scheduling information of a data channel. Based on the scheduling information, the base station may perform data transmission on the data channel with the terminal. The control channel may be a physical downlink control channel (PDCCH, physical downlink control channel), or another control channel. This is not limited in this application. The detection period may also be referred to as a receiving period, a blind detection period, a blind detection time interval, or other information used to represent a detection time. This is not limited in this application.

Optionally, the other information related to control channel detection may be a time domain position in which the control channel is located. In this case, the determining time domain information in control information based on a detection period of a control channel may also be described as: determining the time domain information in the control information based on the time domain position in which the control channel is located. Optionally, the time domain position in which the control channel is located may also be described as a time domain position of the control channel, and the time domain position in which the control channel is located may also be described as the time domain position in which the control channel is transmitted. The time domain position in which the control channel is located may be a time unit in which the control channel is located. In this embodiment of this application, the time unit may be a symbol, a slot, a mini-slot, a subframe, a radio frame, or another time unit, and one time unit may include a positive integral number of symbols, where the symbol may be an OFDM symbol. For example, the time domain position in which the control channel is located may be a time domain position in which the control channel resource set is located. The time domain position in which the control channel is located may be a symbol position in which the control channel resource set is located. The symbol position in which the control channel resource set is located may be a symbol identifier of a first symbol on which the control channel resource set is located, or may be a symbol identifier of a last symbol on which the control channel resource set is located, or may be a symbol identifier of another symbol on which the control channel resource set is located, or the like. This is not limited in this application.

Optionally, the method provided by this embodiment of this application may further include: determining the time domain position in which the control channel is located. The time domain position in which the control channel is located may be determined in a preconfigured manner, or the time domain position in which the control channel is located may be determined in a signaling notification manner. When the time domain position in which the control channel is located is determined in the signaling notification manner, the base station may send time domain position information of the control channel to the terminal, where the time domain position information of the control channel is used to indicate the time domain position in which the control channel is located. The terminal receives the time domain position information of the control channel that is sent by the base station, and determines, based on the time domain position information of the control channel, the time domain position in which the control channel is located. The time domain position information of the control channel may also be referred to as another name. This is not limited in this application. The base station may send the time domain position information of the control channel to the terminal by using higher layer signaling or physical layer signaling. In this embodiment of this application, signaling sent by the base station to the UE may be higher layer signaling or physical layer signaling. The higher layer signaling may be RRC signaling, MAC information, a broadcast message, system information, or another message, and the physical layer signaling may be DCI or other physical layer signaling. This is not limited in this application. Further, the base station may send symbol position information of the control channel resource set to the terminal by using configuration information of the control channel resource set in the higher layer signaling or the physical layer signaling.

Optionally, the other information related to control channel detection may also be a time domain position in which a detected control channel is located. In this case, the determining time domain information in control information based on a detection period of a control channel may also be described as: determining the time domain information in the control information based on the time domain position in which the detected control channel is located. Optionally, the time domain position in which the detected control channel is located may also be described as: a time domain position to which the detected control channel is mapped. The time domain position in which the detected control channel is located may be a time unit in which the detected control channel is located. For example, the time domain position in which the detected control channel is located may be a symbol position in which the detected control channel is located. For example, the symbol position in which the detected control channel is located may be a symbol identifier of a first symbol on which the detected control channel is located, or may be a symbol identifier of a last symbol on which the detected control channel is located, or may be a symbol identifier of another symbol on which the detected control channel is located or the like. This is not limited in this application. The time domain position in which the control channel detected by the terminal is located is a time domain position in which a control channel sent by the base station is located.

Optionally, the detection period of the control channel may be one or more symbols, or may be one or more slots, or may be one or more time units. The time unit may be a symbol, a slot, a mini-slot, a subframe, a radio frame, or the like. The time unit is a unit for representing a time granularity.

Optionally, the terminal may perform data transmission with the base station on the time domain resource.

According to four specific embodiments, the following uses an example to describe how the terminal determines the time domain information in the control information based on the detection period of the control channel. Specifically, in the example, the base station sends downlink control information (downlink control information, DCI for short) to the terminal by using a downlink control channel (physical downlink control channel, PDCCH), where the control information is used for data transmission between a network device and the terminal, and the detection period of the control channel is a detection period of the PDCCH. Optionally, this embodiment of this application is applicable to downlink data scheduling, and also applicable to uplink data scheduling. This is not limited in this application.

Embodiment 1: The quantity of bits of the time domain information in the control information is determined based on the detection period of the control channel.

Optionally, the terminal determines the quantity of bits of the time domain information in the control information based on the detection period of the control channel.

Optionally, the terminal determines the quantity of bits of the time domain information based on the detection period of the control channel and a correspondence between the detection period of the control channel and the quantity of bits of the time domain information.

In the method, setting the correspondence between the detection period of the control channel and the quantity of bits of the time domain information can simplify a design of the quantity of bits of the time domain information. In this embodiment of this application, the setting may be predefining or configuring, and is not limited in this application. For example, the correspondence between the detection period of the control channel and the quantity of bits of the time domain information is predefined. For another example, the terminal receives signaling sent by the base station, where the signaling is used to indicate the correspondence between the detection period of the control channel and the quantity of bits of the time domain information. The signaling may be physical layer signaling or higher layer signaling, and is not specifically limited.

Optionally, the time domain information may include at least one of time domain indication information, time domain and frequency domain indication information, and frequency domain indication information. The time domain indication information is used to indicate a time domain resource allocated to a data channel. The frequency domain indication information is used to indicate a frequency domain resource allocated to the data channel. The time domain and frequency domain indication information is used to indicate a time-frequency resource allocated to the data channel.

Optionally, the quantity of bits (bit) of the time domain information may be a quantity of bits for indicating the time domain information (which may be referred to as the time domain indication information or may be referred to as the time domain resource) in the control information, or a quantity of bits for indicating time domain information and frequency domain information (which may be referred to as the time domain and frequency domain indication information or may be referred to as the time domain resource and a frequency domain resource), or a quantity of bits for indicating frequency domain information (which may be referred to as the frequency domain indication information), or a quantity of bits of the control information. That is, there are four manners in total.

Optionally, the quantity of bits of the time domain information may also be a quantity of bits for indicating information related to the time domain information, and is not specifically limited herein.

Optionally, the quantity of bits of the time domain information may also be a length of the time domain information, the quantity of bits of the time domain information, or the like, and is not specifically limited herein.

Optionally, the foregoing four manners may be used in the following three data channel transmission cases.

Case (case) 1: For data scheduling in a first time unit, a quantity or length of second time units occupied by the time domain resource for transmitting the data channel in the first time unit does not exceed the detection period of the control channel.

For example, the first time unit is a slot, and the second time unit is a symbol; if the detection period of the control channel is two symbols, for data scheduling or data channel transmission using a slot as a unit, a quantity or length of symbols occupied for transmitting the data channel cannot exceed two symbols.

Optionally, if the detection period of the control channel is two symbols, the data channel transmission based on the control channel cannot exceed two symbols in time domain.

Optionally, if the detection period of the control channel is seven symbols, the data channel transmission based on the control channel cannot exceed seven symbols in time domain, and so on. Other cases are not described.

Case 2: For data scheduling in a first time unit, a quantity or length of second time units occupied by the time domain resource for transmitting the data channel in the first time unit may exceed the detection period of the control channel.

For example, the first time unit is a slot, and the second time unit is a symbol; if the detection period of the control channel is two symbols, for data scheduling or data channel transmission using a slot as a unit, a quantity or length of symbols occupied for transmitting the data channel may exceed two symbols. For example, the time domain resource occupied for transmitting the data channel may be three symbols or more symbols.

Optionally, if the detection period of the control channel is two symbols, the time domain resource for transmitting the data channel based on the control channel may exceed two symbols or may not exceed two symbols.

Optionally, if the detection period of the control channel is seven symbols, the time domain resource for transmitting the data channel based on the control channel may exceed seven symbols or may not exceed seven symbols, and so on. Other cases are not described.

Case 3: For data scheduling in a plurality of first time units, one piece of control information is used to schedule data transmission in a plurality of first time units, and this may also be referred to as data transmission in slot aggregation.

For example, the first time unit is a slot; one piece of control information may be used to schedule data transmission in a plurality of slots, that is, the data channel may be mapped to time domain resources in the plurality of slots.

A method for determining a data channel transmission case is described in the following embodiment. This embodiment may be an independent embodiment, or may be combined with another embodiment of the present invention. This is not specifically limited herein.

Optionally, the data channel transmission case may be at least one of the foregoing three cases.

Optionally, the data channel transmission case may be determined by using a predefined method, or the base station may notify the terminal of the data channel transmission case by using signaling.

Optionally, the method for determining the data channel transmission case may be at least one solution in the following embodiment.

Optionally, the data channel transmission case is determined based on the detection period of the control channel.

For example, if the detection period of the control channel is 2 symbols or 7 symbols or 14 symbols, the data channel transmission case may be defined as the case 1 or the case 3. For example, if the detection period of the control channel is longer than or equal to 1 slot (slot), the data channel transmission case may be the case 3.

Optionally, the data channel transmission case is determined based on a service type. The service type may be an ultra-reliable and low latency communications (ultra-reliable low latency communications, URLLC) service, a mobile broadband (enhanced mobile broadband, eMBB) service, or the like. If the service type is URLLC, the data transmission case may be the case 1. If the service type is eMBB, the data transmission case may be the case 2 and/or the case 3.

Optionally, a plurality of data channel transmission cases are predefined, and then the base station notifies the terminal of one of the plurality of data channel transmission cases by using signaling. The signaling may be physical layer signaling and/or higher layer signaling, and is not limited in this application.

Optionally, the base station notifies, by using signaling A, the terminal that the data channel transmission case may be a plurality of cases, and then the base station notifies, by using signaling B, the terminal that the data channel transmission case is one of the plurality of cases. For example, when the detection period of the control channel is shorter than or equal to 1 slot, the base station notifies, by using the signaling A, the terminal that the data channel transmission case is the case 1 and the case 2, and then the base station notifies, by using the signaling B, the terminal that the data channel transmission case is the case 1 or the case 2. For example, the signaling A is higher layer signaling, and the signaling B is physical layer signaling.

Optionally, the foregoing plurality of solutions to determining the data channel transmission case may also be combined. This is not specifically limited herein.

First, a manner 1 in the case 1 is described in detail by using an example.

Manner 1: Determine a quantity of bits of the time domain indication information in the control information based on the detection period of the control channel.

For different detection periods of the control channel, quantities of bits of the time domain indication information in the control information may be determined. The quantities of bits of the time domain indication information in the control information that are determined based on different detection periods of the control channel may be the same or may be different.

Optionally, the quantity of bits of the time domain indication information may be the quantity of bits for indicating the time domain resource in the control information.

Optionally, the quantity of bits of the time domain indication information is determined based on the detection period of the control channel and a correspondence between the detection period of the control channel and the quantity of bits of the time domain indication information. In this embodiment of this application, the correspondence between the detection period of the control channel and the quantity of bits of the time domain indication information may be set. In this embodiment of this application, the setting may be predefining or configuring by using signaling. This is not specifically limited herein. For example, the correspondence between the detection period of the control channel and the quantity of bits of the time domain indication information is predefined, and the quantity of bits of the time domain indication information is determined based on the detection period of the control channel and the correspondence. For another example, the base station configures the correspondence between the detection period of the control channel and the quantity of bits of the time domain indication information for the terminal by using signaling; and the terminal receives the signaling, and determines the quantity of bits of the time domain indication information based on the detection period of the control channel and the correspondence. The signaling may be physical layer signaling or higher layer signaling, and is not specifically limited.

Optionally, the quantity of bits of the time domain indication information may be determined based on the correspondence between the detection period of the control channel and the quantity of bits of the time domain indication information in the following implementations. The time domain indication information may indicate a time domain length of the data channel and a starting time domain position of the data channel. The quantity of bits of the time domain indication information is X1. A specific numeric value of X1 may be predefined, that is, the correspondence is predefined.

In a specific implementation 1, assuming that the detection period of the control channel is seven symbols, the quantity of bits of the time domain indication information in the control information may be set to X1, where X1 is an integer greater than or equal to 0. Optionally, for example, X1 is 4.

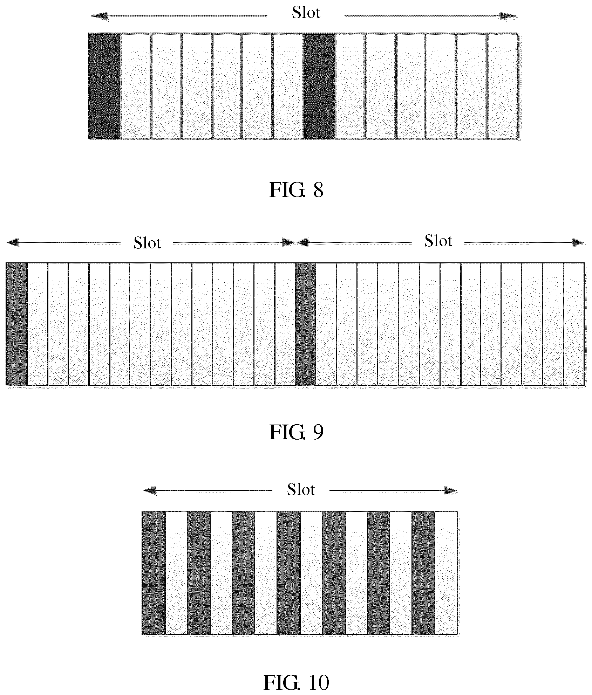

As shown in FIG. 8, assuming that the detection period of the control channel is seven symbols, the time domain length (for example, a symbol length) that may be used for transmitting the data channel includes seven cases. For example, the time domain length may be 1, 2, 3, 4, 5, 6, or 7 symbols. Therefore, the time domain indication information in the control information may indicate the time domain length of the data channel by using three bits. For example, because the time domain length has seven numeric values, at least three bits are used for indication in binary notation. For example, when the time domain length is one symbol, the indication in binary notation may be 000; or when the time domain length is two symbols, the indication in binary notation may be 001. Other correspondences between bit meanings and indication information are not excluded. In addition, other indication methods are not excluded either. For example, higher layer signaling indicates a specific time domain length value. This is not specifically limited herein.

Optionally, the starting time domain position of the data channel may have two meanings.

First meaning: The starting time domain position of the data channel may be the starting time domain position of the data channel in the first time unit. For example, the starting time domain position of the data channel is a symbol position in a slot. For example, when the detection period of the control channel is seven symbols, there are two possibilities for the starting time domain position of the data channel. For example, a first possible starting time domain position is a first symbol in the slot, and a second possible starting time domain position is a second symbol in the slot. Therefore, the time domain indication information in the control information may indicate the starting time domain position of the data channel by using one bit. For example, when a value of the one bit is t1, it indicates that the starting time domain position of the data channel is the first symbol in the slot; or when a value of the one bit is t2 or is not t1, it indicates that the starting time domain position of the data channel is the second symbol in the slot. t1 and t2 are integers. For example, t1 is 0, and t2 is 1. Other correspondences between bit meanings and indication information are not excluded. In addition, other indication methods are not excluded either. For example, higher layer signaling indicates a specific starting time domain position. This is not specifically limited herein.

Second meaning: The starting time domain position of the data channel may indicate a position relationship between a time domain resource position of the data channel and a time domain resource on which the control channel (for example, the PDCCH) is detected. For example, the starting time domain position of the data channel may be a symbol (or another time unit) after a symbol (or another time unit) on which the control channel is detected. For example, when the detection period of the control channel is seven symbols, there are two possibilities for the starting time domain position of the data channel. For example, the starting time domain position of the data channel is a first symbol after a symbol on which the control channel is detected or a second symbol after a symbol on which the control channel is detected. Therefore, the time domain indication information in the control information needs to indicate the starting time domain position of the data channel by using one bit. For example, when a value of the one bit is t1, it indicates that the starting time domain position of the data channel is the first symbol after the symbol on which the control channel is detected; or when a value of the one bit is t2 or is not t1, it indicates that the starting time domain position of the data channel is the second symbol after the symbol on which the control channel is detected. t1 and t2 are integers. For example, t1 is 0, and t2 is 1. Other correspondences between bit meanings and indication information are not excluded. In addition, other indication methods are not excluded either. For example, higher layer signaling indicates a specific starting time domain position. This is not specifically limited herein.

Optionally, the starting time domain position of the data channel may also be the symbol on which the control channel is detected, that is, the time domain resource of the data channel may include the symbol on which the control channel is detected. As shown in FIG. 8, a dark bar represents a symbol on which the control channel is detected. An interval between symbols on which the control channel is detected is seven symbols. In other words, the control channel is detected once on every seven symbols, that is, the detection period of the control channel is seven symbols. Therefore, optionally, the symbol on which the control channel is detected may also be another symbol in a slot. This is not limited in this application.

Based on the foregoing example, the time domain indication information of the data channel may be used to indicate the time domain length of the data channel and the starting time domain position of the data channel. For example, when the detection period of the control channel is seven symbols, three bits are required for indicating the time domain length of the data channel, and one bit is required for indicating the starting time domain position of the data channel. To be specific, the time domain indication information is four bits in total, that is, a value of X1 is 4.

The starting time domain position in this embodiment of this application may also be referred to as a starting position for short. The starting time domain position may also be referred to as a starting time unit for short. For example, the time unit may be at least one of a radio frame, a subframe, a slot, a mini-slot, a symbol, and the like. For example, the starting time domain position may be a starting symbol, a starting slot, or the like.

In a specific implementation 2, assuming that the detection period of the control channel is 14 symbols, the corresponding quantity of bits of the time domain indication information in the control information may be X2, where X2 is an integer greater than or equal to 0. Optionally, for example, X2 is 6 or 4.

For example, when X2 is 6, as shown in FIG. 9, assuming that the detection period of the control channel is 14 symbols, the time domain length (for example, a symbol length) that may be used for transmitting the data channel includes eight cases. For example, the time domain length may be 1, 2, 4, 6, 8, 10, 12, or 14 symbols. Therefore, the time domain indication information in the control information may indicate the time domain length of the data channel by using three bits. For example, because the time domain length has eight numeric values, at least three bits are used for indication in binary notation. For example, when the time domain length is one symbol, the indication in binary notation may be 000; or when the time domain length is two symbols, the indication in binary notation may be 001. Other correspondences between bit meanings and indication information are not excluded. In addition, other indication methods are not excluded either. For example, higher layer signaling indicates a specific time domain length value. This is not specifically limited herein.

Optionally, the starting time domain position of the data channel may have two meanings.

First meaning: The starting time domain position of the data channel may be the starting time domain position of the data channel in the first time unit. For example, the starting time domain position of the data channel is a symbol position in a slot. For example, when the detection period of the control channel is 14 symbols, there are eight possibilities for the starting time domain position of the data channel. For example, the eight possibilities of the starting time domain position of the data channel are that the starting time domain position of the data channel is a first symbol in the slot or a second symbol in the slot, or a third, fourth, fifth, sixth, seventh, or eighth symbol in the slot. Therefore, the time domain indication information in the control information may indicate the starting time domain position of the data channel by using three bits. For example, when a value of the three bits is 000, it indicates that the starting time domain position of the data channel is the first symbol in the slot; or when a value of the three bits is 001, it indicates that the starting time domain position of the data channel is the second symbol in the slot. Other correspondences between bit meanings and indication information are not excluded. In addition, other indication methods are not excluded either. For example, higher layer signaling indicates a specific starting time domain position. This is not specifically limited herein.

Second meaning: The starting time domain position of the data channel may indicate a position relationship between the time domain resource of the data channel and a time domain resource on which the control channel (for example, the PDCCH) is detected. For example, the starting time domain position of the data channel may be a symbol (or another time unit) after a symbol (or another time unit) on which the control channel is detected. For example, when the detection period of the control channel is 14 symbols, there are eight possibilities for the starting time domain position of the data channel. For example, the starting time domain position of the data channel is a first symbol after a symbol on which the control channel is detected or a second symbol after a symbol on which the control channel is detected, or a third, fourth, fifth, sixth, seventh, or eighth symbol after a symbol on which the control channel is detected. Therefore, the time domain indication information in the control information needs to indicate the starting time domain position of the data channel by using three bits. For example, when a value of the three bits is 000, it indicates that the starting time domain position of the data channel is the first symbol after the symbol on which the control channel is detected; or when a value of the three bits is 001, it indicates that the starting time domain position of the data channel is the second symbol after the symbol on which the control channel is detected. Other correspondences between bit meanings and indication information are not excluded. In addition, other indication methods are not excluded either. For example, higher layer signaling indicates a specific starting time domain position. This is not specifically limited herein.

Optionally, the starting time domain position of the data channel may also be the symbol on which the control channel is detected, that is, the time domain resource of the data channel may include the symbol on which the control channel is detected. As shown in FIG. 9, a dark bar represents a symbol on which the control channel is detected. An interval between symbols on which the control channel is detected is 14 symbols. In other words, the control channel is detected once on every 14 symbols, that is, the detection period of the control channel is 14 symbols. Therefore, optionally, the symbol on which the control channel is detected may also be another symbol in a slot. This is not limited in this application.

For another example, when X2 is 4, also as shown in FIG. 9, assuming that the detection period of the control channel is 14 symbols, the time domain length (for example, a symbol length) that may be used for transmitting the data channel includes four cases. For example, the time domain length may be 6, 8, 12, or 14 symbols. Therefore, the time domain indication information in the control information may indicate the time domain length of the data channel by using two bits. For example, because the time domain length has four numeric values, at least two bits are used for indication in binary notation. For example, when the time domain length is six symbols, the indication in binary notation may be 00; or when the time domain length is eight symbols, the indication in binary notation may be 01. Other correspondences between bit meanings and indication information are not excluded. In addition, other indication methods are not excluded either. For example, higher layer signaling indicates a specific time domain length value. This is not specifically limited herein.

Optionally, the starting time domain position of the data channel may have two meanings.

First meaning: The starting time domain position of the data channel may be the starting time domain position of the data channel in the first time unit. For example, the starting time domain position of the data channel is a symbol position in a slot. For example, when the detection period of the control channel is 14 symbols, there are four possibilities for the starting time domain position of the data channel. For example, the four possibilities of the starting time domain position of the data channel are that the starting time domain position of the data channel is a first symbol in the slot or a second symbol in the slot, or a third symbol in the slot, or a fourth symbol in the slot. Therefore, the time domain indication information in the control information may indicate the starting time domain position of the data channel using two bits. For example, when a value of the two bits is 00, it indicates that the starting time domain position of the data channel is the first symbol in the slot; or when a value of the two bits is 01, it indicates that the starting time domain position of the data channel is the second symbol in the slot. Other correspondences between bit meanings and indication information are not excluded. In addition, other indication methods are not excluded either. For example, higher layer signaling indicates a specific starting time domain position. This is not specifically limited herein.

Second meaning: The starting time domain position of the data channel may indicate a position relationship between the time domain resource of the data channel and a time domain resource on which the control channel is detected. For example, the starting time domain position of the data channel may be a symbol (or another time unit) after a symbol (or another time unit) on which the control channel is detected. For example, when the detection period of the control channel is 14 symbols, there are two possibilities for the starting time domain position of the data channel. For example, the starting time domain position of the data channel is a first symbol after a symbol on which the control channel is detected or a second symbol after a symbol on which the control channel is detected, or a third symbol after a symbol on which the control channel is detected, or a fourth symbol after a symbol on which the control channel is detected. Therefore, the time domain indication information in the control information needs to indicate the starting time domain position of the data channel by using two bits. For example, when a value of the two bits is 00, it indicates that the starting time domain position of the data channel is the first symbol after the symbol on which the control channel is detected; or when a value of the two bits is 01, it indicates that the starting time domain position of the data channel is the second symbol after the symbol on which the control channel is detected. Other correspondences between bit meanings and indication information are not excluded. In addition, other indication methods are not excluded either. For example, higher layer signaling indicates a specific starting time domain position. This is not specifically limited herein.

Optionally, the starting time domain position of the data channel may also be the symbol on which the control channel is detected, that is, the time domain resource of the data channel may include the symbol on which the control channel is detected.

In the foregoing example, the time domain indication information of the data channel may be used to indicate the time domain length of the data channel and the starting time domain position of the data channel. In the example, when the detection period of the control channel is 14 symbols, three bits are required for indicating the time domain length of the data channel, and three bits are required for indicating the starting time domain position of the data channel. To be specific, the time domain indication information is six bits in total, that is, a value of X2 is 6. Alternatively, two bits are required for indicating the time domain length of the data channel, and two bits are required for indicating the starting time domain position of the data channel. To be specific, the time domain indication information is four bits in total, that is, a value of X2 is 4. The time domain indication information indication method and the quantity of bits of the time domain indication information are only examples. Other indication methods and quantities of bits are not excluded, and are not specifically limited herein.

In the foregoing example, when the detection period of the control channel is 14 symbols, the corresponding quantity of bits of the time domain indication information in the control information is X2. A specific numeric value of X2 may be predefined, that is, the correspondence is predefined.

Optionally, the base station may also notify the terminal of the correspondence by using signaling. For example, when the detection period of the control channel is 14 symbols, a correspondence 1 indicates that the corresponding quantity of bits of the time domain indication information in the control information is 6; or when the detection period of the control channel is 14 symbols, a correspondence 2 indicates that the corresponding quantity of bits of the time domain indication information in the control information is 4. The values 4 and 6 are only examples, and other numeric values are not excluded. This is not specifically limited herein.

Optionally, the base station and/or the terminal may determine the quantity of bits of the time domain indication information based on the detection period of the control channel and by using the specified correspondence between the detection period of the control channel and the quantity of bits of the time domain indication information in the control information.

In a specific implementation 3, assuming that the detection period of the control channel is two symbols, the corresponding quantity of bits of the time domain indication information in the control information may be X3, where X3 is an integer greater than or equal to 0. Optionally, for example, X3 is 2.

For example, as shown in FIG. 10, assuming that the detection period of the data channel is two symbols, the corresponding quantity of bits of the time domain indication information in the control information may be 2. Assuming that the detection period of the control channel is two symbols, the time domain length (for example, a symbol length) that may be used for transmitting the control channel includes two cases. For example, the time domain length is one symbol or two symbols. Therefore, the time domain indication information in the control information may indicate the time domain length of the data channel by using one bit. For example, when a value of the one bit is t1, it indicates that the time domain length of the data channel is one symbol; or when a value of the one bit is t2 or is not t1, it indicates that the time domain length of the data channel is two symbols, t1 and t2 are integers. For example, t1 is 0, and t2 is 1. Other correspondences between bit meanings and indication information are not excluded. In addition, other indication methods are not excluded either. For example, higher layer signaling indicates a specific starting time domain position. This is not specifically limited herein.

Optionally, the starting time domain position of the data channel may have two meanings.

First meaning: The starting time domain position of the data channel may be the starting time domain position of the data channel in the first time unit. For example, the starting time domain position of the data channel is a symbol position in a slot. For example, when the detection period of the control channel is two symbols, there are two possibilities for the starting time domain position of the data channel. For example, the starting time domain position of the data channel is a first symbol in the slot, or the starting time domain position of the data channel is a second symbol in the slot. Therefore, the time domain indication information in the control information may indicate the starting time domain position of the data channel by using one bit. For example, when a value of the one bit is 0, it indicates that the starting time domain position of the data channel is the first symbol in the slot; or when a value of the one bit is 1, it indicates that the starting time domain position of the data channel is the second symbol in the slot. Other correspondences between bit meanings and indication information are not excluded. In addition, other indication methods are not excluded either. For example, higher layer signaling indicates a specific starting time domain position. This is not specifically limited herein.

Second meaning: The starting time domain position of the data channel may indicate a position relationship between the time domain resource of the data channel and a time domain resource on which the control channel is detected. For example, the starting time domain position of the data channel may be a symbol (or another time unit) after a symbol (or another time unit) on which the control channel is detected. For example, when the detection period of the control channel is two symbols, there are two possibilities for the starting time domain position of the data channel. For example, the starting time domain position of the data channel is a first symbol after a symbol on which the control channel is detected or a second symbol after a symbol on which the control channel is detected. Therefore, the time domain indication information in the control information needs to indicate the starting time domain position of the data channel by using one bit. For example, when a value of the one bit is 0, it indicates that the starting time domain position of the data channel is the first symbol after the symbol on which the control channel is detected; or when a value of the one bit is 1, it indicates that the starting time domain position of the data channel is the second symbol after the symbol on which the control channel is detected. Other correspondences between bit meanings and indication information are not excluded. In addition, other indication methods are not excluded either. For example, higher layer signaling indicates a specific starting time domain position. This is not specifically limited herein.

Optionally, the starting time domain position of the data channel may also be the symbol on which the control channel is detected, that is, the time domain resource of the data channel may include the symbol on which the control channel is detected. As shown in FIG. 10, a dark bar represents a symbol on which the PDCCH is detected. An interval between symbols on which the control channel is detected is two symbols. In other words, the control channel is detected once on every two symbols, that is, the detection period of the control channel is two symbols. Therefore, optionally, the symbol on which the control channel is detected may also be another symbol in a slot. This is not limited in this application.

In the foregoing example, the time domain indication information of the data channel may be used to indicate the time domain length of the data channel and the starting time domain position of the data channel. In the example, when the detection period of the control channel is two symbols, one bit is required for indicating the time domain length of the data channel, and one bit is required for indicating the starting time domain position of the data channel. To be specific, the time domain indication information is two bits in total, that is, a value of X3 is 2. The time domain indication information indication method and the quantity of bits of the time domain indication information are only examples. Other indication methods and quantities of bits are not excluded, and are not specifically limited herein.

In the foregoing example, when the detection period of the control channel is two symbols, the corresponding quantity of bits of the time domain indication information in the control information is X3. A specific numeric value of X3 may be predefined, that is, the correspondence is predefined.

Optionally, the base station may also notify the terminal of the correspondence by using signaling. For example, when the detection period of the control channel is two symbols, a correspondence 1 indicates that the corresponding quantity of bits of the time domain indication information in the control information is 2; or when the detection period of the control channel is two symbols, a correspondence 2 indicates that the corresponding quantity of bits of the time domain indication information in the control information is 4. The values 4 and 2 are only examples, and other numeric values are not excluded. This is not specifically limited herein.

X1, X2, and X3 are integers greater than or equal to 0, and their values may be the same or may be different, or may be any other quantity of bits. This is not limited in this embodiment of this application.

Optionally, when X1 or X2 or X3 is equal to 0, it indicates that the control information may not include the time domain information. In this case, the time domain information may be predefined. For example, a time domain length and a starting time domain position are predefined. This is not specifically limited herein. Alternatively, the time domain information is notified by using higher layer signaling, for example, RRC (radio resource control, radio resource control) signaling or MAC (medium access control, medium access control) signaling. This is not specifically limited herein.

Then a manner 2 in the case 1 is described in detail by using an example.

Manner 2: Determine a quantity of bits of the time domain and frequency domain indication information in the control information based on the detection period of the control channel.

For different detection periods of the control channel, quantities of bits of the time domain and frequency domain indication information in the control information may be determined. The quantities of bits of the time domain and frequency domain indication information in the control information that are determined based on different detection periods of the control channel may be the same or may be different. Optionally, the quantity of bits of the time domain and frequency domain indication information may be the quantity of bits for indicating the time domain resource and the frequency domain resource in the control information.

Optionally, the quantity of bits of the time domain and frequency domain indication information is determined based on the detection period of the control channel and a correspondence between the detection period of the control channel and the quantity of bits of the time domain and frequency domain indication information. When the time domain information is the time domain and frequency domain indication information, the time domain resource that is used for performing data transmission and determined based on the time domain information may be the time-frequency resource that is used for performing data transmission and determined based on the time domain information.

Optionally, the correspondence between the detection period of the control channel and the quantity of bits of the time domain and frequency domain indication information is set, so that the base station and/or the terminal can determine the quantity of bits of the time domain and frequency domain indication information based on the detection period of the control channel. For example, the correspondence between the detection period of the control channel and the quantity of bits of the time domain and frequency domain indication information is predefined, so that the quantity of bits of the time domain and frequency domain indication information is determined. For another example, the base station notifies the terminal of the correspondence between the detection period of the control channel and the quantity of bits of the time domain and frequency domain indication information by using signaling; and the terminal receives the signaling, and determines the quantity of bits of the time domain and frequency domain indication information based on the signaling. The signaling may be physical layer signaling or higher layer signaling.

Optionally, the quantity of bits of the time domain and frequency domain indication information may be determined based on the correspondence between the detection period of the control channel and the quantity of bits of the time domain and frequency domain indication information in the following implementations.

Optionally, the following correspondence between the detection period of the control channel and the quantity of bits of the time domain and frequency domain indication information may be set, and the quantity of bits of the time domain and frequency domain indication information is determined based on the correspondence between the detection period of the control channel and the quantity of bits of the time domain and frequency domain indication information. Specifically, the correspondence may be as follows:

Assuming that the detection period of the control channel is seven symbols, the corresponding quantity of bits of the time domain and frequency domain indication information in the control information may be Y1, where Y1 is an integer greater than or equal to 0. Optionally, for example, Y1 is 4.

Assuming that the detection period of the control channel is 14 symbols, the corresponding quantity of bits of the time domain and frequency domain indication information in the control information may be Y2, where Y2 is an integer greater than or equal to 0. Optionally, for example, Y2 is 6.

Assuming that the detection period of the control channel is two symbols, the corresponding quantity of bits of the time domain and frequency domain indication information in the control information may be Y3, where Y3 is an integer greater than or equal to 0. Optionally, for example, Y3 is 2.

Y1, Y2, and Y3 are integers greater than or equal to 0, and their values may be the same or may be different, or may be any other quantity of bits. This is not limited in this embodiment of this application.

Optionally, when Y1 or Y2 or Y3 is equal to 0, it indicates that the control information may not include the time domain information. In this case, the time domain information may be predefined. For example, a time domain length and a starting time domain position are predefined, or frequency domain position information is predefined. This is not specifically limited herein. Alternatively, the time domain information is notified by using higher layer signaling, for example, RRC signaling or MAC signaling. This is not specifically limited herein.

Optionally, another correspondence between the detection period of the control channel and the quantity of bits of the time domain and frequency domain indication information is not excluded. This is not specifically limited herein. Then a manner 3 in the case 1 is described in detail by using an example.

Manner 3: Determine a quantity of bits of the frequency domain indication information in the control information based on the detection period of the control channel.

For different detection periods of the control channel, quantities of bits of the frequency domain indication information in the control information may be determined. The quantities of bits of the frequency domain indication information in the control channel that are determined based on different detection periods of the control channel may be the same or may be different.

Optionally, the quantity of bits of the frequency domain indication information may be the quantity of bits for indicating the frequency domain resource in the control information.

Optionally, the quantity of bits of the frequency domain indication information is determined based on the detection period of the control channel and a correspondence between the detection period of the control channel and the quantity of bits of the frequency domain indication information.

Optionally, when the time domain information is the frequency domain indication information, the time domain resource that is used for performing data transmission and determined based on the time domain information may be the frequency domain resource that is used for performing data transmission and determined based on the time domain information.

Optionally, the correspondence between the detection period of the control channel and the quantity of bits of the frequency domain indication information is set, so that the base station and/or the terminal can determine the quantity of bits of the frequency domain indication information based on the detection period of the control channel. For example, the correspondence between the detection period of the control channel and the quantity of bits of the frequency domain indication information is predefined, so that the quantity of bits of the frequency domain indication information is determined. For another example, the base station notifies the terminal of the correspondence between the detection period of the control channel and the quantity of bits of the frequency domain indication information by using signaling; and the terminal receives the signaling, and determines the quantity of bits of the frequency domain indication information based on the signaling. The signaling may be physical layer signaling or higher layer signaling.

Optionally, the quantity of bits of the frequency domain indication information may be determined based on the correspondence between the detection period of the control channel and the quantity of bits of the frequency domain indication information in the following implementations.

Optionally, the following correspondence between the detection period of the control channel and the quantity of bits of the frequency domain indication information may be set, and the quantity of bits of the frequency domain indication information is determined based on the correspondence between the detection period of the control channel and the quantity of bits of the frequency domain indication information. Specifically, the correspondence may be as follows:

Assuming that the detection period of the control channel is seven symbols, the corresponding quantity of bits of the frequency domain indication information in the control information may be Z1.

Assuming that the detection period of the control channel is 14 symbols, the corresponding quantity of bits of the frequency domain indication information in the control information may be Z2.

Assuming that the detection period of the control channel is two symbols, the corresponding quantity of bits of the frequency domain indication information in the control information may be Z3.

Z1, Z2, and Z3 are integers greater than or equal to 0, and their values may be the same or may be different, or may be any other quantity of bits. This is not limited in this embodiment of this application.

Optionally, when Z1 or Z2 or Z3 is equal to 0, it indicates that the control information may not include the time domain information. In this case, the time domain information may be predefined. For example, frequency domain position information is predefined. This is not specifically limited herein. Alternatively, the time domain information is notified by using higher layer signaling, for example, RRC signaling or MAC signaling. This is not specifically limited herein.

Optionally, another correspondence between the detection period of the control channel and the quantity of bits of the frequency domain indication information is not excluded. This is not specifically limited herein.

Finally, a manner 4 in the case 1 is described in detail by using an example.

Manner 4: Determine a quantity of bits of the control information based on the detection period of the control channel.

For different detection periods of the control channel, quantities of bits of the control information may be determined. The quantities of bits of the control information that are determined based on different detection periods of the control channel may be the same or may be different.

Optionally, the quantity of bits of the control information may be a quantity of bits included in the control information.

Optionally, the quantity of bits of the control information is determined based on the detection period of the control channel and a correspondence between the detection period of the control channel and the quantity of bits of the control information.

Optionally, the correspondence between the detection period of the control channel and the quantity of bits of the control information is set, so that the base station and/or the terminal can determine the quantity of bits of the control information based on the detection period of the control channel. For example, the correspondence between the detection period of the control channel and the quantity of bits of the control information is predefined, so that the quantity of bits of the control information is determined. For another example, the base station configures the correspondence between the detection period of the control channel and the quantity of bits of the control information for the terminal by using signaling; and the terminal receives the signaling, and determines the quantity of bits of the control information based on the signaling. The signaling may be physical layer signaling or higher layer signaling, and is not specifically limited.

Optionally, the quantity of bits of the control information may be determined based on the correspondence between the detection period of the control channel and the quantity of bits of the control information in the following implementations.

Optionally, the following correspondence between the detection period of the control channel and the quantity of bits of the control information may be set, and the quantity of bits of the control information is determined based on the correspondence between the detection period of the control channel and the quantity of bits of the control information. Specifically, the correspondence may be as follows:

Assuming that the detection period of the control channel is seven symbols, the corresponding quantity of bits of the control information (for example, DCI) may be W1.

Assuming that the detection period of the control channel is 14 symbols, the corresponding quantity of bits of the control information (for example, DCI) may be W2.

Assuming that the detection period of the control channel is two symbols, the corresponding quantity of bits of the control information (for example, DCI) may be W3.

W1, W2, and W3 are integers greater than or equal to 0, and their values may be the same or may be different, or may be any other quantity of bits. This is not limited in this embodiment of this application. The control information (for example, DCI) in the foregoing embodiment may also be extended to a range of values of indication information in higher layer signaling or the like. This is not specifically limited herein.

Optionally, when W1 or W2 or W3 is equal to 0, it indicates that the base station may not transmit the control information to the terminal. In this case, the control information may be predefined. This is not specifically limited herein. Alternatively, the control information is notified by using higher layer signaling, for example, RRC signaling or MAC signaling. This is not specifically limited herein.

Optionally, another correspondence between the detection period of the control channel and the quantity of bits of the control information is not excluded. This is not specifically limited herein.

In the foregoing Embodiment 1, the quantity of bits of the time domain information is determined based on the detection period of the control channel. Because the quantity of bits of the time domain information may be designed flexibly based on different detection periods of the control channel, signaling overheads can be reduced. The terminal determines the quantity of bits of the time domain information based on the detection period of the control channel, and further receives or determines the time domain information.

Optionally, in a same detection period of the control channel, different quantities of bits of the time domain channel may be determined for different services. The different services may be the ultra-reliable and low latency communications (ultra-reliable low latency communications, URLLC) service, the mobile broadband (enhanced mobile broadband, eMBB) service, and the like.

Optionally, the quantity of bits of the time domain information is determined based on a service. Different services may correspond to a same quantity of bits of the time domain information, or may correspond to different quantities of bits of the time domain information. This embodiment may be an independent embodiment, or may be used in combination with an embodiment of this application. This is not specifically limited. Optionally, determining the quantity of bits of the time domain information based on the service may be determining the quantity of bits of the time domain information based on the service and a correspondence between the service and the quantity of bits of the time domain information.

Optionally, the quantity of bits of the time domain information may be at least one of various cases of the quantity of bits of the time domain information in the foregoing embodiment. Details are not described again herein.

Optionally, the correspondence between the service and the quantity of bits of the time domain information is set, so that the base station and/or the terminal can determine the quantity of bits of the time domain information based on the service. The setting in the present invention may be predefining or configuring, and is not specifically limited herein.

Optionally, the correspondence between the service and the quantity of bits of the time domain information is predefined, so that the quantity of bits of the time domain information is determined.

Optionally, the correspondence between the service and the quantity of bits of the time domain information is configured, so that the quantity of bits of the time domain information is determined. Specifically, the base station may notify the terminal of the correspondence between the service and the quantity of bits of the time domain information by using signaling. The signaling may be physical layer signaling or higher layer signaling, and is not specifically limited.

Optionally, the quantity of bits of the time domain information may be determined based on the correspondence between the service and the quantity of bits of the time domain information in the following implementations.

Optionally, the following correspondence between the service and the quantity of bits of the time domain information may be set, and the quantity of bits of the time domain information is determined based on the correspondence between the service and the quantity of bits of the time domain information. Specifically, the correspondence may be as follows:

For example, if the service is URLLC, the quantity of bits of the time domain information may be assumed to be T1. T1 is an integer greater than or equal to 0.

For example, if the service is eMBB, the quantity of bits of the time domain information may be assumed to be T2. T2 is an integer greater than or equal to 0.

T1 and T2 are integers greater than or equal to 0, and their values may be the same or may be different, or may be any other quantity of bits. This is not limited in this embodiment of this application.

Optionally, when T1 or T2 is equal to 0, it indicates that the base station may not transmit the time domain information to the terminal. In this case, the time domain information may be predefined. This is not specifically limited herein. Alternatively, the time domain information is notified by using higher layer signaling, for example, RRC signaling or MAC signaling. This is not specifically limited herein.

Optionally, another correspondence between the service and the quantity of bits of the time domain information is not excluded. This is not specifically limited herein.

Optionally, the quantity of bits of the time domain information is determined based on the detection period of the control channel and the service.

Optionally, determining the quantity of bits of the time domain information based on the detection period of the control channel and the service may be determining the quantity of bits of the time domain information based on the detection period of the control channel and the service, and a correspondence between the detection period of the control channel and the service and the quantity of bits of the time domain information.

Optionally, the quantity of bits of the time domain information may be at least one of various cases of the quantity of bits of the time domain information in the foregoing embodiment. Details are not described again herein.

Different services may be a same quantity of bits, or may be different quantities of bits. This embodiment may be an independent embodiment, or may be used in combination with an embodiment of this application. This is not specifically limited.

Optionally, the correspondence between the detection period of the control channel and the service and the quantity of bits of the time domain information is set, so that the base station and/or the terminal can determine the quantity of bits of the time domain information based on the detection period of the control channel and the service. The setting in the present invention may be predefining or configuring, and is not specifically limited herein.

Optionally, the correspondence between the detection period of the control channel and the service and the quantity of bits of the time domain information is predefined, so that the quantity of bits of the time domain information is determined.

Optionally, the correspondence between the detection period of the control channel and the service and the quantity of bits of the time domain information is configured, so that the quantity of bits of the time domain information is determined. Specifically, the base station may notify the terminal of the correspondence between the service and the quantity of bits of the time domain information by using signaling. The signaling may be physical layer signaling or higher layer signaling, and is not specifically limited.

Optionally, the quantity of bits of the time domain information may be determined based on the correspondence between the detection period of the control channel and the service and the quantity of bits of the time domain information in the following implementations.

Optionally, the following correspondence between the detection period of the control channel and the service and the quantity of bits of the time domain information may be set, and the quantity of bits of the time domain information is determined based on the correspondence between the detection period of the control channel and the service and the quantity of bits of the time domain information. Specifically, the correspondence may be as follows:

For example, if the detection period of the control channel is two symbols and the service is URLLC, the corresponding quantity of bits of the time domain information may be S1. S1 is an integer greater than or equal to 0.

For example, if the detection period of the control channel is two symbols and the service is eMBB, the corresponding quantity of bits of the time domain information may be S2. S2 is an integer greater than or equal to 0.

For example, if the detection period of the control channel is seven symbols and the service is URLLC, the corresponding quantity of bits of the time domain information may be S3. S3 is an integer greater than or equal to 0.

For example, if the detection period of the control channel is seven symbols and the service is eMBB, the corresponding quantity of bits of the time domain information may be S4. S4 is an integer greater than or equal to 0.

For example, if the detection period of the control channel is 14 symbols and the service is URLLC, the corresponding quantity of bits of the time domain information may be S5. S5 is an integer greater than or equal to 0.

For example, if the detection period of the control channel is 14 symbols and the service is eMBB, the corresponding quantity of bits of the time domain information may be S6. S6 is an integer greater than or equal to 0.

S1, S2, S3, S4, S5, and S6 are integers greater than or equal to 0, and their values may be the same or may be different, or may be any other quantity of bits. This is not limited in this embodiment of this application.

Optionally, when S1 or S2 or S3 or S4 or S5 or S6 is equal to 0, it indicates that the base station may not transmit the time domain information to the terminal. In this case, the time domain information may be predefined. This is not specifically limited herein. Alternatively, the time domain information is notified by using higher layer signaling, for example, RRC signaling or MAC signaling. This is not specifically limited herein.

Optionally, another correspondence between the detection period of the control channel and the service and the quantity of bits of the time domain information is not excluded. This is not specifically limited herein.

Optionally, after the terminal obtains the quantity of bits of the time domain information, the terminal may further determine the quantity of bits of the control information by adding a quantity of bits (or a bit length) of other known information in the control information, and receive the control information based on the quantity of bits of the control information (for example, DCI), and after receiving the control information, read data scheduling information in the control information, and further obtain the time domain information in the control information.

Optionally, the time domain information may be a quantity of bits of a related information field in the control information, and the related information field in the control information may be information used to indicate a resource for data scheduling. This is not limited in this application.

Embodiment 2: The information indicated by the time domain information is determined based on the detection period of the control channel.

Optionally, the terminal and/or the base station determine/determines, based on the detection period of the control channel and a correspondence between the detection period of the control channel and the information indicated by the time domain information, the information indicated by the time domain information.

Optionally, the time domain information may be related information such as time domain information, frequency domain information, or time domain information and frequency domain information for indicating data transmission. This is not limited in this application.

The information indicated by the time domain information may also be referred to as a meaning of the bits of the time domain information.

Optionally, the information indicated by the time domain information may be specifically indicated information. For example, the information indicated by the time domain information may be at least one of meanings of a starting position, an ending position, and a time domain length or quantity of the data channel.

Optionally, the starting position may mean at least one of a position of a starting symbol in a slot, and a position relationship between the starting symbol and a symbol on which the PDCCH is detected. The starting position may also be referred to as a starting time domain position.

Optionally, the starting time domain position of the data channel may mean the starting time domain position of the data channel in a first time unit. For example, the starting time domain position of the data channel in the slot may be a position of a starting symbol of the data channel in the slot. For example, the starting symbol is a symbol having a specific sequence number in the slot, counting forward or counting backward.

Optionally, the starting time domain position of the data channel may indicate a position relationship between a time domain resource position of the data channel and a time domain resource on which the control channel is detected. For example, the starting time domain position of the data channel may be a symbol after a symbol on which the control channel is detected. For example, the starting time domain position of the data channel may be the symbol on which the control channel is detected.

Optionally, the ending position may mean at least one of a position of an ending symbol in the slot, a position relationship between the ending symbol and the symbol on which the PDCCH is detected, and a position relationship between the ending symbol and the starting symbol. The ending position may also be referred to as an ending time domain position.

Optionally, the ending time domain position of the data channel may mean the ending time domain position of the data channel in the first time unit. For example, the ending time domain position of the data channel in the slot may be a position of an ending symbol of the data channel in the slot. For example, the ending symbol is a symbol having a specific sequence number in the slot, counting forward or counting backward.

Optionally, the ending time domain position of the data channel may indicate a position relationship between an ending time domain resource position of the data channel and the time domain resource on which the control channel is detected. For example, the ending time domain position of the data channel may be a symbol after the symbol on which the control channel is detected.

Optionally, the ending time domain position of the data channel may indicate a position relationship between the ending time domain position of the data channel and the starting time domain position of the data channel. For example, the ending time domain position of the data channel may be a symbol after the starting time domain position.

Optionally, the time domain length or quantity may indicate a length or duration in time domain.

Optionally, a time unit used for indicating the starting time domain position, the ending time domain position, or the time domain length may be a time unit such as a radio frame, a subframe, a slot, a mini-slot, or a symbol.

Specifically, the starting position (starting) may mean a starting position of the data channel, for example, may be a position of a starting second time unit for the data channel in the first time unit, and specifically, for example, may be a position of a starting symbol for the data channel in the slot. For example, a starting position 0 represents a symbol 0 in the slot, that is, the time domain resource of the data channel starts from the symbol 0 in the slot, that is, data transmission starts from a first symbol in the slot; and a starting position 1 represents a symbol 1 in the slot, that is, the time domain resource of the data channel starts from the symbol 1 in the slot, that is, the time domain resource of the data channel starts from a second symbol in the slot. This is not limited in this application.

Optionally, the foregoing meanings of the starting time domain position are only examples, and other meanings of the starting time domain position are not excluded.

The first time unit may be a radio frame, a subframe, a slot, a mini-slot, a symbol, or the like. The second time unit may be a radio frame, a subframe, a slot, a mini-slot, a symbol, or the like. The time unit is a basic unit for data scheduling in time domain. For example, the first time unit may include one or more second time units.

Optionally, starting may also mean a quantity of symbols occupied by the control channel or a channel/signal other than the data channel of the terminal for transmission. For example, a starting position 0 represents that a quantity of symbols occupied by the control channel is 0, and in this case, transmission and/or mapping of the data channel start/starts from the first symbol in the slot; and a starting position 1 represents that a quantity of symbols occupied by the control channel is 1, and in this case, transmission and/or mapping of the data channel start/starts from the second symbol in the slot. This is not limited in this application.

Optionally, starting may further mean a starting symbol position of the data channel after the control channel. For example, a starting position 0 represents that the data channel is after a zeroth symbol after the control channel, and in this case, transmission and/or mapping of the data channel start/starts from a first symbol after the control channel or transmission of the data channel starts from a symbol on which the control channel is located; and a starting position 1 represents that the data channel is after the first symbol after the control channel, and in this case, transmission and/or mapping of the data channel start/starts from a second symbol after the control channel or transmission of the data channel starts from a first symbol after the symbol on which the control channel is located. This is not limited in this application. The position of the control channel may be configured by using higher layer signaling or may be a symbol position of the control channel detected by the terminal.

Optionally, the foregoing meanings of the starting time domain position are only examples, and other meanings of the starting time domain position are not excluded.

Optionally, the ending position (ending) means an ending position of the data channel, for example, may be a position of an ending second time unit for the data channel in the first time unit, specifically, for example, may be a position of an ending symbol for the data channel in the slot. For example, an ending position 0 represents a last symbol in the slot, that is, the ending symbol of the data channel is the last symbol in the slot, that is, symbols for transmitting the data channel include the last symbol in the slot; an ending position -1 represents the last symbol in the slot, that is, the last symbol in the slot is not used for data transmission, that is, the symbols for transmitting the data channel do not include the last symbol in the slot; and an ending position -2 represents a penultimate symbol in the slot, that is, the symbols of the data channel do not include the penultimate symbol in the slot and a subsequent symbol in the slot, that is, the penultimate symbol in the slot and the subsequent symbol in the slot are not used for data transmission, that is, the symbols for transmitting the data channel do not include the last symbol and the penultimate symbol. This is not limited in this application.

Optionally, ending may further mean an ending symbol position of the data channel after the control channel. For example, an ending position 1 represents that the first symbol after the control channel is an ending symbol of the data channel, and the ending position of the data channel is the first symbol after the control channel; and an ending position 2 represents that the second symbol after the control channel is an ending symbol of the data channel, and the ending position of the data channel is the second symbol after the control channel. This is not limited in this application. The position of the control channel may be configured by using higher layer signaling or may be a symbol position of the control channel detected by the terminal.

Optionally, ending may further mean a position relationship between the ending time domain position and the starting time domain position of the data channel. For example, an ending position 1 represents that a first symbol after the starting time domain position is the ending time domain position of the data channel; and an ending position 2 represents that a second symbol after the starting time domain position is the ending time domain position of the data channel. This is not limited in this application. The starting time domain position may be predefined, or configured by using higher layer signaling or configured by using physical layer signaling.

Optionally, the foregoing meanings of the ending time domain position are only examples, and other meanings of the starting time domain position are not excluded.

Optionally, a value of starting and a value of ending may be the same or may be different. For example, stating is 0, 1, 2, or 3, and ending is 0, 1, or 2; or starting is 1 or 2, and ending is 0, 1, or 2; or stating is 0, 1, or 2, and ending is 1 or 2, or ending is 0, -1, or -2. A value range of starting and a value range of ending may be predefined in a protocol, or may be notified by using signaling, for example, notified by using higher layer signaling or physical layer signaling. In a same case, the value range of starting and the value range of ending may be indicated by one piece of signaling, or may be indicated by different signaling.

Optionally, ending may mean a relationship between the ending position and the starting position, or may mean a relationship between the ending position and a position of the detected control channel, or the like. This is not specifically limited herein.

Optionally, the time domain length or quantity may indicate a length or duration in time domain. For example, the time domain length may be a quantity of first time units. The first time unit may be a time unit such as a radio frame, a subframe, a slot, a mini-slot, or a symbol. For example, the time domain length may be a quantity of symbols or a quantity of slots.

Optionally, the foregoing meanings of the ending time domain position are only examples, and other meanings of the starting time domain position are not excluded.

Optionally, determining, based on the detection period of the control channel, the information indicated by the time domain information may be determining a meaning of the starting position of the data channel and/or a meaning of the ending position of the data channel and/or a meaning of the time domain length based on the detection period of the control channel.

Optionally, the information indicated by the time domain information is determined based on the detection period of the control channel and the correspondence between the detection period of the control channel and the information indicated by the time domain information.

In the method, setting the correspondence between the detection period of the control channel and the information indicated by the time domain information can simplify a design of the time domain information.

Optionally, the setting in the present invention may be predefining or configuring, and is not specifically limited herein.

Optionally, the correspondence between the detection period of the control channel and the information indicated by the time domain information is predefined, so that the information indicated by the time domain information is determined.

Optionally, the correspondence between the detection period of the control channel and the information indicated by the time domain information is configured, so that the information indicated by the time domain information is determined. Specifically, the base station may notify, by using signaling, the terminal of the correspondence between the detection period of the control channel and the information indicated by the time domain information. The signaling may be physical layer signaling or higher layer signaling, and is not specifically limited.

Optionally, the information indicated by the time domain information may be determined in the following implementations based on the correspondence between the detection period of the control channel and the information indicated by the time domain information.

For example, when the detection period of the control channel is 14 symbols, the starting position of the data channel means a position of a starting second time unit for the data channel in the first time unit and/or the ending position of the data channel means a position of an ending second time unit for the data channel in the first time unit and/or the time domain length of the data channel means a quantity of first time units.

For example, when the detection period of the control channel is two symbols, the starting position of the data channel means a starting symbol position of the data channel after the control channel and/or the ending position of the data channel means a position relationship between the ending position and the starting position and/or the time domain length of the data channel means a quantity of second time units.

Optionally, the correspondence between the detection period of the control channel and the information indicated by the time domain information in the present invention is only an example, and other correspondences are not excluded. This is not specifically limited herein.

Optionally, based on different detection periods of the control channel, the quantity of bits of the time domain information and the information indicated by the time domain information may be determined independently. For example, based on different detection periods of the control channel, quantities of bits of the time domain information may be the same, but the information indicated by the time domain information may be determined independently; or quantities of bits of the time domain information may be different, and the information indicated by the time domain information may be determined independently.

Optionally, the meaning of the bits of the time domain information may also be indicated by using a table. Determining the meaning of the bits of the time domain information based on the detection period of the control channel may be determining, based on the detection period of the control channel, a table used for indicating the time domain information in the control information. This is not specifically limited herein. The table is used to indicate time domain information of the data channel. For example, the time domain information may be indicated by an index or an identifier in the table.

Optionally, the meaning of the bits of the time domain information may also be at least one of an explanation of a combination of the starting position and the ending position, an explanation of a combination of the starting position and the time domain length, an explanation of a combination of the ending position and the time domain length, and the like.

Optionally, the meaning of the bits of the time domain information may also be an explanation of a pattern (pattern) of a time-frequency resource of the data channel.

For example, in various detection periods of the control channel, the quantity of bits of the time domain information in the control information is three bits, but explanations of combinations of the pattern and/or the time domain resource and/or the indication information corresponding to the three bits are different.

Example 1: When the detection period of the control channel is 14 symbols, an explanation corresponding to the 3-bit time domain information is as follows: Because the detection period of the control channel is 14 symbols, and a corresponding data packet is relatively large, more symbols are required for data transmission. In this case, more time domain resources (for example, symbols) may be occupied by the data channel. For example, the starting symbol position of the data channel may be a relatively front position in the slot, and the ending symbol position of the data channel is a relatively rear position in the slot. As shown in Table 1, the time domain information of the data channel may correspond to eight combinations of the pattern and/or the time domain resource and/or the indication information.

The following uses the pattern as an example for description. The combination of the time domain resource and/or the indication information is similar, and is not described in detail herein.

Using the pattern as an example, each identifier or index corresponds to one pattern. Table 1 is only an example. Correspondences between other patterns and/or other identifiers or indexes and/or other patterns and identifiers are not excluded. This is not specifically limited herein.

For example, in a pattern 1, a starting position is 1, and an ending position is 0; and in a pattern 2, a starting position is 1, and an ending position is -1, where meanings of the numbers 1, 0, and -1 are the same as those in the foregoing embodiment, and the pattern may be a time-frequency resource position occupied by the data channel. For example, if the starting position of the data channel means a position of the starting second time unit for the data channel in the first time unit, and the ending position of the data channel means a position of the ending second time unit for the data channel in the first time unit, in the pattern 1, the starting position is 1, and the ending position is 0. To be specific, it indicates that transmission of the data channel starts from the first symbol in the slot and ends at the last slot of the slot.

Table 1

| Index | Starting | Ending |
|---|---|---|
| 0 | 1 | 0 |
| 1 | 1 | -1 |
| 2 | 1 | -2 |
| 3 | 2 | 0 |
| 4 | 2 | -1 |
| 5 | 2 | -2 |
| 6 | 3 | 0 |
| 7 | 3 | -1 |

Example 2: When the detection period of the control channel is seven symbols, an explanation corresponding to the three bits is as follows: Because the detection period of the control channel is seven symbols, and a corresponding data packet is generally large, relatively few symbols are required for data transmission. In this case, relatively few time domain resources (for example, symbols) may be occupied by the data channel. For example, a position of the starting symbol is a middle position in the slot, or a position of the ending symbol is a middle position in the slot. As shown in Table 2, there are eight combinations of the pattern and/or the time domain resource and/or the indication information. The following uses the pattern as an example for description. The combination of the time domain resource and/or the indication information is similar, and is not described in detail herein.

Using the pattern as an example, each identifier or index corresponds to one pattern. Table 2 is only an example. Correspondences between other patterns and/or other identifiers or indexes and/or other patterns and identifiers are not excluded. This is not specifically limited herein.

For example, in a pattern 1, a starting position is 1, and an ending position is 0; and in a pattern 2, a starting position is 1, and an ending position is -1, where meanings of the numbers 1, 0, and -1 are the same as those in the foregoing embodiment, and the pattern may be a time-frequency resource position occupied by the data channel. For example, if the starting position of the data channel means a position of the starting second time unit for the data channel in the first time unit, and the ending position of the data channel means a position of the ending second time unit for the data channel in the first time unit, in the pattern 1, the starting position is 1, and the ending position is 0. To be specific, it indicates that transmission of the data channel starts from the first symbol in the slot and ends at the last slot of the slot.

Table 2

| Index | Starting | Ending |
|---|---|---|
| 0 | 1 | 0 |
| 1 | 1 | -1 |
| 2 | 1 | -3 |
| 3 | 1 | -5 |
| 4 | 3 | 0 |

(continued)

| Index | Starting | Ending |
|-------|----------|--------|
| 5 | 3 | -1 |
| 6 | 3 | -3 |
| 7 | 3 | -5 |

Example 3: When the detection period of the control channel is two symbols, an explanation corresponding to the three bits is as follows: Because the detection period of the control channel is two symbols, and a corresponding data packet is relatively small, fewer symbols are required for data transmission. In this case, fewer time domain resources (for example, symbols) may be occupied by the data channel. For example, a position of the starting symbol is a middle position in the slot, or a position of the ending symbol is a middle position in the slot. As shown in Table 3, there are eight combinations of the pattern and/or the time domain resource and/or the indication information. The following uses the pattern as an example for description. The combination of the time domain resource and/or the indication information is similar, and is not described in detail herein.

Using the pattern as an example, each identifier or index corresponds to one pattern. Table 3 is only an example. Correspondences between other patterns and/or other identifiers or indexes and/or other patterns and identifiers are not excluded. This is not specifically limited herein.

For example, in a pattern 1, a starting position is 1, and an ending position is 0; and in a pattern 2, a starting position is 1, and an ending position is -1, where meanings of the numbers 1, 0, and -1 are the same as those in the foregoing embodiment, and the pattern may be a time-frequency resource position occupied by the data channel. For example, if the starting position of the data channel means a position of the starting second time unit for the data channel in the first time unit, and the ending position of the data channel means a position of the ending second time unit for the data channel in the first time unit, in the pattern 1, the starting position is 1, and the ending position is 0. To be specific, it indicates that transmission of the data channel starts from the first symbol in the slot and ends at the last slot of the slot.

Table 3

| Index | Starting | Ending |
|-------|----------|--------|
| 0 | 1 | 0 |
| 1 | 1 | -2 |
| 2 | 3 | 0 |
| 3 | 3 | -2 |
| 4 | 5 | 0 |
| 5 | 5 | -2 |
| 6 | 7 | 0 |
| 7 | 7 | -2 |

Optionally, the correspondence between the detection period of the control channel and the meaning of the bits of the time domain information in the present invention is only an example, and other correspondences are not excluded. This is not specifically limited herein.

Optionally, in this embodiment of this application, the time domain information may be used to indicate a start and length indicator (start and length indicator, SLIV).

In this embodiment of this application, the SLIV is used to determine the starting time domain position and the time domain length of the data channel. For example, the starting time domain position start of the data channel may be an identifier of a starting fourth time unit of the data channel, and the time domain length length of the data channel may be a quantity of consecutive fourth time units allocated to the data channel, or the time domain length length of the data channel may be a quantity of consecutive fourth time units in which the data channel is located. The identifier of the starting fourth time unit of the data channel may be an identifier of the starting fourth time unit of the data channel in a fifth time unit, the fifth time unit may include $N\_1$ fourth time units, and identifiers of the $N\_1$ fourth time units in the fifth time unit may be 0 to $N\_1$-1 respectively. The SLIV may be determined based on start and length.

For example,
if (Length-1) $\leq N\_2$,

$$SLIV = N\_1 \times (Length-1) + start\ ;$$

otherwise,

$$SLIV = N\_1 \times (N\_1 - Length + 1) + (N\_1 - 1 - start)\ ,$$

where $N\_2$ may be equal to $\lfloor N\_1/2 \rfloor$, $\lceil N\_1/2 \rceil$, or $N\_1/2$, start and length are integers, a value range of start may be 0 to $N\_1$-1, and a value range of length may be 1 to $N\_1$-start. A value of $N\_2$ may be predefined in the protocol, or notified by the base station by using signaling. This is not specifically limited herein.

For another example,
if (Length-1) < $N\_2$,

$$SLIV = N\_1 \times (Length-1) + start\ ;$$

otherwise,

$$SLIV = N\_1 \times (N\_1 - Length + 1) + (N\_1 - 1 - start)\ ,$$

where $N\_2$ may be equal to $\lfloor N\_1/2 \rfloor$, $\lceil N\_1/2 \rceil$, or $N\_1/2$, start and length are integers, a value range of start may be 0 to $N\_1$-1, and a value range of length may be 1 to $N\_1$-start. A value of $N\_2$ may be predefined in the protocol, or notified by the base station by using signaling. This is not specifically limited herein.

For example, in an example in which the fourth time unit is a symbol, the fifth time unit is a slot, and one slot includes 14 symbols,
if (Length-1) $\leq 7$ ,

$$SLIV = 14 \times (Length-1) + start\ ;$$

otherwise,

$$SLIV = 14 \times (14 - Length + 1) + (14 - 1 - start)\ ,$$

where 0 < Length $\leq$ 14-start. Based on the example, Table 10(a) shows an example of length, start, and a value of the SLIV determined based on length and start.

Table 10(a)

| Length | Start | SLIV |
|---|---|---|
| 1 | 0 to 13 | 0 to 13 |
| 2 | 0 to 12 | 14 to 26 |
| 3 | 0 to 11 | 28 to 39 |
| 4 | 0 to 10 | 42 to 52 |
| 5 | 0 to 9 | 56 to 65 |
| 6 | 0 to 8 | 70 to 78 |
| 7 | 0 to 7 | 84 to 91 |
| 8 | 0 to 6 | 98 to 104 |
| 9 | 0 to 5 | 92 to 97 |
| 10 | 0 to 4 | 79 to 83 |

(continued)

| Length | Start | SLIV |
|--------|--------|----------|
| 11 | 0 to 3 | 66 to 69 |
| 12 | 0 to 2 | 53 to 55 |
| 13 | 0 to 1 | 40 to 41 |
| 14 | 0 | 27 |

For another example, in an example in which the fourth time unit is a symbol, the fifth time unit is a slot, and one slot includes 14 symbols,
if (Length-1) < 7,

$$SLIV = 14 \times (Length - 1) + start \, ;$$

otherwise,

$$SLIV = 14 \times (14 - Length + 1) + (14 - 1 - start),$$

where $0 < Length \leq 14 - start$. Based on the example, Table 10(b) shows an example of length, start, and a value of the SLIV determined based on length and start. In the method provided by this embodiment of this application, the method provided by this embodiment of this application is described by using a correspondence between start, length, and SLIV shown in Table 10(b). Similarly, in the method provided by this embodiment of this application, the method provided by this embodiment of this application may also be described by using a correspondence between start, length, and SLIV shown in Table 10(a). This is similar to the description of Table 10(b). Details are not described again in this embodiment of this application.

Table 10(b)

| Length | Start | SLIV |
|--------|---------|------------|
| 1 | 0 to 13 | 0 to 13 |
| 2 | 0 to 12 | 14 to 26 |
| 3 | 0 to 11 | 28 to 39 |
| 4 | 0 to 10 | 42 to 52 |
| 5 | 0 to 9 | 56 to 65 |
| 6 | 0 to 8 | 70 to 78 |
| 7 | 0 to 7 | 84 to 91 |
| 8 | 0 to 6 | 105 to 111 |
| 9 | 0 to 5 | 92 to 97 |
| 10 | 0 to 4 | 79 to 83 |
| 11 | 0 to 3 | 66 to 69 |
| 12 | 0 to 2 | 53 to 55 |
| 13 | 0 to 1 | 40 to 41 |
| 14 | 0 | 27 |

Optionally, when the information indicated by the time domain information is determined based on the detection period of the control channel, a correspondence between a value of the time domain information and the SLIV may be determined based on the detection period of the control channel, and the SLIV indicated by the time domain information is determined based on the value of the time domain information and the correspondence between the value of the time domain information and the SLIV. When the correspondence between the value of the time domain information and the SLIV is determined based on the detection period of the control channel, the correspondence may be determined based on a preconfiguration, or may be determined based on signaling sent by the base station. This is not limited in this application.

Optionally, when the information indicated by the time domain information is determined based on the detection period of the control channel, a SLIV set may also be determined based on the detection period of the control channel, and the SLIV is determined based on the time domain information, where the SLIV is included in the SLIV set. When the SLIV is determined based on the time domain information, the SLIV may be determined based on the value of the time domain information and the correspondence between the value of the time domain information and the SLIV in the SLIV set. The correspondence between the value of the time domain information and the SLIV in the SLIV set may be preconfigured, or may be notified by the base station to the UE by using signaling. This is not limited in this application. When the SLIV set is determined based on the detection period of the control channel, the SLIV set may be determined based on a preconfiguration, or may be determined based on signaling sent by the base station. This is not limited in this application.

Optionally, when the information indicated by the time domain information is determined based on the detection period of the control channel, the SLIV set and the correspondence between the value of the time domain information and the SLIV in the SLIV set may also be determined based on the detection period of the control channel, and the SLIV is determined based on the time domain information, where the SLIV is included in the SLIV set. When the SLIV is determined based on the time domain information, the SLIV may be determined based on the value of the time domain information and the correspondence between the value of the time domain information and the SLIV in the SLIV set. When the SLIV set and the correspondence between the value of the time domain information and the SLIV in the SLIV set are determined based on the detection period of the control channel, the SLIV set and the correspondence may be determined based on a preconfiguration, or may be determined based on signaling sent by the base station. This is not limited in this application.

Optionally, the SLIV set may be determined based on a starting time domain position set and a time domain length set. The SLIV in the SLIV set may be determined based on a starting time domain position in the starting time domain position set and a time domain length in the time domain length set. In this case, determining the SLIV set based on the detection period of the control channel may also be understood as: determining the starting time domain position set and the time domain length set based on the detection period of the control channel; and determining the SLIV based on the value of the time domain information and the correspondence between the value of the time domain information and the SLIV in the SLIV set may also be understood as: determining the time domain length based on the value of the time domain information and a correspondence between the value of the time domain information and the time domain length in the time domain length set, and determining the starting time domain position based on the value of the time domain information, and a correspondence between the value of the time domain information and the starting time domain position in the starting time domain position set.

Optionally, when the SLIV set is determined based on the detection period of the control channel, the SLIV set may be determined based on a quantity of fourth time units included in the detection period of the control channel. For example, in an example in which the fourth time unit is a symbol, if a quantity of symbols included in the detection period of the control channel is Test_1, a time domain length corresponding to the SLIV in the SLIV set is at least one of one symbol to Test_1 symbols, at least one of one symbol to $N\_1$ symbols, or at least one of one symbol to min(Test_1, $N\_1$) symbols. $N\_1$ is a quantity of symbols included in a slot.

Example A1:

If the detection period of the control channel is two symbols, the correspondence between the value of the time domain information and the SLIV may be at least one shown in Table 11. The SLIV indicated by the time domain information may be determined based on the value of the time domain information and the correspondence between the value of the time domain information and the SLIV. For example, if the value of the time domain information in the control information is 12, based on the correspondence shown in Table 11, it may be determined that the SLIV indicated by the time domain information in the control information is 12, corresponding start is 12, and length is 1.

If the detection period of the control channel is two symbols, the SLIV set may be determined based on the detection period of the control channel, and the SLIV is determined based on the time domain information, where the SLIV is included in the SLIV set. The SLIV set includes at least one of SLIVs shown in Table 11. For example, the SLIV set may be {0 to 13, 14 to 26}, start corresponding to any SLIV in the SLIV set may be one of 0 to 13, and length corresponding to any SLIV in the SLIV set may be 1 or 2. This may also be described as "a start set corresponding to the SLIV set may be {0 to 13}, and a length set may be {1, 2}". When the SLIV is determined based on the time domain information, the correspondence between the value of the time domain information and the SLIV in the SLIV set may be at least one shown in Table 11. The SLIV indicated by the time domain information may be determined based on the value of the time domain information and the correspondence between the value of the time domain information and the SLIV in the SLIV set. For example, if the value of the time domain information in the control information is 15, based on the correspondence shown in Table 11, it may be determined that the SLIV indicated by the time domain information in the control information is 15, corresponding start is 1, and length is 2.

If the detection period of the control channel is two symbols, the SLIV set and the correspondence between the value of the time domain information and the SLIV in the SLIV set may be determined based on the detection period of the control channel. The SLIV set includes at least one of SLIVs shown in Table 11. For example, the SLIV set may be {0 to 13, 14 to 26}, start corresponding to any SLIV in the SLIV set may be one of 0 to 13, and length corresponding to any SLIV in the SLIV set may be 1 or 2. This may also be described as "a start set corresponding to the SLIV set may be {0 to 13}, and a length set may be {1, 2}". The correspondence between the value of the time domain information and the SLIV in the SLIV set is at least one shown in Table 11. The SLIV indicated by the time domain information may be determined based on the value of the time domain information and the correspondence between the value of the time domain information and the SLIV in the SLIV set.

In this embodiment of this application, if the SLIV indicated by the time domain information has $R1$ values, where $R1$ is a positive integer, the quantity of bits of the time domain information may be $\lceil \log_2(R1) \rceil$, and the SLIV is indicated by using the $\lceil \log_2(R1) \rceil$-bit time domain information. Further, the quantity of bits of the time domain information in the control information may also be greater than $\lceil \log_2(R1) \rceil$. For example, as shown in Table 11, because the SLIV indicated by the time domain information has 27 values, the quantity of bits of the time domain information may be 5, and the SLIV is indicated by using the 5-bit time domain information. Further, the quantity of bits of the time domain information in the control information may also be greater than 5.

In this embodiment of this application, if a largest value of the time domain information is $R2,$ where $R2$ is a positive integer, the quantity of bits of the time domain information may be $\lceil \log_2(R2) \rceil$ or $\lceil \log_2(R2+1) \rceil$, and the SLIV is indicated by using the $\lceil \log_2(R2) \rceil$ - bit or $\lceil \log_2(R2+1) \rceil$ -bit time domain information. Further, the quantity of bits of the time domain information in the control information may also be greater than $\lceil \log_2(R2) \rceil$ or $\lceil \log_2(R2+1) \rceil$. For example, as shown in Table 11, because the largest value of the time domain information is 26, the quantity of bits of the time domain information may be 5, and the SLIV is indicated by using the 5-bit time domain information. Further, the quantity of bits of the time domain information in the control information may also be greater than 5.

In this embodiment of this application, in the table showing the correspondence between the value of the time domain information and the SLIV, or in the table showing the correspondence between the value of the time domain information and the SLIV in the SLIV set, as shown in Table 11, start and length corresponding to the SLIV are also shown, where the value of the time domain information, the SLIV, start, and length are integers, and there is a one-to-one correspondence between the value of the time domain information, the SLIV, and start in sequence. For example, as shown by a second row in Table 11, the value of the time domain information is 0 to 13, the SLIV is 0 to 13, and start is 0 to 13; in this case, a correspondence between the value of the time domain information, the SLIV, and start is shown in Table 12, where corresponding length is 1. For another example, as shown by a third row in Table 11, the value of the time domain information is 14 to 26, the SLIV is 14 to 26, and start is 0 to 12; in this case, a correspondence between the value of the time domain information, the SLIV, and start is shown in Table 13, where corresponding length is 2.

In this embodiment of this application, in the table showing the correspondence between the value of the time domain information and the SLIV, or in the table showing the correspondence between the value of the time domain information and the SLIV in the SLIV set, when indicating values, a symbol "-" indicates "to". For example, 0-13 indicate 0 to 13.

Table 11

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |

Table 12

| Value of the time domain information | SLIV | Start | Length |
|---|---|---|---|
| 0 | 0 | 0 | 1 |
| 1 | 1 | 1 | 1 |
| 2 | 2 | 2 | 1 |

(continued)

| Value of the time domain information | SLIV | Start | Length |
|---|---|---|---|
| 3 | 3 | 3 | 1 |
| 4 | 4 | 4 | 1 |
| 5 | 5 | 5 | 1 |
| 6 | 6 | 6 | 1 |
| 7 | 7 | 7 | 1 |
| 8 | 8 | 8 | 1 |
| 9 | 9 | 9 | 1 |
| 10 | 10 | 10 | 1 |
| 11 | 11 | 11 | 1 |
| 12 | 12 | 12 | 1 |
| 13 | 13 | 13 | 1 |

Table 13

| Value of the time domain information | SLIV | Start | Length |
|---|---|---|---|
| 14 | 14 | 0 | 2 |
| 15 | 15 | 1 | 2 |
| 16 | 16 | 2 | 2 |
| 17 | 17 | 3 | 2 |
| 18 | 18 | 4 | 2 |
| 19 | 19 | 5 | 2 |
| 20 | 20 | 6 | 2 |
| 21 | 21 | 7 | 2 |
| 22 | 22 | 8 | 2 |
| 23 | 23 | 9 | 2 |
| 24 | 24 | 10 | 2 |
| 25 | 25 | 11 | 2 |
| 26 | 26 | 12 | 2 |

Example A2:

If the detection period of the control channel is two symbols, the correspondence between the value of the time domain information and the SLIV may be at least one shown in Table 14. Based on Table 14, a method for determining, based on the detection period of the control channel, the information indicated by the time domain information is similar to corresponding descriptions in the example A1, and is not described again herein.

If the detection period of the control channel is two symbols, the SLIV included in the SLIV set may be at least one of SLIVs shown in Table 14, and the correspondence between the value of the time domain information and the SLIV in the SLIV set may be at least one shown in Table 14. Based on Table 14, a method for determining, based on the detection period of the control channel, the information indicated by the time domain information is similar to corresponding descriptions in the example A1, and is not described again herein.

For example, as shown in Table 14, because the SLIV indicated by the time domain information has 39 values, the quantity of bits of the time domain information may be 6, and the SLIV is indicated by using the 6-bit time domain information. Further, the quantity of bits of the time domain information in the control information may also be greater than 6.

Table 14

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 28 to 39 or 27 to 38 | 28 to 39 | 0 to 11 | 3 |

Example A3:

If the detection period of the control channel is two symbols, the correspondence between the value of the time domain information and the SLIV may be at least one shown in Table 15. Based on Table 15, a method for determining, based on the detection period of the control channel, the information indicated by the time domain information is similar to corresponding descriptions in the example A1, and is not described again herein.

If the detection period of the control channel is two symbols, the SLIV included in the SLIV set may be at least one of SLIVs shown in Table 15, and the correspondence between the value of the time domain information and the SLIV in the SLIV set may be at least one shown in Table 15. Based on Table 15, a method for determining, based on the detection period of the control channel, the information indicated by the time domain information is similar to corresponding descriptions in the example A1, and is not described again herein.

For example, as shown in Table 15, because a largest value of the time domain information is 52, the quantity of bits of the time domain information may be 6, and the SLIV is indicated by using the 6-bit time domain information. Further, the quantity of bits of the time domain information in the control information may also be greater than 6.

In the method provided by this embodiment of this application, optionally, the correspondence between the value of the time domain information and the SLIV may be: SLIV indicated by the time domain information=Value of the time domain information. As shown in the following Table 15, the SLIV indicated by the time domain information is the value of the time domain information.

Table 15

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 28 to 39 | 28 to 39 | 0 to 11 | 3 |
| 42 to 52 | 42 to 52 | 0 to 10 | 4 |

Example A4:

If the detection period of the control channel is two symbols, the correspondence between the value of the time domain information and the SLIV may be at least one shown in Table 16. Based on Table 16, a method for determining, based on the detection period of the control channel, the information indicated by the time domain information is similar to corresponding descriptions in the example A1, and is not described again herein.

If the detection period of the control channel is two symbols, the SLIV included in the SLIV set may be at least one of SLIVs shown in Table 16, and the correspondence between the value of the time domain information and the SLIV in the SLIV set may be at least one shown in Table 16. Based on Table 16, a method for determining, based on the detection period of the control channel, the information indicated by the time domain information is similar to corresponding descriptions in the example A1, and is not described again herein.

For example, as shown in Table 16, because the SLIV indicated by the time domain information has 50 values, the quantity of bits of the time domain information may be 6, and the SLIV is indicated by using the 6-bit time domain information. Further, the quantity of bits of the time domain information in the control information may also be greater than 6.

In the method provided by this embodiment of this application, optionally, the correspondence between the value of the time domain information and the SLIV may be: the value of the time domain information corresponding to the SLIV in the SLIV set starts from 0 and increases by $t\_1$ in sequence based on an order of SLIV values in the SLIV set, where $t\_1$ is an integer. For example, $t\_1$ is equal to 1. For example, a value of time domain information corresponding to a first smallest SLIV in the SLIV set is 0, and a value of time domain information corresponding to a second smallest SLIV in the SLIV set is 1. As shown in the following Table 16, the first smallest SLIV is 0, and the value of the corresponding time domain information is 0; and the second smallest SLIV is 1, and the value of the corresponding time domain information is 1.

Table 16

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 38 | 28 to 39 | 0 to 11 | 3 |
| 39 to 49 | 42 to 52 | 0 to 10 | 4 |

Example A5:

If the detection period of the control channel is seven symbols, the correspondence between the value of the time domain information and the SLIV may be at least one shown in Table 17. Based on Table 17, a method for determining, based on the detection period of the control channel, the information indicated by the time domain information is similar to corresponding descriptions in the example A1, and is not described again herein.

If the detection period of the control channel is seven symbols, the SLIV included in the SLIV set may be at least one of SLIVs shown in Table 17, and the correspondence between the value of the time domain information and the SLIV in the SLIV set may be at least one shown in Table 17. Based on Table 17, a method for determining, based on the detection period of the control channel, the information indicated by the time domain information is similar to corresponding descriptions in the example A1, and is not described again herein.

For example, as shown in Table 17, because a largest value of the time domain information is 77, the quantity of bits of the time domain information may be 7, and the SLIV is indicated by using the 7-bit time domain information. Further, the quantity of bits of the time domain information in the control information may also be greater than 7.

In the method provided by this embodiment of this application, optionally, the correspondence between the value of the time domain information and the SLIV may be: the SLIV indicated by the time domain information is the value of the time domain information plus VI, where V1 is an integer. That is, SLIV indicated by the time domain information=Value (Index) of the time domain information + V1. For example, as shown in the following Table 17, when a value of V1 is 14, SLIV indicated by the time domain information=Value (Index) of the time domain information + 14.

Table 17

| Value of the time domain information | SLIV | Start | Length |
|---|---|---|---|
| 0 to 12 | 14 to 26 | 0 to 12 | 2 |
| 14 to 25 | 28 to 39 | 0 to 11 | 3 |
| 28 to 38 | 42 to 52 | 0 to 10 | 4 |
| 42 to 51 | 56 to 65 | 0 to 9 | 5 |
| 56 to 64 | 70 to 78 | 0 to 8 | 6 |
| 70 to 77 | 84 to 91 | 0 to 7 | 7 |

Example A6:

If the detection period of the control channel is seven symbols, the correspondence between the value of the time domain information and the SLIV may be at least one shown in Table 18. Based on Table 18, a method for determining, based on the detection period of the control channel, the information indicated by the time domain information is similar to corresponding descriptions in the example A1, and is not described again herein.

If the detection period of the control channel is seven symbols, the SLIV included in the SLIV set may be at least one of SLIVs shown in Table 18, and the correspondence between the value of the time domain information and the SLIV in the SLIV set may be at least one shown in Table 18. Based on Table 18, a method for determining, based on the detection period of the control channel, the information indicated by the time domain information is similar to corresponding descriptions in the example A1, and is not described again herein.

For example, as shown in Table 18, because a largest value of the time domain information is 61, the quantity of bits of the time domain information may be 6, and the SLIV is indicated by using the 6-bit time domain information. Further, the quantity of bits of the time domain information in the control information may also be greater than 6.

In the method provided by this embodiment of this application, optionally, the correspondence between the value of the time domain information and the SLIV may be: the value of the time domain information corresponding to the SLIV in the SLIV set starts from 0 and increases by t_1 in sequence based on an order of SLIV values in the SLIV set, where t_1 is an integer. For example, t_1 is equal to 1. For example, a value of time domain information corresponding to a first smallest SLIV in the SLIV set is 0, and a value of time domain information corresponding to a second smallest SLIV in the SLIV set is 1. As shown in the following Table 18, the first smallest SLIV is 14, and the value of the corresponding time domain information is 0; and the second smallest SLIV is 15, and the value of the corresponding time domain information is 1.

Table 18

| Value of the time domain information | SLIV | Start | Length |
|---|---|---|---|
| 0 to 12 | 14 to 26 | 0 to 12 | 2 |
| 13 to 24 | 28 to 39 | 0 to 11 | 3 |
| 25 to 35 | 42 to 52 | 0 to 10 | 4 |
| 36 to 44 | 56 to 65 | 0 to 9 | 5 |
| 45 to 53 | 70 to 78 | 0 to 8 | 6 |
| 54 to 61 | 84 to 91 | 0 to 7 | 7 |

Example A7:

If the detection period of the control channel is seven symbols, the correspondence between the value of the time domain information and the SLIV may be at least one shown in Table 19. Based on Table 19, a method for determining, based on the detection period of the control channel, the information indicated by the time domain information is similar to corresponding descriptions in the example A1, and is not described again herein.

If the detection period of the control channel is seven symbols, the SLIV included in the SLIV set may be at least one of SLIVs shown in Table 19, and the correspondence between the value of the time domain information and the SLIV in the SLIV set may be at least one shown in Table 19. Based on Table 19, a method for determining, based on the detection period of the control channel, the information indicated by the time domain information is similar to corresponding descriptions in the example A1, and is not described again herein.

For example, as shown in Table 19, because values of the time domain information are 0 to 63, the quantity of bits of the time domain information may be 6, and the SLIV is indicated by using the 6-bit time domain information. Further, the quantity of bits of the time domain information in the control information may also be greater than 6.

In the method provided by this embodiment of this application, optionally, the correspondence between the value of the time domain information and the SLIV may be: the SLIV indicated by the time domain information is the value of the time domain information plus V2, where V2 is an integer. That is, SLIV indicated by the time domain information=Value (Index) of the time domain information + V2. As shown in the following Table 19, a value of V2 is 28, and SLIV indicated by the time domain information=Value (Index) of the time domain information + 28.

Table 19

| Value of the time domain information | SLIV | Start | Length |
|---|---|---|---|
| 0 to 11 | 28 to 39 | 0 to 11 | 3 |
| 14 to 24 | 42 to 52 | 0 to 10 | 4 |
| 28 to 37 | 56 to 65 | 0 to 9 | 5 |
| 42 to 50 | 70 to 78 | 0 to 8 | 6 |
| 56 to 63 | 84 to 91 | 0 to 7 | 7 |

Example A8:

If the detection period of the control channel is seven symbols, the correspondence between the value of the time domain information and the SLIV may be at least one shown in Table 20(a). Based on Table 20(a), a method for determining, based on the detection period of the control channel, the information indicated by the time domain information is similar to corresponding descriptions in the example A1, and is not described again herein.

If the detection period of the control channel is seven symbols, the SLIV included in the SLIV set may be at least one of SLIVs shown in Table 20(a), and the correspondence between the value of the time domain information and the SLIV in the SLIV set may be at least one shown in Table 20(a). Based on Table 20(a), a method for determining, based on the detection period of the control channel, the information indicated by the time domain information is similar to corresponding descriptions in the example A1, and is not described again herein.

For example, as shown in Table 20(a), because a largest value of the time domain information is 49, the quantity of bits of the time domain information may be 6, and the SLIV is indicated by using the 6-bit time domain information. Further, the quantity of bits of the time domain information in the control information may also be greater than 6.

Table 20(a)

| Value of the time domain information | SLIV | Start | Length |
|---|---|---|---|
| 0 to 11 | 28 to 39 | 0 to 11 | 3 |
| 12 to 22 | 42 to 52 | 0 to 10 | 4 |
| 23 to 32 | 56 to 65 | 0 to 9 | 5 |
| 33 to 41 | 70 to 78 | 0 to 8 | 6 |
| 42 to 49 | 84 to 91 | 0 to 7 | 7 |

Example A8-1:

If the detection period of the control channel is seven symbols or is shorter than a quantity of symbols in a slot, the correspondence between the value of the time domain information and the SLIV may be at least one shown in Table 20(b). Based on Table 20(b), a method for determining, based on the detection period of the control channel, the information indicated by the time domain information is similar to corresponding descriptions in the example A1, and is not described again herein.

If the detection period of the control channel is seven symbols or is shorter than a quantity of symbols in a slot, the SLIV included in the SLIV set may be at least one of SLIVs shown in Table 20(b), and the correspondence between the value of the time domain information and the SLIV in the SLIV set may be at least one shown in Table 20(b). Based on Table 20(b), a method for determining, based on the detection period of the control channel, the information indicated by the time domain information is similar to corresponding descriptions in the example A1, and is not described again herein.

For example, as shown in Table 20(b), because a largest value of the time domain information is 51, the quantity of bits of the time domain information may be 6, and the SLIV is indicated by using the 6-bit time domain information. Further, the quantity of bits of the time domain information in the control information may also be greater than 6.

Table 20(b)

| Value of the time domain information | SLIV | Start | Length |
|---|---|---|---|
| 0 to 12 | 14 to 26 | 0 to 12 | 2 |
| 13 to 23 | 42 to 52 | 0 to 10 | 4 |
| 24 to 33 | 56 to 65 | 0 to 9 | 5 |
| 34 to 42 | 70 to 78 | 0 to 8 | 6 |
| 43 to 50 | 84 to 91 | 0 to 7 | 7 |

If the detection period of the control channel is seven symbols or is shorter than a quantity of symbols in a slot, the correspondence between the value of the time domain information and the SLIV may also be at least one shown in Table 20(c). Based on Table 20(c), a method for determining, based on the detection period of the control channel, the information indicated by the time domain information is similar to corresponding descriptions in the example A1, and is not described again herein.

If the detection period of the control channel is seven symbols or is shorter than a quantity of symbols in a slot, the SLIV included in the SLIV set may also be at least one of SLIVs shown in Table 20(c), and the correspondence between the value of the time domain information and the SLIV in the SLIV set may also be at least one shown in Table 20(c). Based on Table 20(c), a method for determining, based on the detection period of the control channel, the information indicated by the time domain information is similar to corresponding descriptions in the example A1, and is not described again herein.

For example, as shown in Table 20(c), because a largest value of the time domain information is 55, the quantity of bits of the time domain information may be 6, and the SLIV is indicated by using the 6-bit time domain information. Further, the quantity of bits of the time domain information in the control information may also be greater than 6.

Table 20(c)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 37 | 42 to 52 | 0 to 10 | 4 |
| 38 to 46 | 70 to 78 | 0 to 8 | 6 |
| 47 to 54 | 84 to 91 | 0 to 7 | 7 |

Example A9:

If the detection period of the control channel is 14 symbols or is longer than or equal to 1 slot, the correspondence between the value of the time domain information and the SLIV may be at least one shown in Table 21(a). Based on Table 21, a method for determining, based on the detection period of the control channel, the information indicated by the time domain information is similar to corresponding descriptions in the example A1, and is not described again herein.

If the detection period of the control channel is 14 symbols, the SLIV included in the SLIV set may be at least one of SLIVs shown in Table 21(a), and the correspondence between the value of the time domain information and the SLIV in the SLIV set may be at least one shown in Table 21(a). Based on Table 21(a), a method for determining, based on the detection period of the control channel, the information indicated by the time domain information is similar to corresponding descriptions in the example A1, and is not described again herein.

For example, as shown in Table 21(a), because a largest value of the time domain information is 35, the quantity of bits of the time domain information may be 6, and the SLIV is indicated by using the 6-bit time domain information. Further, the quantity of bits of the time domain information in the control information may also be greater than 6.

In the method provided by this embodiment of this application, optionally, the correspondence between the value of the time domain information and the SLIV may be determining the value of the time domain information based on a time domain length corresponding to the SLIV in the SLIV set and a value of a starting time domain position, where the SLIV set includes a SLIV that may be indicated by the time domain information. For example, first based on an ascending order of time domain lengths, and then based on an ascending order of starting time domain positions, a value of corresponding time domain information starts from 0 and increases by $t\_2$ in sequence; or first based on an ascending order of starting time domain positions, and then based on an ascending order of time domain lengths, a value of corresponding time domain information starts from 0 and increases by $t\_2$ in sequence. $t\_2$ is an integer. For example, $t\_2$ is equal to 1. A SLIV in the SLIV set corresponds to a smallest time domain length and a smallest starting time domain position, and a value of time domain information corresponding to the SLIV is 0; a SLIV in the SLIV set corresponds to the smallest time domain length and a second smallest starting time domain position, and a value of time domain information corresponding to the SLIV is 1; ...; a SLIV in the SLIV set corresponds to a second smallest time domain length and the smallest starting time domain position, and a value of time domain information corresponding to the SLIV is i; a SLIV in the SLIV set corresponds to the second smallest time domain length and the second smallest starting time domain position, and a value of time domain information corresponding to the SLIV is i+1; .... The rest may be inferred by analogy. As shown in the following Table 21(a), when the SLIV in the SLIV set is 84, the corresponding first smallest time domain length is 7, and the corresponding first smallest starting time domain position is 0; therefore, the value of the time domain information corresponding to the SLIV is 0. When the SLIV in the SLIV set is 85, the corresponding first smallest time domain length is 7, and the corresponding second smallest starting time domain position is 1; therefore, the value of the time domain information corresponding to the SLIV is 1. The rest may be inferred by analogy.

Table 21(a)

| Value of the time domain information | SLIV | Start | Length |
|---|---|---|---|
| 0 to 7 | 84 to 91 | 0 to 7 | 7 |
| 8 to 14 | 105 to 111 | 0 to 6 | 8 |
| 15 to 20 | 92 to 97 | 0 to 5 | 9 |
| 21 to 25 | 79 to 83 | 0 to 4 | 10 |
| 26 to 29 | 66 to 69 | 0 to 3 | 11 |
| 30 to 32 | 53 to 55 | 0 to 2 | 12 |
| 33 to 34 | 40 to 41 | 0 to 1 | 13 |
| 35 | 27 | 0 | 14 |

If the detection period of the control channel is 14 symbols or is longer than or equal to 1 slot, the correspondence between the value of the time domain information and the SLIV may also be at least one shown in Table 21(b). Based on Table 21(b), a method for determining, based on the detection period of the control channel, the information indicated by the time domain information is similar to corresponding descriptions in the example A1, and is not described again herein.

If the detection period of the control channel is 14 symbols or is longer than or equal to 1 slot, the SLIV included in the SLIV set may also be at least one of SLIVs shown in Table 21(b), and the correspondence between the value of the time domain information and the SLIV in the SLIV set may also be at least one shown in Table 21-1. Based on Table 21(b), a method for determining, based on the detection period of the control channel, the information indicated by the time domain information is similar to corresponding descriptions in the example A1, and is not described again herein.

For example, as shown in Table 21(b), because a largest value of the time domain information is 47, the quantity of bits of the time domain information may be 6, and the SLIV is indicated by using the 6-bit time domain information. Further, the quantity of bits of the time domain information in the control information may also be greater than 6.

Table 21(b)

| Value of the time domain information | SLIV | Start | Length |
|---|---|---|---|
| 0 to 12 | 14 to 26 | 0 to 12 | 2 |
| 13 to 23 | 42 to 52 | 0 to 10 | 4 |
| 24 to 31 | 84 to 91 | 0 to 7 | 7 |
| 32 to 38 | 105 to 111 | 0 to 6 | 8 |
| 39 to 43 | 79 to 83 | 0 to 4 | 10 |
| 44 to 46 | 53 to 55 | 0 to 2 | 12 |
| 47 | 27 | 0 | 14 |

Optionally, the determining the time domain information in the control information based on the time domain position in which the control channel is located or based on the time domain position in which the detected control channel is located includes: determining, based on the time domain position in which the control channel is located or based on the time domain position in which the detected control channel is located, the information indicated by the time domain information. Optionally, the time domain information may be used to indicate the SLIV.

Optionally, when the information indicated by the time domain information is determined based on the time domain position in which the control channel is located or based on the time domain position in which the detected control channel is located, the correspondence between the value of the time domain information and the SLIV may be determined based on the time domain position in which the control channel is located or based on the time domain position in which the detected control channel is located, and the SLIV indicated by the time domain information may be determined based on the value of the time domain information and the correspondence between the value of the time domain information and the SLIV. When the correspondence between the value of the time domain information and the SLIV is determined based on the time domain position in which the control channel is located or based on the time domain position in which the detected control channel is located, the correspondence may be determined based on a preconfiguration, or may be determined based on signaling sent by the base station. This is not limited in this application.

Optionally, when the information indicated by the time domain information is determined based on the time domain position in which the control channel is located or based on the time domain position in which the detected control channel is located, the SLIV set may also be determined based on the time domain position in which the control channel is located or based on the time domain position in which the detected control channel is located, and the SLIV is determined based on the time domain information, where the SLIV is included in the SLIV set. When the SLIV is determined based on the time domain information, the SLIV may be determined based on the value of the time domain information and the correspondence between the value of the time domain information and the SLIV in the SLIV set. The correspondence between the value of the time domain information and the SLIV in the SLIV set may be preconfigured, or may be notified by the base station to the UE by using signaling. This is not limited in this application. When the SLIV set is determined based on the time domain position in which the control channel is located or based on the time domain position in which the detected control channel is located, the SLIV set may be determined based on a preconfiguration, or may be determined based on signaling sent by the base station. This is not limited in this application.

Optionally, when the information indicated by the time domain information is determined based on the time domain position in which the control channel is located or based on the time domain position in which the detected control channel is located, the SLIV set and the correspondence between the value of the time domain information and the SLIV in the SLIV set may also be determined based on the time domain position in which the control channel is located or based on the time domain position in which the detected control channel is located; and the SLIV is determined based on the time domain information, where the SLIV is included in the SLIV set. When the SLIV is determined based on the time domain information, the SLIV may be determined based on the value of the time domain information and the correspondence between the value of the time domain information and the SLIV in the SLIV set. When the SLIV set and the correspondence between the value of the time domain information and the SLIV in the SLIV set are determined based on the time domain position in which the control channel is located or based on the time domain position in which the detected control channel is located, the SLIV set and the correspondence may be determined based on a preconfiguration, or may be determined based on signaling sent by the base station. This is not limited in this application.

Optionally, the SLIV set may be determined based on the starting time domain position set and the time domain length set. The SLIV in the SLIV set may be determined based on the starting time domain position in the starting time domain position set and the time domain length in the time domain length set. In this case, determining the SLIV set based on the time domain position in which the control channel is located or based on the time domain position in which the detected control channel is located may also be understood as: determining the starting time domain position set and the time domain length set based on the time domain position in which the control channel is located or based on the time domain position in which the detected control channel is located; determining the SLIV based on the value of the time domain information and the correspondence between the value of the time domain information and the SLIV in the SLIV set may also be understood as: determining the time domain length based on the value of the time domain information and the correspondence between the value of the time domain information and the time domain length in the time domain length set, and determining the starting time domain position based on the value of the time domain information and the correspondence between the value of the time domain information and the starting time domain position in the starting time domain position set.

In the method provided by this embodiment of this application, optionally, when the SLIV set is determined based on the time domain position in which the control channel is located or based on the time domain position in which the detected control channel is located, the SLIV set may be determined based on an identifier of a fourth time unit in which the control channel is located or based on an identifier of a fourth time unit in which the detected control channel is located. For example, in an example in which the fourth time unit is a symbol, if an identifier of a symbol on which the control channel is located or an identifier of a symbol on which the detected control channel is located is Test_2, the starting time domain position corresponding to the SLIV in the SLIV set may be at least one of Test_2 to $N\_1$, at least one of Test_2-1 to $N\_1$, at least one of Test_2-2 to $N\_1$, or at least one of max(Test_2, 0) to $N\_1$; and the time domain length corresponding to the SLIV in the SLIV set is at least one of 1 symbol to $N\_1$-Test_2 symbols, at least one of 1 symbol to $N\_1$-Test_2+1 symbols, at least one of 1 symbol to $N\_1$-Test_2-1 symbols, or at least one of 1 symbol to min($N\_1$-Test_2, $N\_1$) symbols. $N\_1$ is a quantity of symbols included in a slot.

Example B1:

If a symbol on which the control channel is located or a symbol on which the detected control channel is located is a first symbol in a slot, or if an identifier of a symbol on which the control channel is located or an identifier of a symbol on which the detected control channel is located is 0, the correspondence between the value of the time domain information and the SLIV may be at least one shown in Table 22. The SLIV indicated by the time domain information in the control information may be determined based on the value of the time domain information and the correspondence between the value of the time domain information and the SLIV. For example, if the time domain information in the control information is 9, based on the correspondence between the value of the time domain information and the SLIV shown in Table 22, it may be determined that the SLIV indicated by the time domain information in the control information is 106, corresponding start is 1, and length is 8.

If a symbol on which the control channel is located or a symbol on which the detected control channel is located is a first symbol in a slot, or if an identifier of a symbol on which the control channel is located or an identifier of a symbol on which the detected control channel is located is 0, the SLIV set may be determined based on the symbol on which the control channel is located or the symbol on which the detected control channel is located, and the SLIV is determined based on the time domain information, where the SLIV is included in the SLIV set. The SLIV set includes at least one of SLIVs shown in Table 22. For example, start corresponding to any SLIV in the SLIV set is one of 0 to 7, and length corresponding to any SLIV in the SLIV set is one of 7 to 14. This may also be described as "a start set corresponding to the SLIV set is {0 to 7}, and a length set is {7 to 14}". The correspondence between the value of the time domain information and the SLIV in the SLIV set may be at least one shown in Table 22. The SLIV indicated by the time domain information in the control information may be determined based on the value of the time domain information and the correspondence between the value of the time domain information and the SLIV in the SLIV set.

If a symbol on which the control channel is located or a symbol on which the detected control channel is located is a first symbol in a slot, or if an identifier of a symbol on which the control channel is located or an identifier of a symbol on which the detected control channel is located is 0, the SLIV set and the correspondence between the value of the time domain information and the SLIV in the SLIV set may be determined based on the symbol on which the control channel is located or the symbol on which the detected control channel is located. The SLIV set includes at least one of SLIVs shown in Table 22. For example, start corresponding to any SLIV in the SLIV set may be one of 0 to 7, and length corresponding to any SLIV in the SLIV set may be one of 7 to 14. This may also be described as "a start set corresponding to the SLIV set may be {0 to 7}, and a length set may be {7 to 14}". The correspondence between the value of the time domain information and the SLIV in the SLIV set is at least one shown in Table 22. The SLIV indicated by the time domain information may be determined based on the value of the time domain information and the correspondence between the value of the time domain information and the SLIV in the SLIV set.

Optionally, as shown in Table 22, because the SLIV indicated by the time domain information has 36 values, the quantity of bits of the time domain information may be 6, and the SLIV is indicated by using the 6-bit time domain information. Further, the quantity of bits of the time domain information in the control information may also be greater than 6.

Table 22

| Value of the time domain information | SLIV | Start | Length |
|---|---|---|---|
| 0 to 7 | 84 to 91 | 0 to 7 | 7 |
| 8 to 14 | 105 to 111 | 0 to 6 | 8 |
| 15 to 20 | 92 to 97 | 0 to 5 | 9 |
| 21 to 25 | 79 to 83 | 0 to 4 | 10 |
| 26 to 29 | 66 to 69 | 0 to 3 | 11 |
| 30 to 32 | 53 to 55 | 0 to 2 | 12 |
| 33 to 34 | 40 to 41 | 0 to 1 | 13 |
| 35 | 27 | 0 | 14 |

Example B2:

If a symbol on which the control channel is located or a symbol on which the detected control channel is located is a first symbol in a slot, or if an identifier of a symbol on which the control channel is located or an identifier of a symbol on which the detected control channel is located is 0, the correspondence between the value of the time domain information and the SLIV may be at least one shown in Table 23(a). Based on Table 23(a), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a first symbol in a slot, or if an identifier of a symbol on which the control channel is located or an identifier of a symbol on which the detected control channel is located is 0, the SLIV included in the SLIV set may be at least one of SLIVs shown in Table 23(a), and the correspondence between the value of the time domain information and the SLIV in the SLIV set may be at least one shown in Table 23(a). Based on Table 23(a), a method for determining, based on the time domain position in which the control channel is located or based on the time domain position in which the detected control channel is located, the information indicated by the time domain information is similar to corresponding descriptions in the example B1, and is not described again herein.

Table 23(a)

| Value of the time domain information | SLIV | Start | Length |
|---|---|---|---|
| 0 to 7 | 84 to 91 | 0 to 7 | 7 |
| 8 to 14 | 105 to 111 | 0 to 6 | 8 |
| 15 to 20 | 92 to 97 | 0 to 5 | 9 |
| 21 to 25 | 79 to 83 | 0 to 4 | 10 |
| 26 to 29 | 66 to 69 | 0 to 3 | 11 |
| 30 to 32 | 53 to 55 | 0 to 2 | 12 |
| 33 to 34 | 40 to 41 | 0 to 1 | 13 |

If a symbol on which the control channel is located or a symbol on which the detected control channel is located is a first symbol in a slot, or if an identifier of a symbol on which the control channel is located or an identifier of a symbol on which the detected control channel is located is 0, the correspondence between the value of the time domain information and the SLIV may also be at least one shown in Table 23(b). Based on Table 23(b), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a first symbol in a slot, or if an identifier of a symbol on which the control channel is located or an identifier of a symbol on which the detected control channel is located is 0, the SLIV included in the SLIV set may also be at least one of SLIVs shown in Table 23(b), and the correspondence between the value of the time domain information and the SLIV in the SLIV set may also be at least one shown in Table 23(b). Based on Table 23(b), a method for determining, based on the time domain position in which the control channel is located or based on the time domain position in which the detected control channel is located, the information indicated by the time domain information is similar to corresponding descriptions in the example B1, and is not described again herein.

Table 23(b)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 37 | 42 to 52 | 0 to 10 | 4 |
| 38 to 45 | 84 to 91 | 0 to 7 | 7 |
| 46 to 52 | 105 to 111 | 0 to 6 | 8 |
| 53 to 57 | 79 to 83 | 0 to 4 | 10 |
| 58 to 60 | 53 to 55 | 0 to 2 | 12 |
| 61 to 62 | 40 to 41 | 0 to 1 | 13 |

Example B3:

If a symbol on which the control channel is located or a symbol on which the detected control channel is located is a second symbol in a slot, or if an identifier of a symbol on which the control channel is located or an identifier of a symbol on which the detected control channel is located is 1, the correspondence between the value of the time domain information and the SLIV may be at least one shown in Table 24(a). Based on Table 24(a), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a second symbol in a slot, or if an identifier of a symbol on which the control channel is located or an identifier of a symbol on which the detected control channel is located is 1, the SLIV included in the SLIV set may be at least one of SLIVs shown in Table 24(a), and the correspondence between the value of the time domain information and the SLIV in the SLIV set may be at least one shown in Table 24(a). Based on Table 24(a), a method for determining, based on the time domain position in which the control channel is located or based on the time domain position in which the detected control channel is located, the information indicated by the time domain information is similar to corresponding descriptions in the example B1, and is not described again herein.

Table 24(a)

| Value of the time domain information | SLIV | Start | Length |
|---|---|---|---|
| 0 to 7 | 84 to 91 | 0 to 7 | 7 |
| 8 to 14 | 105 to 111 | 0 to 6 | 8 |
| 15 to 20 | 92 to 97 | 0 to 5 | 9 |
| 21 to 25 | 79 to 83 | 0 to 4 | 10 |
| 26 to 29 | 66 to 69 | 0 to 3 | 11 |
| 30 to 32 | 53 to 55 | 0 to 2 | 12 |
| 33 to 34 | 40 to 41 | 0 to 1 | 13 |
| 35 | 27 | 0 | 14 |

If a symbol on which the control channel is located or a symbol on which the detected control channel is located is a second symbol in a slot, or if an identifier of a symbol on which the control channel is located or an identifier of a symbol on which the detected control channel is located is 1, the correspondence between the value of the time domain information and the SLIV may also be at least one shown in Table 24(b). Based on Table 24(b), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a second symbol in a slot, or if an identifier of a symbol on which the control channel is located or an identifier of a symbol on which the detected control channel is located is 1, the SLIV included in the SLIV set may also be at least one of SLIVs shown in Table 24(b), and the correspondence between the value of the time domain information and the SLIV in the SLIV set may also be at least one shown in Table 24(b). Based on Table 24(b), a method for determining, based on the time domain position in which the control channel is located or based on the time domain position in which the detected control channel is located, the information indicated by the time domain information is similar to corresponding descriptions in the example B1, and is not described again herein.

Table 24(b)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 37 | 42 to 52 | 0 to 10 | 4 |
| 38 to 45 | 84 to 91 | 0 to 7 | 7 |
| 46 to 50 | 79 to 83 | 0 to 4 | 10 |
| 51 to 54 | 66 to 69 | 0 to 3 | 11 |
| 55 to 57 | 53 to 55 | 0 to 2 | 12 |
| 58 | 27 | 0 | 14 |

Example B4:

If a symbol on which the control channel is located or a symbol on which the detected control channel is located is a second symbol in a slot, or if an identifier of a symbol on which the control channel is located or an identifier of a symbol on which the detected control channel is located is 1, the correspondence between the value of the time domain information and the SLIV may be at least one shown in Table 25. Based on Table 25, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a second symbol in a slot, or if an identifier of a symbol on which the control channel is located or an identifier of a symbol on which the detected control channel is located is 1, the SLIV included in the SLIV set may be at least one of SLIVs shown in Table 25, and the correspondence between the value of the time domain information and the SLIV in the SLIV set may be at least one shown in Table 25. Based on Table 25, a method for determining, based on the time domain position in which the control channel is located or based on the time domain position in which the detected control channel is located, the information indicated by the time domain information is similar to corresponding descriptions in the example B1, and is not described again herein.

Table 25

| Value of the time domain information | SLIV | Start | Length |
|---|---|---|---|
| 0 to 6 | 85 to 91 | 1 to 7 | 7 |
| 7 to 12 | 106 to 111 | 1 to 6 | 8 |
| 13 to 17 | 93 to 97 | 1 to 5 | 9 |
| 18 to 21 | 80 to 83 | 1 to 4 | 10 |
| 22 to 24 | 67 to 69 | 1 to 3 | 11 |
| 25 to 26 | 54 to 55 | 1 to 2 | 12 |
| 27 | 41 | 1 | 13 |

Example B5:

If a symbol on which the control channel is located or a symbol on which the detected control channel is located is a second symbol in a slot, or if an identifier of a symbol on which the control channel is located or an identifier of a symbol on which the detected control channel is located is 1, the correspondence between the value of the time domain information and the SLIV may be at least one shown in Table 26. Based on Table 26, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a second symbol in a slot, or if an identifier of a symbol on which the control channel is located or an identifier of a symbol on which the detected control channel is located is 1, the SLIV included in the SLIV set may be at least one of SLIVs shown in Table 26, and the correspondence between the value of the time domain information and the SLIV in the SLIV set may be at least one shown in Table 26. Based on Table 26, a method for determining, based on the time domain position in which the control channel is located or based on the time domain position in which the detected control channel is located, the information indicated by the time domain information is similar to corresponding descriptions in the example B1, and is not described again herein.

Table 26

| Value of the time domain information | SLIV | Start | Length |
|---|---|---|---|
| 0 to 5 | 86 to 91 | 2 to 7 | 7 |
| 6 to 10 | 107 to 111 | 2 to 6 | 8 |
| 11 to 14 | 94 to 97 | 2 to 5 | 9 |

(continued)

| Value of the time domain information | SLIV | Start | Length |
|---|---|---|---|
| 15 to 17 | 81 to 83 | 2 to 4 | 10 |
| 18 to 19 | 68 to 69 | 2 to 3 | 11 |
| 20 | 55 | 2 | 12 |

Example B6:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 27. Based on Table 27, a method for determining, based on the time domain position in which the control channel is located or based on the time domain position in which the detected control channel is located, the information indicated by the time domain information is similar to corresponding descriptions in the example B1, and is not described again herein. If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 27, and the correspondence between the value of the time domain information and the SLIV in the SLIV set may be at least one shown in Table 27. Based on Table 27, a method for determining, based on the time domain position in which the control channel is located or based on the time domain position in which the detected control channel is located, the information indicated by the time domain information is similar to corresponding descriptions in the example B1, and is not described again herein.

Table 27

| Value of the time domain information | SLIV | Start | Length |
|---|---|---|---|
| 0 to 6 | 7 to 13 | 7 to 13 | 1 |
| 7 to 12 | 21 to 26 | 7 to 12 | 2 |
| 13 to 17 | 35 to 39 | 7 to 11 | 3 |
| 18 to 21 | 49 to 52 | 7 to 10 | 4 |
| 22 to 24 | 63 to 65 | 7 to 9 | 5 |
| 25 to 26 | 77 to 78 | 7 to 8 | 6 |
| 27 | 91 | 7 | 7 |

Example B7:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 28. Based on Table 28, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 28, and the correspondence between the value of the time domain information and the SLIV in the SLIV set may be at least one shown in Table 28. Based on Table 28, a method for determining, based on the time domain position in which the control channel is located or based on the time domain position in which the detected control channel is located, the information indicated by the time domain information is similar to corresponding descriptions in the example B1, and is not described again herein.

Table 28

| Value of the time domain information | SLIV | Start | Length |
|---|---|---|---|
| 0 to 7 | 6 to 13 | 6 to 13 | 1 |
| 8 to 14 | 20 to 26 | 6 to 12 | 2 |
| 15 to 20 | 34 to 39 | 6 to 11 | 3 |
| 21 to 25 | 48 to 52 | 6 to 10 | 4 |
| 26 to 29 | 62 to 65 | 6 to 9 | 5 |
| 30 to 32 | 76 to 78 | 6 to 8 | 6 |
| 33 to 34 | 90 to 91 | 6 to 7 | 7 |
| 35 | 111 | 6 | 8 |

Example B8:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 29. Based on Table 29, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 29, and the correspondence between the value of the time domain information and the SLIV in the SLIV set may be at least one shown in Table 29. Based on Table 29, a method for determining, based on the time domain position in which the control channel is located or based on the time domain position in which the detected control channel is located, the information indicated by the time domain information is similar to corresponding descriptions in the example B1, and is not described again herein.

Table 29

| Value of the time domain information | SLIV | Start | Length |
|---|---|---|---|
| 0 to 5 | 21 to 26 | 7 to 12 | 2 |
| 6 to 10 | 35 to 39 | 7 to 11 | 3 |
| 11 to 14 | 49 to 52 | 7 to 10 | 4 |
| 15 to 17 | 63 to 65 | 7 to 9 | 5 |
| 18 to 19 | 77 to 78 | 7 to 8 | 6 |
| 20 | 91 | 7 | 7 |

Example B9:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 30. Based on Table 30, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 30, and the correspondence between the value of the time domain information and the SLIV in the SLIV set may be at least one shown in Table 30. Based on Table 30, a method for determining, based on the time domain position in which the control channel is located or based on the time domain position in which the detected control channel is located, the information indicated by the time domain information is similar to corresponding descriptions in the example B1, and is not described again herein.

Table 30

| Value of the time domain information | SLIV | Start | Length |
|---|---|---|---|
| 0 to 4 | 20 to 26 | 6 to 12 | 2 |
| 5 to 10 | 34 to 39 | 6 to 11 | 3 |
| 11 to 15 | 48 to 52 | 6 to 10 | 4 |
| 16 to 19 | 62 to 65 | 6 to 9 | 5 |
| 20 to 22 | 76 to 78 | 6 to 8 | 6 |
| 23 to 24 | 90 to 91 | 6 to 7 | 7 |
| 25 | 111 | 6 | 8 |

Example B10:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 31. Based on Table 31, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 31, and the correspondence between the value of the time domain information and the SLIV in the SLIV set may be at least one shown in Table 31. Based on Table 31, a method for determining, based on the time domain position in which the control channel is located or based on the time domain position in which the detected control channel is located, the information indicated by the time domain information is similar to corresponding descriptions in the example B1, and is not described again herein.

Table 31

| Value of the time domain information | SLIV | Start | Length |
|---|---|---|---|
| 0 to 4 | 35 to 39 | 7 to 11 | 3 |
| 5 to 8 | 49 to 52 | 7 to 10 | 4 |
| 9 to 11 | 63 to 65 | 7 to 9 | 5 |
| 12 to 13 | 77 to 78 | 7 to 8 | 6 |
| 14 | 91 | 7 | 7 |

Example B 11:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 32. Based on Table 32, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 32, and the correspondence between the value of the time domain information and the SLIV in the SLIV set may be at least one shown in Table 32. Based on Table 32, a method for determining, based on the time domain position in which the control channel is located or based on the time domain position in which the detected control channel is located, the information indicated by the time domain information is similar to corresponding descriptions in the example B1, and is not described again herein.

Table 32

| Value of the time domain information | SLIV | Start | Length |
|---|---|---|---|
| 0 to 5 | 34 to 39 | 6 to 11 | 3 |
| 6 to 10 | 48 to 52 | 6 to 10 | 4 |
| 11 to 14 | 62 to 65 | 6 to 9 | 5 |
| 15 to 17 | 76 to 78 | 6 to 8 | 6 |
| 18 to 19 | 90 to 91 | 6 to 7 | 7 |
| 20 | 111 | 6 | 8 |

Example B12:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 33(a). Based on Table 33(a), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 33(a), and the correspondence between the value of the time domain information and the SLIV in the SLIV set may be at least one shown in Table 33(a). Based on Table 33(a), a method for determining, based on the time domain position in which the control channel is located or based on the time domain position in which the detected control channel is located, the information indicated by the time domain information is similar to corresponding descriptions in the example B1, and is not described again herein.

For example, based on Table 33(a), when values of the time domain information in the control information are 0 to 13, SLIV values indicated by the values of the time domain information are 0 to 13 respectively, corresponding start is 0 to 13 respectively, and length is 1. When values of the time domain information in the control information are 14 to 26, SLIV values indicated by the time domain information are 14 to 26 respectively, corresponding start is 0 to 12 respectively, and length is 2. When values of the time domain information in the control information are 27 to 38, SLIV values indicated by the time domain information are 28 to 39 respectively, corresponding start is 0 to 11 respectively, and length is 3. When values of the time domain information in the control information are 39 to 49, SLIV values indicated by the time domain information are 42 to 52 respectively, corresponding start is 0 to 10 respectively, and length is 4. When values of the time domain information in the control information are 50 to 59, SLIV values indicated by the time domain information are 56 to 65 respectively, corresponding start is 0 to 9 respectively, and length is 5. When values of the time domain information in the control information are 60 to 68, SLIV values indicated by the time domain information are 70 to 78 respectively, corresponding start is 0 to 8 respectively, and length is 6. When values of the time domain information in the control information are 69 to 76, SLIV values indicated by the time domain information are 84 to 91 respectively, corresponding start is 0 to 7 respectively, and length is 7.

Table 33(a)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 38 | 28 to 39 | 0 to 11 | 3 |
| 39 to 49 | 42 to 52 | 0 to 10 | 4 |
| 50 to 59 | 56 to 65 | 0 to 9 | 5 |
| 60 to 68 | 70 to 78 | 0 to 8 | 6 |
| 69 to 76 | 84 to 91 | 0 to 7 | 7 |

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may also be at least one shown in Table 33(b). Based on Table 33(b), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may also be at least one of SLIVs shown in Table 33(b), and the correspondence between the value of the time domain information and the SLIV in the SLIV set may also be at least one shown in Table 33(b). Based on Table 33(b), a method for determining, based on the time domain position in which the control channel is located or based on the time domain position in which the detected control channel is located, the information indicated by the time domain information is similar to corresponding descriptions in the example B1, and is not described again herein.

Table 33(b)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 37 | 42 to 52 | 0 to 10 | 4 |
| 38 to 46 | 70 to 78 | 0 to 8 | 6 |
| 47 to 51 | 84 to 91 | 0 to 7 | 7 |

Example B13:

If a symbol on which the control channel is located or a symbol on which the detected control channel is located is a seventh symbol in a slot, or if an identifier of a symbol on which the control channel is located or an identifier of a symbol on which the detected control channel is located is 6, the correspondence between the value of the time domain information and the SLIV may be at least one shown in Table 34. Based on Table 34, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a seventh symbol in a slot, or if an identifier of a symbol on which the control channel is located or an identifier of a symbol on which the detected control channel is located is 6, the SLIV included in the SLIV set may be at least one of SLIVs shown in Table 34, and the correspondence between the value of the time domain information and the SLIV in the SLIV set may be at least one shown in Table 34. Based on Table 34, a method for determining, based on the time domain position in which the control channel is located or based on the time domain position in which the detected control channel is located, the information indicated by the time domain information is similar to corresponding descriptions in the example B1, and is not described again herein.

For example, based on Table 34, when values of the time domain information in the control information are 0 to 6, SLIV values indicated by the time domain information are 7 to 13 respectively, corresponding start is 7 to 13 respectively, and length is 1. When values of the time domain information in the control information are 7 to 12, SLIV values indicated by the time domain information are 21 to 26 respectively, corresponding start is 7 to 12 respectively, and length is 2. When values of the time domain information in the control information are 13 to 17, SLIV values indicated by the time domain information are 35 to 39 respectively, corresponding start is 7 to 11 respectively, and length is 3. When values of the time domain information in the control information are 18 to 21, SLIV values indicated by the time domain information are 49 to 52 respectively, corresponding start is 7 to 10 respectively, and length is 4. When values of the time domain information in the control information are 22 to 24, SLIV values indicated by the time domain information are 63 to 65 respectively, corresponding start is 7 to 9 respectively, and length is 5. When values of the time domain information in the control information are 25 to 26, SLIV values indicated by the time domain information are 77 to 78 respectively, corresponding start is 7 to 8 respectively, and length is 6. When the value of the time domain information in the control information is 27, a SLIV value indicated by the time domain information is 91, corresponding start is 7, and length is 7.

Table 34

| Value of the time domain information | SLIV | Start | Length |
| --- | --- | --- | --- |
| 0 to 6 | 7 to 13 | 7 to 13 | 1 |
| 7 to 12 | 21 to 26 | 7 to 12 | 2 |
| 13 to 17 | 35 to 39 | 7 to 11 | 3 |
| 18 to 21 | 49 to 52 | 7 to 10 | 4 |
| 22 to 24 | 63 to 65 | 7 to 9 | 5 |
| 25 to 26 | 77 to 78 | 7 to 8 | 6 |
| 27 | 91 | 7 | 7 |

Example B14:

If a symbol on which the control channel is located or a symbol on which the detected control channel is located is a tenth symbol in a slot, or if an identifier of a symbol on which the control channel is located or an identifier of a symbol on which the detected control channel is located is 9, the correspondence between the value of the time domain information and the SLIV may be at least one shown in Table 35. Based on Table 35, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a tenth symbol in a slot, or if an identifier of a symbol on which the control channel is located or an identifier of a symbol on which the detected control channel is located is 9, the SLIV included in the SLIV set may be at least one of SLIVs shown in Table 35, and the correspondence between the value of the time domain information and the SLIV in the SLIV set may be at least one shown in Table 35. Based on Table 35, a method for determining, based on the time domain position in which the control channel is located or based on the time domain position in which the detected control channel is located, the information indicated by the time domain information is similar to corresponding descriptions in the example B1, and is not described again herein.

Table 35

| Value of the time domain information | SLIV | Start | Length |
| --- | --- | --- | --- |
| 0 to 3 | 10 to 13 | 10 to 13 | 1 |
| 4 to 6 | 24 to 26 | 10 to 12 | 2 |
| 7 to 8 | 38 to 39 | 10 to 11 | 3 |
| 9 | 52 | 10 | 4 |

Example B15:

If a symbol on which the control channel is located or a symbol on which the detected control channel is located is a tenth symbol in a slot, or if an identifier of a symbol on which the control channel is located or an identifier of a symbol on which the detected control channel is located is 9, the correspondence between the value of the time domain information and the SLIV may be at least one shown in Table 36. Based on Table 36, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a tenth symbol in a slot, or if an identifier of a symbol on which the control channel is located or an identifier of a symbol on which the detected control channel is located is 9, the SLIV included in the SLIV set may be at least one of SLIVs shown in Table 36, and the correspondence between the value of the time domain information and the SLIV in the SLIV set may be at least one shown in Table 36. Based on Table 36, a method for determining, based on the time domain position in which the control channel is located or based on the time domain position in which the detected control channel is located, the information indicated by the time domain information is similar to corresponding descriptions in the example B1, and is not described again herein.

Table 36

| Value of the time domain information | SLIV | Start | Length |
|---|---|---|---|
| 0 to 4 | 9 to 13 | 9 to 13 | 1 |
| 5 to 8 | 23 to 26 | 9 to 12 | 2 |
| 9 to 11 | 37 to 39 | 9 to 11 | 3 |
| 12 to 13 | 51 to 52 | 9 to 10 | 4 |
| 14 | 65 | 9 | 5 |

Example B16:

If a symbol on which the control channel is located or a symbol on which the detected control channel is located is a tenth symbol in a slot, or if an identifier of a symbol on which the control channel is located or an identifier of a symbol on which the detected control channel is located is 9, the correspondence between the value of the time domain information and the SLIV may be at least one shown in Table 37. Based on Table 37, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a tenth symbol in a slot, or if an identifier of a symbol on which the control channel is located or an identifier of a symbol on which the detected control channel is located is 9, the SLIV included in the SLIV set may be at least one of SLIVs shown in Table 37, and the correspondence between the value of the time domain information and the SLIV in the SLIV set may be at least one shown in Table 37. Based on Table 37, a method for determining, based on the time domain position in which the control channel is located or based on the time domain position in which the detected control channel is located, the information indicated by the time domain information is similar to corresponding descriptions in the example B1, and is not described again herein.

Table 37

| Value of the time domain information | SLIV | Start | Length |
|---|---|---|---|
| 0 to 5 | 8 to 13 | 8 to 13 | 1 |
| 6 to 10 | 22 to 26 | 8 to 12 | 2 |
| 11 to 14 | 36 to 39 | 8 to 11 | 3 |
| 15 to 17 | 50 to 52 | 8 to 10 | 4 |
| 18 to 19 | 64 to 65 | 8 to 9 | 5 |

(continued)

| Value of the time domain information | SLIV | Start | Length |
|---|---|---|---|
| 20 | 111 | 8 | 6 |

Example B17:

If a symbol on which the control channel is located or a symbol on which the detected control channel is located is a tenth symbol in a slot, or if an identifier of a symbol on which the control channel is located or an identifier of a symbol on which the detected control channel is located is 9, the correspondence between the value of the time domain information and the SLIV may be at least one shown in Table 38(a). Based on Table 38(a), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a tenth symbol in a slot, or if an identifier of a symbol on which the control channel is located or an identifier of a symbol on which the detected control channel is located is 9, the SLIV included in the SLIV set may be at least one of SLIVs shown in Table 38(a), and the correspondence between the value of the time domain information and the SLIV in the SLIV set may be at least one shown in Table 38(a). Based on Table 38(a), a method for determining, based on the time domain position in which the control channel is located or based on the time domain position in which the detected control channel is located, the information indicated by the time domain information is similar to corresponding descriptions in the example B1, and is not described again herein.

Table 38(a)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 38 | 28 to 39 | 0 to 11 | 3 |
| 39 to 49 | 42 to 52 | 0 to 10 | 4 |
| 50 to 59 | 56 to 65 | 0 to 9 | 5 |
| 60 to 68 | 70 to 78 | 0 to 8 | 6 |

If a symbol on which the control channel is located or a symbol on which the detected control channel is located is a tenth symbol in a slot, or if an identifier of a symbol on which the control channel is located or an identifier of a symbol on which the detected control channel is located is 9, the correspondence between the value of the time domain information and the SLIV may also be at least one shown in Table 38(b). Based on Table 38(b), a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a tenth symbol in a slot, or if an identifier of a symbol on which the control channel is located or an identifier of a symbol on which the detected control channel is located is 9, the SLIV included in the SLIV set may also be at least one of SLIVs shown in Table 38(b), and the correspondence between the value of the time domain information and the SLIV in the SLIV set may also be at least one shown in Table 38(b). Based on Table 38(b), a method for determining, based on the time domain position in which the control channel is located or based on the time domain position in which the detected control channel is located, the information indicated by the time domain information is similar to corresponding descriptions in the example B1, and is not described again herein.

Table 38(b)

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |

(continued)

| Value of the time domain information | SLIV | Start | Length |
|---|---|---|---|
| 27 to 37 | 42 to 52 | 0 to 10 | 4 |
| 38 to 47 | 56 to 65 | 0 to 9 | 5 |
| 48 to 56 | 70 to 78 | 0 to 8 | 6 |

Example B18:

If a symbol on which the control channel is located or a symbol on which the detected control channel is located is a tenth symbol in a slot, or if an identifier of a symbol on which the control channel is located or an identifier of a symbol on which the detected control channel is located is 9, the correspondence between the value of the time domain information and the SLIV may be at least one shown in Table 39. Based on Table 39, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a tenth symbol in a slot, or if an identifier of a symbol on which the control channel is located or an identifier of a symbol on which the detected control channel is located is 9, the SLIV included in the SLIV set may be at least one of SLIVs shown in Table 39, and the correspondence between the value of the time domain information and the SLIV in the SLIV set may be at least one shown in Table 39. Based on Table 39, a method for determining, based on the time domain position in which the control channel is located or based on the time domain position in which the detected control channel is located, the information indicated by the time domain information is similar to corresponding descriptions in the example B1, and is not described again herein.

Table 39

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 28 to 39 | 28 to 39 | 0 to 11 | 3 |
| 42 to 52 | 42 to 52 | 0 to 10 | 4 |
| 56 to 65 | 56 to 65 | 0 to 9 | 5 |
| 70 to 78 | 70 to 78 | 0 to 8 | 6 |

Example B19:

If a symbol on which the control channel is located or a symbol on which the detected control channel is located is a twelfth symbol in a slot, or if an identifier of a symbol on which the control channel is located or an identifier of a symbol on which the detected control channel is located is 11, the correspondence between the value of the time domain information and the SLIV may be at least one shown in Table 40. Based on Table 40, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a twelfth symbol in a slot, or if an identifier of a symbol on which the control channel is located or an identifier of a symbol on which the detected control channel is located is 11, the SLIV included in the SLIV set may be at least one of SLIVs shown in Table 40, and the correspondence between the value of the time domain information and the SLIV in the SLIV set may be at least one shown in Table 40. Based on Table 40, a method for determining, based on the time domain position in which the control channel is located or based on the time domain position in which the detected control channel is located, the information indicated by the time domain information is similar to corresponding descriptions in the example B1, and is not described again herein.

Table 40

| Value of the time domain information | SLIV | Start | Length |
|---|---|---|---|
| 0 to 1 | 12 to 13 | 12 to 13 | 1 |
| 2 | 26 | 12 | 2 |

Alternatively, if a symbol on which the control channel is located or a symbol on which the detected control channel is located is a twelfth symbol in a slot, or if an identifier of a symbol on which the control channel is located or an identifier of a symbol on which the detected control channel is located is 11, the correspondence is Table 41. A specific method for using the correspondence is similar to the descriptions corresponding to Table 40. Details are not described again herein.

Table 41

| Value of the time domain information | SLIV | Start | Length |
|---|---|---|---|
| 12 to 13 | 12 to 13 | 12 to 13 | 1 |
| 26 | 26 | 12 | 2 |

Example B20:

If a symbol on which the control channel is located or a symbol on which the detected control channel is located is a twelfth symbol in a slot, or if an identifier of a symbol on which the control channel is located or an identifier of a symbol on which the detected control channel is located is 11, the correspondence between the value of the time domain information and the SLIV may be at least one shown in Table 42. Based on Table 42, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a twelfth symbol in a slot, or if an identifier of a symbol on which the control channel is located or an identifier of a symbol on which the detected control channel is located is 11, the SLIV included in the SLIV set may be at least one of SLIVs shown in Table 42, and the correspondence between the value of the time domain information and the SLIV in the SLIV set may be at least one shown in Table 42. Based on Table 42, a method for determining, based on the time domain position in which the control channel is located or based on the time domain position in which the detected control channel is located, the information indicated by the time domain information is similar to corresponding descriptions in the example B1, and is not described again herein.

Table 42

| Value of the time domain information | SLIV | Start | Length |
|---|---|---|---|
| 0 to 2 | 11 to 13 | 11 to 13 | 1 |
| 3 to 4 | 25 to 26 | 11 to 12 | 2 |
| 5 | 39 | 11 | 3 |

Alternatively, if a symbol on which the control channel is located or a symbol on which the detected control channel is located is a twelfth symbol in a slot, or if an identifier of a symbol on which the control channel is located or an identifier of a symbol on which the detected control channel is located is 11, the correspondence is Table 43. A specific method for using the correspondence is similar to the descriptions corresponding to Table 42. Details are not described again herein.

Table 43

| Value of the time domain information | SLIV | Start | Length |
|---|---|---|---|
| 11 to 13 | 11 to 13 | 11 to 13 | 1 |

(continued)

| Value of the time domain information | SLIV | Start | Length |
|---|---|---|---|
| 25 to 26 | 25 to 26 | 11 to 12 | 2 |
| 39 | 39 | 11 | 3 |

Example B21:

If a symbol on which the control channel is located or a symbol on which the detected control channel is located is a twelfth symbol in a slot, or if an identifier of a symbol on which the control channel is located or an identifier of a symbol on which the detected control channel is located is 11, the correspondence between the value of the time domain information and the SLIV may be at least one shown in Table 44. Based on Table 44, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located is a twelfth symbol in a slot, or if an identifier of a symbol on which the control channel is located or an identifier of a symbol on which the detected control channel is located is 11, the SLIV included in the SLIV set may be at least one of SLIVs shown in Table 44, and the correspondence between the value of the time domain information and the SLIV in the SLIV set may be at least one shown in Table 44. Based on Table 44, a method for determining, based on the time domain position in which the control channel is located or based on the time domain position in which the detected control channel is located, the information indicated by the time domain information is similar to corresponding descriptions in the example B1, and is not described again herein.

Table 44

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 27 to 38 | 28 to 39 | 0 to 11 | 3 |

Alternatively, if a symbol on which the control channel is located or a symbol on which the detected control channel is located is a twelfth symbol in a slot, or if an identifier of a symbol on which the control channel is located or an identifier of a symbol on which the detected control channel is located is 11, the correspondence is Table 45. A specific method for using the correspondence is similar to the descriptions corresponding to Table 44. Details are not described again herein.

Table 45

| Value of the time domain information | SLIV | Start | Length |
|---|---|---|---|
| 0 to 13 | 0 to 13 | 0 to 13 | 1 |
| 14 to 26 | 14 to 26 | 0 to 12 | 2 |
| 28 to 39 | 28 to 39 | 0 to 11 | 3 |

Example B22:

If a symbol on which the control channel is located or a symbol on which the detected control channel is located is a thirteenth symbol in a slot, or if an identifier of a symbol on which the control channel is located or an identifier of a symbol on which the detected control channel is located is 12, the correspondence between the value of the time domain information and the SLIV may be at least one shown in Table 46. Based on Table 46, a method for determining, based on the time domain position in which the control channel is located or based on the time domain position in which the detected control channel is located, the information indicated by the time domain information is similar to corresponding descriptions in the example B1, and is not described again herein.

If a symbol on which the control channel is located or a symbol on which the detected control channel is located

is a thirteenth symbol in a slot, or if an identifier of a symbol on which the control channel is located or an identifier of a symbol on which the detected control channel is located is 12, the SLIV included in the SLIV set may be at least one of SLIVs shown in Table 46, and the correspondence between the value of the time domain information and the SLIV in the SLIV set may be at least one shown in Table 46. Based on Table 46, a method for determining, based on the time domain position in which the control channel is located or based on the time domain position in which the detected control channel is located, the information indicated by the time domain information is similar to corresponding descriptions in the example B1, and is not described again herein.

Table 46

| Value of the time domain information | SLIV | Start | Length |
|---|---|---|---|
| 0 to 1 | 12 to 13 | 12 to 13 | 1 |
| 2 | 26 | 12 | 2 |

Alternatively, if a symbol on which the control channel is located or a symbol on which the detected control channel is located is a thirteenth symbol in a slot, or if an identifier of a symbol on which the control channel is located or an identifier of a symbol on which the detected control channel is located is 12, the correspondence is Table 47. A specific method for using the correspondence is similar to the descriptions corresponding to Table 46. Details are not described again herein.

Table 47

| Value of the time domain information | SLIV | Start | Length |
|---|---|---|---|
| 12 to 13 | 12 to 13 | 12 to 13 | 1 |
| 26 | 26 | 12 | 2 |

In the method provided by this embodiment of this application, optionally, a same correspondence between a value of time domain information and a SLIV may be determined based on a time domain position set in which a control channel is located or a time domain position set in which a detected control channel is located.

In the method provided by this embodiment of this application, optionally, a same SLIV set may be determined based on a time domain position set in which a control channel is located or a time domain position set in which a detected control channel is located.

In the method provided by this embodiment of this application, optionally, a same SLIV set and a same correspondence between a value of time domain information and a SLIV in a SLIV set may be determined based on a time domain position set in which a control channel is located or a time domain position set in which a detected control channel is located.

A time domain position set in which a control channel is located may include a time domain position in which one or more control channels are located, and a time domain position set in which a detected control channel is located includes a time domain position in which one or more detected control channels are located.

In the following example in which a time domain position is a symbol position, a time domain position set in which a first control channel is located or a time domain position set in which a detected control channel is located may include a $Q1^{th}$ symbol and a $Q2^{th}$ symbol. A time domain position set in which a second control channel is located or a time domain position set in which a detected control channel is located may include a $Q3^{th}$ symbol and a $Q4^{th}$ symbol. Q1, Q2, Q3, and Q4 are positive integers.

Alternatively, a symbol position set in which a first control channel is located or a symbol position set in which a detected control channel is located may include a symbol identifier P1 and a symbol identifier P2. A symbol position set in which a second control channel is located or a symbol position set in which a detected control channel is located may include a symbol identifier P3 and a symbol identifier P4. P1, P2, P3, and P4 are integers.

The symbol position set in which the first control channel is located or the symbol position set in which the detected control channel is located may be referred to as a first set for short, and the symbol position set in which the second control channel is located or the symbol position set in which the detected control channel is located may be referred to as a second set for short.

Optionally, a time domain position included in the time domain position set in which the control channel is located or the time domain position set in which the detected control channel is located may be preconfigured, or may be notified by the base station to the terminal. This is not limited in this embodiment.

Optionally, when the symbol position in which the control channel is located or the symbol position in which the detected control channel is located is at least one symbol position in the symbol position set in which the control channel is located or the symbol position set in which the detected control channel is located, the information indicated by the time domain information and determined based on the symbol position in which the control channel is located or the symbol position in which the detected control channel is located, is the information indicated by the time domain information and determined based on the symbol position set in which the control channel is located or the symbol position set in which the detected control information is located. The method may also be described as follows:

Optionally, when the symbol position in which the control channel is located is at least one symbol position in the symbol position set in which the control channel is located, the information indicated by the time domain information and determined based on the symbol position in which the control channel is located is the information indicated by the time domain information and determined based on the symbol position set in which the control channel is located.

Optionally, when the symbol position in which the detected control channel is located is at least one symbol position in the symbol position set in which the detected control channel is located, the information indicated by the time domain information and determined based on the symbol position in which the detected control channel is located is the information indicated by the time domain information and determined based on the symbol position set in which the detected control channel is located.

Example C1:

For example, if the symbol position in which the control channel is located, included in the symbol position set in which the control channel is located, or the symbol position in which the detected control channel is located, included in the symbol position set in which the detected control channel is located, is a first symbol and a second symbol, or if the symbol position in which the control channel is located, included in the symbol position set in which the control channel is located, or the symbol position in which the detected control channel is located, included in the symbol position set in which the detected control channel is located, is a symbol identifier 0 and a symbol identifier 1, the correspondence between the value of the time domain information and the SLIV may be at least one shown in Table 48. Based on Table 48, a method for determining, based on the time domain position in which the control channel is located or based on the time domain position in which the detected control channel is located, the information indicated by the time domain information is similar to corresponding descriptions in the example B1, and is not described again herein.

If the symbol position in which the control channel is located, included in the symbol position set in which the control channel is located, or the symbol position in which the detected control channel is located, included in the symbol position set in which the detected control channel is located, is a first symbol and a second symbol, or if the symbol position in which the control channel is located, included in the symbol position set in which the control channel is located, or the symbol position in which the detected control channel is located, included in the symbol position set in which the detected control channel is located, is a symbol identifier 0 and a symbol identifier 1, the SLIV included in the SLIV set may be at least one of SLIVs shown in Table 48, and the correspondence between the value of the time domain information and the SLIV in the SLIV set may be at least one shown in Table 48. Based on Table 48, a method for determining, based on the time domain position in which the control channel is located or based on the time domain position in which the detected control channel is located, the information indicated by the time domain information is similar to corresponding descriptions in the example B1, and is not described again herein.

Table 48

| Value of the time domain information | SLIV | Start | Length |
|---|---|---|---|
| 0 to 7 | 84 to 91 | 0 to 7 | 7 |
| 8 to 14 | 105 to 111 | 0 to 6 | 8 |
| 15 to 20 | 92 to 97 | 0 to 5 | 9 |
| 21 to 25 | 79 to 83 | 0 to 4 | 10 |
| 26 to 29 | 66 to 69 | 0 to 3 | 11 |
| 30 to 32 | 53 to 55 | 0 to 2 | 12 |
| 33 to 34 | 40 to 41 | 0 to 1 | 13 |
| 35 | 27 | 0 | 14 |

Example C2:

If the symbol position in which the control channel is located, included in the symbol position set in which the control channel is located, or the symbol position in which the detected control channel is located, included in the symbol position set in which the detected control channel is located, is a sixth symbol and a seventh symbol, or if the symbol position in which the control channel is located, included in the symbol position set in which the control channel is located, or the symbol position in which the detected control channel is located, included in the symbol position set in which the detected control channel is located, is a symbol identifier 5 and a symbol identifier 6, the correspondence between the value of the time domain information and the SLIV may be at least one shown in Table 49. Based on Table 49, a method for determining, based on the time domain position in which the control channel is located or based on the time domain position in which the detected control channel is located, the information indicated by the time domain information is similar to corresponding descriptions in the example B1, and is not described again herein.

If the symbol position in which the control channel is located, included in the symbol position set in which the control channel is located, or the symbol position in which the detected control channel is located, included in the symbol position set in which the detected control channel is located, is a sixth symbol and a seventh symbol, or if the symbol position in which the control channel is located, included in the symbol position set in which the control channel is located, or the symbol position in which the detected control channel is located, included in the symbol position set in which the detected control channel is located, is a symbol identifier 5 and a symbol identifier 6, the SLIV included in the SLIV set may be at least one of SLIVs shown in Table 49, and the correspondence between the value of the time domain information and the SLIV in the SLIV set may be at least one shown in Table 49. Based on Table 49, a method for determining, based on the time domain position in which the control channel is located or based on the time domain position in which the detected control channel is located, the information indicated by the time domain information is similar to corresponding descriptions in the example B1, and is not described again herein.

Table 49

| Value of the time domain information | SLIV | Start | Length |
|---|---|---|---|
| 0 to 7 | 6 to 13 | 6 to 13 | 1 |
| 8 to 14 | 20 to 26 | 6 to 12 | 2 |
| 15 to 20 | 34 to 39 | 6 to 11 | 3 |
| 21 to 25 | 48 to 52 | 6 to 10 | 4 |
| 26 to 29 | 62 to 65 | 6 to 9 | 5 |
| 30 to 32 | 76 to 78 | 6 to 8 | 6 |
| 33 to 34 | 90 to 91 | 6 to 7 | 7 |
| 35 | 111 | 6 | 8 |

Example C3:

If the symbol position in which the control channel is located, included in the symbol position set in which the control channel is located, or the symbol position in which the detected control channel is located, included in the symbol position set in which the detected control channel is located, is a tenth symbol and an eleventh symbol, or if the symbol position in which the control channel is located, included in the symbol position set in which the control channel is located, or the symbol position in which the detected control channel is located, included in the symbol position set in which the detected control channel is located, is a symbol identifier 9 and a symbol identifier 10, the correspondence between the value of the time domain information and the SLIV may be at least one shown in Table 50. Based on Table 50, a method for determining, based on the time domain position in which the control channel is located or based on the time domain position in which the detected control channel is located, the information indicated by the time domain information is similar to corresponding descriptions in the example B1, and is not described again herein.

If the symbol position in which the control channel is located, included in the symbol position set in which the control channel is located, or the symbol position in which the detected control channel is located, included in the symbol position set in which the detected control channel is located, is a tenth symbol and an eleventh symbol, or if the symbol position in which the control channel is located, included in the symbol position set in which the control channel is located, or the symbol position in which the detected control channel is located, included in the symbol position set in which the detected control channel is located, is a symbol identifier 9 and a symbol identifier 10, the SLIV included in the SLIV set may be at least one of SLIVs shown in Table 50, and the correspondence between the value of the time domain information and the SLIV in the SLIV set may be at least one shown in Table 50. Based on Table 50, a method for determining, based on the time domain position in which the control channel is located or based on the time domain position in which the detected control channel is located, the information indicated by the time domain information is similar to corresponding descriptions in the example B1, and is not described again herein.

Table 50

| Value of the time domain information | SLIV | Start | Length |
|---|---|---|---|
| 0 to 4 | 9 to 13 | 9 to 13 | 1 |
| 5 to 8 | 23 to 26 | 9 to 12 | 2 |
| 9 to 11 | 37 to 39 | 9 to 11 | 3 |
| 12 to 13 | 51 to 52 | 9 to 10 | 4 |
| 14 | 65 | 9 | 5 |

Example C4:

If the symbol position in which the control channel is located, included in the symbol position set in which the control channel is located, or the symbol position in which the detected control channel is located, included in the symbol position set in which the detected control channel is located, is a thirteenth symbol and a fourteenth symbol, or if the symbol position in which the control channel is located, included in the symbol position set in which the control channel is located, or the symbol position in which the detected control channel is located, included in the symbol position set in which the detected control channel is located, is a symbol identifier 12 and a symbol identifier 13, the correspondence between the value of the time domain information and the SLIV may be at least one shown in Table 51. Based on Table 51, a method for determining, based on the time domain position in which the control channel is located or based on the time domain position in which the detected control channel is located, the information indicated by the time domain information is similar to corresponding descriptions in the example B1, and is not described again herein.

If the symbol position in which the control channel is located, included in the symbol position set in which the control channel is located, or the symbol position in which the detected control channel is located, included in the symbol position set in which the detected control channel is located, is a thirteenth symbol and a fourteenth symbol, or if the symbol position in which the control channel is located, included in the symbol position set in which the control channel is located, or the symbol position in which the detected control channel is located, included in the symbol position set in which the detected control channel is located, is a symbol identifier 12 and a symbol identifier 13, the SLIV included in the SLIV set may be at least one of SLIVs shown in Table 51, and the correspondence between the value of the time domain information and the SLIV in the SLIV set may be at least one shown in Table 51. Based on Table 51, a method for determining, based on the time domain position in which the control channel is located or based on the time domain position in which the detected control channel is located, the information indicated by the time domain information is similar to corresponding descriptions in the example B1, and is not described again herein.

Table 51

| Value of the time domain information | SLIV | Start | Length |
|---|---|---|---|
| 0 to 1 | 12 to 13 | 12 to 13 | 1 |
| 2 | 26 | 12 | 2 |

Embodiment 3: The time domain information indication method is determined based on the detection period of the control channel.

Optionally, the terminal and/or the base station determine/determines the time domain information indication method based on the detection period of the control channel and a correspondence between the detection period of the control channel and the time domain information indication method.

Optionally, the indication method includes at least one of the following: indicating a starting first time unit and an ending first time unit; indicating a starting first time unit and a quantity of first time units; indicating an ending first time unit and a quantity of first time units; indicating a starting second time unit; indicating an ending second time unit; and indicating a quantity of second time units. The time unit may be a symbol, a slot, a mini-slot, a subframe, or the like.

Optionally, the indication method includes at least one of indicating a starting position and an ending position, indicating a starting position and a time domain length, indicating an ending position and a time domain length, indicating a starting position, indicating an ending position, and indicating a time domain length. Optionally, the time domain information indication method is determined based on the detection period of the control channel and the correspondence between the detection period of the control channel and the time domain information indication method.

In the method, setting the correspondence between the detection period of the control channel and the time domain information indication method can simplify a design of the time domain information.

Optionally, the setting in the present invention may be predefining or configuring, and is not specifically limited herein.

Optionally, the correspondence between the detection period of the control channel and the time domain information indication method is predefined, so that the time domain information indication method is determined.

Optionally, the correspondence between the detection period of the control channel and the time domain information indication method is configured, so that the time domain information indication method is determined. Specifically, the base station may notify the terminal of the correspondence between the detection period of the control channel and the time domain information indication method by using signaling. The signaling may be physical layer signaling or higher layer signaling, and is not specifically limited.

Optionally, the time domain information indication method may be determined based on the correspondence between the detection period of the control channel and the time domain information indication method in the following implementations.

Specifically, for example, when the detection period of the control channel is seven symbols, the corresponding indication method is indicating the starting position and the ending position, which may be specifically at least one of jointly indicating and separately indicating.

For example, when the detection period of the control channel is 14 symbols, the corresponding indication method is indicating the starting position and the ending position, which is separately indicating.

For example, when the detection period of the control channel is two symbols, the corresponding indication method is indicating the starting position and the ending position, which is jointly indicating.

Optionally, other indication manners or different indication methods in a same indication manner may also be predefined based on the detection period of the control channel.

Optionally, a plurality of indication manners and/or indication methods may also be predefined based on the detection period of the control channel, and then a specific indication manner and/or indication method to be used are/is indicated by using higher layer signaling or physical layer signaling. This is not limited in this application.

Optionally, the time domain information indication method may be at least one of the following indication methods, and the time domain information indication method is determined based on the detection period of the control channel.

Indication manner 1: Indicate the starting position and the ending position of the data channel, where the starting position and the ending position may be jointly indicated, or the starting position and the ending position may be separately indicated.

Indication manner 2: Indicate the starting position and the time domain length of the data channel, where the starting position and the time domain length may be jointly indicated, or the starting position and the time domain length may be separately indicated.

Indication manner 3: Indicate the ending position and the time domain length of the data channel, where the ending position and the time domain length may be jointly indicated, or the ending position and the time domain length may be separately indicated.

Indication manner 4: In this indication manner, predefined time domain information may be used. Specifically, there may be no time domain information in the control channel in this manner. For example, default time domain information may be used. For example, a default starting position is a first symbol in a slot, and a default ending position is a last symbol in the slot; or a default starting position is a first symbol after a symbol on which the control channel is detected, and a default ending position is a last symbol in the slot. Other predefined manners are not excluded, and are not specifically limited herein.

Indication manner 5: The indication manner may be at least one of explicit indicating, implicit indicating, tabular indicating, and the like. Specifically, when tabular indicating is used, a relationship between an index or an identifier (index) in a table and a time domain resource position of the data channel may be predefined; the base station sends the index to the terminal; and the terminal determines the time domain resource position of the data channel based on the index and the relationship between the index and the time domain resource position of the data channel.

Optionally, the indication method may also indicate only one of the starting position, the ending position, and the time domain length. For example, the control information indicates only the starting position. In this case, the ending position or the time domain length may be predefined, or notified by using higher layer signaling. For example, the control information indicates only the ending position. In this case, the starting position or the time domain length may be predefined, or notified by using higher layer signaling. For example, the control information indicates only the time domain length, and the starting position or the ending position may be predefined, or notified by using higher layer signaling.

This is not specifically limited herein.

Optionally, the time domain information indication method in the present invention is only an example, and other indication methods are not excluded. This is not specifically limited herein.

Optionally, the correspondence between the detection period of the control channel and the time domain information indication method in the present invention is only an example, and other correspondences are not excluded. This is not specifically limited herein.

Embodiment 4: The information indicated by the time domain information and the time domain information indication method are determined based on the detection period of the control channel.

Optionally, the terminal and/or the base station determine/determines, based on the detection period of the control channel, the information indicated by the time domain information and the time domain information indication method.

Optionally, the information indicated by the time domain information in the control information and the time domain information indication method are determined based on the detection period of the control channel and a correspondence between the detection period of the control channel and the information indicated by the time domain information and the time domain information indication method.

Optionally, when a specific embodiment is described, the foregoing Embodiment 2 and Embodiment 3 are usually combined.

Optionally, in a predefined manner or by using signaling for configuration, it is determined that the control information uses at least one of the following indication manners to indicate the time domain resource of the data channel, where the signaling for configuration includes physical layer signaling (for example, DCI) or higher layer signaling, and the higher layer signaling includes radio resource control (Radio resource control, RRC) signaling or medium access control (Medium Access Control, MAC) signaling.

Indication manner 1: Indicate a starting position and an ending position of the data channel, where the starting position and the ending position may be jointly indicated, or the starting position and the ending position may be separately indicated.

Indication manner 2: Indicate a starting position and a time domain length, where the starting position and the time domain length may be jointly indicated, or the starting position and the time domain length may be separately indicated.

Indication manner 3: Indicate an ending position and a time domain length of the data channel, where the ending position and the time domain length may be jointly indicated, or the ending position and a length identifier may be separately indicated.

Indication manner 4: In this indication manner, predefined time domain information may be used. Specifically, there may be no time domain information in the control information in this manner. For example, default time domain information may be used. For example, a default starting position is a first symbol in a slot, and a default ending position is a last symbol in the slot; or a default starting position is a first symbol after a symbol on which the control channel is detected, and a default ending position is a last symbol in the slot. Other predefined manners are not excluded, and are not specifically limited herein.

Indication manner 5: The indication manner may be at least one of explicit indicating, implicit indicating, tabular indicating, and the like. Specifically, when tabular indicating is used, a relationship between an index or an identifier (index) in a table and a time domain resource position of the data channel may be predefined; the base station sends the index to the terminal; and the terminal determines the time domain resource position of the data channel based on the index and the relationship between the index and the time domain resource position of the data channel.

Optionally, the indication method may also indicate only one of the starting position, the ending position, and the time domain length. For example, the control information indicates only the starting position. In this case, the ending position or the time domain length may be predefined, or notified by using higher layer signaling. For example, the control information indicates only the ending position. In this case, the starting position or the time domain length may be predefined, or notified by using higher layer signaling. For example, the control information indicates only the time domain length, and the starting position or the ending position may be predefined, or notified by using higher layer signaling. This is not specifically limited herein.

The following describes tabular indicating in the indication manner 5 in detail.

As shown in Table 4, a relationship between statuses of a starting position (stating) and an ending position (ending) and an index is specified. If the time domain information of the data channel is actually (1, 0), where 1 represents a starting symbol position, and 0 represents an ending symbol position, the base station needs to indicate only an index 0 to the terminal. Table 4 is only an example, and other starting positions and/or other ending positions and/or other identifiers or indexes and/or correspondences between other starting positions and/or ending positions and identifiers are not excluded. This is not specifically limited herein.

Table 4

| Index | Starting, ending |
|-------|------------------|
| 0     | (1,0)            |
| 1     | (1, -1)          |
| 2     | (2, 0)           |
| 3     | reserved         |

Specifically, starting may mean a starting position of the data channel. For example, a starting position 0 (which may be referred to as 0 for short) represents a symbol 0 in a slot, that is, the time domain resource of the data channel starts from a first symbol in the slot; and a starting position 1 represents a symbol 1 in the slot, that is, the time domain resource of the data channel starts from a second symbol in the slot. This is not limited in this application.

Optionally, starting may also mean a quantity of symbols occupied by the control channel or a channel/signal other than the data channel of the terminal for transmission. For example, a starting position 0 represents that a quantity of symbols occupied by the control channel is 0, and in this case, transmission and/or mapping of the data channel start/starts from the first symbol in the slot; and a starting position 1 represents that a quantity of symbols occupied by the control channel is 1, and in this case, transmission and/or mapping of the data channel start/starts from the second symbol in the slot. This is not limited in this application.

Optionally, starting may further mean a starting symbol position of the data channel after the control channel. For example, a starting position 0 represents that the data channel is after a zeroth symbol after the control channel, and in this case, transmission and/or mapping of the data channel start/starts from a first symbol after the control channel or transmission of the data channel starts from a symbol on which the control channel is located; and a starting position 1 represents that the data channel is after the first symbol after the control channel, and in this case, transmission and/or mapping of the data channel start/starts from a second symbol after the control channel or transmission of the data channel starts from a first symbol after the symbol on which the control channel is located. This is not limited in this application. The position of the control channel may be configured by using higher layer signaling or may be a symbol position of the control channel detected by the terminal.

Optionally, the foregoing meanings of the starting time domain position are only examples, and other meanings of the starting time domain position are not excluded.

Optionally, ending means an ending position of the data channel. For example, an ending position 0 (which may be referred to as 0 for short) represents a last symbol in the slot, that is, symbols for transmitting the data channel include the last symbol in the slot; an ending position -1 represents the last symbol in the slot, that is, the last symbol in the slot is not used for data transmission, that is, the symbols for transmitting the data channel do not include the last symbol in the slot; and an ending position -2 represents a penultimate symbol in the slot, that is, the symbols of the data channel do not include the penultimate symbol in the slot and a subsequent symbol in the slot, that is, the penultimate symbol in the slot and the subsequent symbol in the slot are not used for data transmission, that is, the symbols for transmitting the data channel do not include the last symbol and the penultimate symbol. This is not limited in this application.

Optionally, ending may further mean an ending symbol position of the data channel after the control channel. For example, an ending position 1 represents that the first symbol after the control channel is an ending symbol of the data channel, and the ending position of the data channel is the first symbol after the control channel; and an ending position 2 represents that the second symbol after the control channel is an ending symbol of the data channel, and the ending position of the data channel is the second symbol after the control channel. This is not limited in this application. The position of the control channel may be configured by using higher layer signaling or may be a symbol position of the control channel detected by the terminal.

Optionally, ending may further mean a position relationship between the ending time domain position and the starting time domain position of the data channel. For example, an ending position 1 represents that a first symbol after the starting time domain position is the ending time domain position of the data channel; and an ending position 2 represents that a second symbol after the starting time domain position is the ending time domain position of the data channel. This is not limited in this application. The starting time domain position may be predefined, or configured by using higher layer signaling or configured by using physical layer signaling.

Optionally, the foregoing meanings of the ending time domain position are only examples, and other meanings of the starting time domain position are not excluded.

Optionally, a value of starting and a value of ending may be the same or may be different. For example, stating is 0, 1, 2, or 3, and ending is 0, 1, or 2; or starting is 1 or 2, and ending is 0, 1, or 2; or stating is 0, 1, or 2, and ending is 1 or 2, or ending is 0, -1, or -2. A value range of starting and a value range of ending may be predefined in a protocol, or may be notified by using signaling, for example, notified by using higher layer signaling or physical layer signaling. In a same case, the value range of starting and the value range of ending may be indicated by one piece of signaling, or may be indicated by different signaling.

Optionally, ending may mean a relationship between the ending position and the starting position, or may mean a relationship between the ending position and a position of the detected control channel, or the like.

Optionally, in a table, a relationship between statuses of the starting position (stating) and the time domain length (duration) and an index may also be specified, or a relationship between statuses of the ending position (ending) and the time domain length (duration) and an index may be specified, or a relationship between a status of the starting position and an index may be specified, or a relationship between a status of the ending position and an index may be specified, or a relationship between a status of the time domain length and an index may be specified. This is not specifically limited herein.

Optionally, the time domain length or quantity means a length or duration of the data channel in time domain. The time domain length or quantity may indicate a quantity of consecutive symbols, or a quantity of consecutive slots, or a quantity of consecutive time units, where the time unit may be a symbol, a slot, a mini-slot, a subframe, a radio frame, or the like.

Optionally, the information indicated by the time domain information and the time domain information indication method are determined based on the detection period of the control channel and the correspondence between the detection period of the control channel and the information indicated by the time domain information and the time domain information indication method.

In the method, setting the correspondence between the detection period of the control channel and the information indicated by the time domain information and the time domain information indication method can simplify a design of the time domain information.

Optionally, the setting in the present invention may be predefining or configuring, and is not specifically limited herein.

Optionally, the correspondence between the detection period of the control channel and the information indicated by the time domain information and the time domain information indication method is predefined, so that the information indicated by the time domain information and the time domain information indication method are determined.

Optionally, the correspondence between the detection period of the control channel and the information indicated by the time domain information and the time domain information indication method is configured, so that the information indicated by the time domain information and the time domain information indication method are determined. Specifically, the base station may notify, by using signaling, the terminal of the correspondence between the detection period of the control channel and the information indicated by the time domain information and the time domain information indication method. The signaling may be physical layer signaling or higher layer signaling, and is not specifically limited.

Optionally, the information indicated by the time domain information and the time domain information indication method may be determined in the following implementations based on the correspondence between the detection period of the control channel and the information indicated by the time domain information and the time domain information indication method.

Specifically, a combination or table of the time domain information in the control information may be determined based on the detection period of the control channel and a correspondence between the detection period and the combination or table of the time domain information.

Optionally, the information indicated by the time domain information and the time domain information indication method may be determined based on the combination or table of the time domain information.

Optionally, the combination or table of the time domain information may also be a combination value of the time domain information. The combination value of the time domain information is used to indicate the time domain information of the data channel.

Optionally, the information indicated by the time domain information and the time domain information indication method may be determined in the following implementations based on the correspondence between the detection period of the control channel and the information indicated by the time domain information and the time domain information indication method.

Example 1: When the detection period of the control channel is seven symbols, the corresponding combination or table or combination value of the time domain information is shown in the following Table 5. Meanings of starting and ending in the table may be at least one in the foregoing embodiment. For details, refer to the descriptions in the foregoing embodiment. Details are not described again herein. Table 5 is only an example, and other starting positions and/or other ending positions and/or other identifiers or indexes and/or correspondences between other starting positions and/or ending positions and identifiers are not excluded. This is not specifically limited herein. Other combinations or tables or combination values of the time domain information are not excluded. This is not specifically limited herein.

Table 5

| Index | Starting | Index | Ending |
|-------|----------|-------|--------|
| 0 | 1 | 0 | 0 |
| 1 | 2 | 1 | -1 |
| 2 | 3 | 2 | -2 |
| 3 | 4 | 3 | -3 |

Example 2: When the detection period of the control channel is 14 symbols, the corresponding combination or table or combination value of the time domain information is shown in the following Table 6. Meanings of starting and ending in the table may be at least one in the foregoing embodiment. For details, refer to the descriptions in the foregoing embodiment. Details are not described again herein. Table 6 is only an example, and other starting positions and/or other ending positions and/or other identifiers or indexes and/or correspondences between other starting positions and/or ending positions and identifiers are not excluded. This is not specifically limited herein. Other combinations or tables or combination values of the time domain information are not excluded. This is not specifically limited herein.

Table 6

| Index | Starting | Index | Ending |
|-------|----------|-------|--------|
| 0 | 1 | 0 | 0 |
| 1 | 2 | 1 | -1 |
| 2 | 3 | 2 | -2 |
| 3 | 4 | 3 | -3 |
| 4 | 5 | 4 | -4 |
| 5 | 6 | 5 | -5 |
| 6 | 7 | 6 | -6 |
| 7 | 8 | 7 | -7 |

Example 3: When the detection period of the control channel is two symbols, the corresponding combination or table or combination value of the time domain information is shown in the following Table 7. Meanings of starting and ending in the table may be at least one in the foregoing embodiment. For details, refer to the descriptions in the foregoing embodiment. Details are not described again herein. Other combinations or tables or combination values of the time domain information are not excluded. This is not specifically limited herein.

Table 7

| Index | Starting, ending |
|-------|------------------|
| 0 | (1,0) |
| 1 | (1, -1) |
| 2 | (2, 0) |
| 3 | reserved |

Optionally, the correspondence between the detection period of the control channel and the combination or table or combination value of the time domain information in the present invention is only an example, and other correspondences are not excluded. This is not specifically limited herein.

The combination in the foregoing table may be the time domain information indicated by a higher layer signal or physical layer signaling. The combination may be a joint value of starting and ending, or separate values of starting and ending, or a joint value of starting and the time domain length, or separate values of starting and the time domain length, or a value of ending or a value of the time domain length or a value of starting, or the like. Different combinations or tables or combination values may correspond to different detection periods of the control channel. This is not limited in this application.

Optionally, the combination may be a set of possible values of the starting position, or a set of possible values of the ending position, or a set of possible values of the time domain length, or a set of joint values of starting and ending, or a set of joint values of starting and the time domain length, or a set of joint values of ending and the time domain length, or the like. The value set may include one or more values. This is not specifically limited herein.

Optionally, Embodiment 1, Embodiment 2, Embodiment 3, or Embodiment 4 may be used as an independent embodiment, or at least two embodiments may be combined, or the embodiments may be combined with other embodiments of the present invention. This is not limited in this application.

Optionally, in an embodiment formed by combining Embodiment 1 and Embodiment 2, the quantity of bits of the time domain information and the information indicated by the time domain information are determined based on the detection period of the control channel.

Optionally, determining, based on the detection period of the control channel, the quantity of bits of the time domain information and the information indicated by the time domain information may be determining the quantity of bits of the time domain information based on the detection period of the control channel and the correspondence between the detection period of the control channel and the quantity of bits of the time domain information, and determining, based on the detection period of the control channel and the correspondence between the detection period of the control channel and the information indicated by the time domain information, the information indicated by the time domain information. Optionally, the quantity of bits of the time domain information and the information indicated by the time domain information may be determined based on independent correspondences of the quantity of bits of the time domain information and the information indicated by the time domain information. The independent correspondences of the quantity of bits of the time domain information and the information indicated by the time domain information may indicate the correspondence in Embodiment 1 and the correspondence in Embodiment 2 respectively.

Optionally, determining, based on the detection period of the control channel, the quantity of bits of the time domain information and the information indicated by the time domain information may be determining, based on the detection period of the control channel and a correspondence between the detection period of the control channel and the quantity of bits of the time domain information and the information indicated by the time domain information, the quantity of bits of the time domain information and the information indicated by the time domain information. Optionally, the quantity of bits of the time domain information and the information indicated by the time domain information may be determined based on the correspondence associated with the quantity of bits of the time domain information and the information indicated by the time domain information.

Optionally, the correspondence associated with the quantity of bits of the time domain information and the information indicated by the time domain information may be the following correspondence. The following correspondence is only an example, and other correspondences are not excluded. This is not specifically limited herein.

For example, when the detection period of the control channel is seven symbols, the corresponding quantity of bits of the time domain information is G1, where G1 is an integer greater than or equal to 0, and the corresponding information indicated by the time domain information is similar to the information indicated by the time domain information and described in the foregoing embodiment. Details are not described again herein.

For example, when the detection period of the control channel is two symbols, the corresponding quantity of bits of the time domain information is G2, where G2 is an integer greater than or equal to 0, and the corresponding information indicated by the time domain information is similar to the information indicated by the time domain information and described in the foregoing embodiment. Details are not described again herein.

Optionally, the quantity of bits of the time domain information and the information indicated by the time domain information may be determined based on one correspondence above. Optionally, in an embodiment formed by combining Embodiment 1 and Embodiment 3, the quantity of bits of the time domain information and the time domain information indication method are determined based on the detection period of the control channel.

Optionally, determining the quantity of bits of the time domain information and the time domain information indication method based on the detection period of the control channel may be determining the quantity of bits of the time domain information based on the detection period of the control channel and the correspondence between the detection period of the control channel and the quantity of bits of the time domain information, and determining the time domain information indication method based on the detection period of the control channel and the correspondence between the detection period of the control channel and the time domain information indication method. Optionally, the quantity of bits of the time domain information and the time domain information indication method may be determined based on independent correspondences of the quantity of bits of the time domain information and the time domain information indication method. The independent correspondences of the quantity of bits of the time domain information and the time domain information indication method may be the correspondence in Embodiment 1 and the correspondence in Embodiment 3 respectively.

Optionally, determining the quantity of bits of the time domain information and the time domain information indication method based on the detection period of the control channel may be determining the quantity of bits of the time domain information and the time domain information indication method based on the detection period of the control channel and a correspondence between the detection period of the control channel and the quantity of bits of the time domain information and the time domain information indication method. Optionally, the quantity of bits of the time domain information and the time domain information indication method may be determined based on the correspondence associated with the quantity of bits of the time domain information and the time domain information indication method.

Optionally, the correspondence associated with the quantity of bits of the time domain information and the time domain information indication method may be the following correspondence. The following correspondence is only an example, and other correspondences are not excluded. This is not specifically limited herein.

For example, when the detection period of the control channel is seven symbols, the corresponding quantity of bits of the time domain information is HI, where H1 is an integer greater than or equal to 0, and the corresponding time domain information indication method is similar to the time domain information indication method described in the foregoing embodiment. Details are not described again herein.

For example, when the detection period of the control channel is two symbols, the corresponding quantity of bits of the time domain information is H2, where H2 is an integer greater than or equal to 0, and the corresponding time domain information indication method is similar to the time domain information indication method described in the foregoing embodiment. Details are not described again herein.

Optionally, the quantity of bits of the time domain information and the time domain information indication method may be determined based on one correspondence above.

Optionally, in an embodiment formed by combining Embodiment 1 and Embodiment 2 and Embodiment 3, the quantity of bits of the time domain information, the information indicated by the time domain information, and the time domain information indication method are determined based on the detection period of the control channel.

Optionally, determining, based on the detection period of the control channel, the quantity of bits of the time domain information, the information indicated by the time domain information, and the time domain information indication method may be determining the quantity of bits of the time domain information based on the detection period of the control channel and the correspondence between the detection period of the control channel and the quantity of bits of the time domain information, determining, based on the correspondence between the detection period of the control channel and the information indicated by the time domain information, the information indicated by the time domain information, and determining the time domain information indication method based on the detection period of the control channel and the correspondence between the detection period of the control channel and the time domain information indication method. Optionally, the quantity of bits of the time domain information and the time domain information indication method may be determined based on independent correspondences of the quantity of bits of the time domain information, the information indicated by the time domain information, and the time domain information indication method. The independent correspondences of the quantity of bits of the time domain information, the information indicated by the time domain information, and the time domain information indication method may be the correspondence in Embodiment 1, the correspondence in Embodiment 2, and the correspondence in Embodiment 3 respectively.

Optionally, determining, based on the detection period of the control channel, the quantity of bits of the time domain information, the information indicated by the time domain information, and the time domain information indication method may be determining, based on the detection period of the control channel and a correspondence between the detection period of the control channel and at least two of the quantity of bits of the time domain information, the information indicated by the time domain information, and the time domain information indication method, the quantity of bits of the time domain information, the information indicated by the time domain information, and the time domain information indication method. Optionally, the quantity of bits of the time domain information, the information indicated by the time domain information, and the time domain information indication method may be determined based on a correspondence (the correspondence is described in the foregoing embodiment, and the specific correspondence is not described again herein) associated with at least two of the quantity of bits of the time domain information, the information indicated by the time domain information, and the time domain information indication method.

Optionally, a correspondence associated with the quantity of bits of the time domain information, the information indicated by the time domain information, and the time domain information indication method may be the following correspondence. The following correspondence is only an example, and other correspondences are not excluded. This is not specifically limited herein.

For example, when the detection period of the control channel is seven symbols, the corresponding quantity of bits of the time domain information is L1, where L1 is an integer greater than or equal to 0, the corresponding information indicated by the time domain information is similar to the information indicated by the time domain information and described in the foregoing embodiment, and the corresponding time domain information indication method is similar to the time domain information indication method described in the foregoing embodiment. Details are not described again herein.

For example, when the detection period of the control channel is two symbols, the corresponding quantity of bits of the time domain information is L2, where L2 is an integer greater than or equal to 0, the corresponding information indicated by the time domain information is similar to the information indicated by the time domain information and described in the foregoing embodiment, and the corresponding time domain information indication method is similar to the time domain information indication method described in the foregoing embodiment. Details are not described again herein.

Optionally, the quantity of bits of the time domain information, the information indicated by the time domain information, and the time domain information indication method may be determined based on one correspondence above.

Optionally, different information indicated by the time domain information, or bit meanings, or time domain information indication methods may also be determined for different services in a same period. Specifically, different services may be the URLLC service, the eMBB service, and the like. Different services correspond to different service requirements, for example, packet sizes, latencies, and reliability. The URLLC may correspond to a relatively small data packet, and the eMBB may correspond to a relatively large data packet. The information indicated by the time domain information or the bit meanings or the time domain information indication methods corresponding to the URLLC service and the eMBB service may be different.

For example, in an example in which both the URLLC service and the eMBB service correspond a 7-symbol detection period of the control channel, corresponding explanations about three bits of the time domain information in the control information for the URLLC and the eMBB may be different. For example, a table corresponding to the URLLC service is shown in Table 8, and a table corresponding to the eMBB service is shown in Table 9.

Table 8

| Index | Starting | Ending |
|---|---|---|
| 0 | 1 | 0 |
| 1 | 1 | -1 |
| 2 | 3 | -3 |
| 3 | 3 | -5 |
| 4 | 5 | 0 |
| 5 | 5 | -1 |
| 6 | 7 | -3 |
| 7 | 7 | -5 |

Table 9

| Index | Starting | Ending |
|---|---|---|
| 0 | 1 | 0 |
| 1 | 1 | -1 |
| 2 | 2 | 0 |
| 3 | 2 | -1 |
| 4 | 3 | 0 |
| 5 | 3 | -1 |
| 6 | 4 | 0 |
| 7 | 4 | -1 |

In a possible implementation, the method further includes: determining an indication granularity of the time domain information based on the detection period of the control channel. The implementation may be combined with at least one of the foregoing embodiments, or may be used as an independent embodiment. This is not specifically limited herein.

Optionally, the terminal and/or the base station determine/determines the indication granularity of the time domain information based on the detection period of the control channel.

Optionally, the indication granularity may be a quantity of third time units included in the first time unit and/or the second time unit.

For example, when the starting time domain position is indicated, for example, when starting symbols are indicated, the indication may be based on a quantity of symbols included in the starting symbols.

For example, if the information indicated by the time domain information is the starting time domain position, a time domain granularity may be a quantity of time domain units included in the starting time domain position or a granularity of the starting time domain position.

Optionally, the indication granularity of the time domain information may be a quantity of time units included in the information indicated by the time domain information or a granularity of the information indicated by the time domain information.

Optionally, the indication granularity of the time domain information may be that the indication in the time domain information indication method is based on a granularity of one or more third time units. The third time unit may be a symbol, a slot, a mini-slot, a subframe, or the like. Specifically, the data channel transmission case in the case 2 is used as an example for description.

Example 1: As shown in the foregoing case shown in FIG. 10, when the detection period of the control channel is two symbols, it may be specified that the indication granularity of the time domain information is two symbols.

In this solution, in comparison with a 1-symbol indication granularity of the time domain information, bit overheads may be reduced.

For example, if the indication granularity of the time domain information is one symbol, assuming that a symbol of the starting time domain position (starting) may be selected from first four symbols (for example, symbols numbered 0, 1, 2, and 3) in a slot, and assuming that a symbol of the ending time domain position (ending) may be selected from last four symbols (for example, symbols numbered 13, 12, 11, and 10) in the slot, two bits in the control information are required for indicating the starting time domain position (starting), and two bits are also required for indicating the ending time domain position (ending), that is, in this case, the quantity of bits of the time domain information in the control information is 4 bits. However, if the indication granularity of the time domain information is two symbols, assuming that symbols of the starting time domain position (starting) are still the first four symbols in the slot, because the indication granularity is two symbols, first two choices (the symbols numbered 0 and 2) may be available; and assuming that symbols in the ending time domain position (ending) are still the last four symbols in the slot, because the indication granularity is two symbols, last two choices (the symbols numbered 11 and 13) may be available. In this case, one bit in the control information is required for indicating the starting time domain symbol starting, and one bit is required for indicating the ending time domain symbol ending, that is, the quantity of bits of the time domain information in the control information is 2 bits. Therefore, in comparison with the 1-symbol indication granularity, the 2-symbol indication granularity can reduce bit overheads.

Example 2: When the detection period of the control channel is seven symbols, it may be specified that the indication granularity of the time domain information is seven symbols.

In this solution, in comparison with a 1-symbol indication granularity of the time domain information, bit overheads may be reduced.

For example, the starting time domain position may be indicated by using the same 1-symbol indication granularity of the time domain information, and the time domain length may be indicated by a multiple of the indication granularity of the time domain information, for example, a multiple of seven symbols. For example, two bits are used for indication when the time domain length is indicated by an indication granularity multiplied by 4 at most. For example, bits 00 represent that the time domain length is seven symbols multiplied by 1, that is, the time domain length is seven symbols. For example, bits 01 represent that the time domain length is seven symbols multiplied by 2, that is, the time domain length is 14 symbols. For example, bits 10 represent that the time domain length is seven symbols multiplied by 3, that is, the time domain length is 21 symbols. For example, bits 11 represent that the time domain length is seven symbols multiplied by 4, that is, the time domain length is 28 symbols.

For example, using seven symbols as an indication granularity, the time domain information indication method may indicate only a time domain position of first seven symbols, and a quantity of 7-symbol combinations is indicated subsequently.

Optionally, an indication granularity of the time domain information in each detection period of the control channel may be specified.

Optionally, the indication granularity of the time domain information is determined based on the detection period of the control channel and a correspondence between the detection period of the control channel and the indication granularity of the time domain information.

In the method, setting the correspondence between the detection period of the control channel and the indication granularity of the time domain information can simplify a design of the time domain information.

Optionally, the setting in the present invention may be predefining or configuring, and is not specifically limited herein.

Optionally, the correspondence between the detection period of the control channel and the indication granularity of the time domain information is predefined, so that the indication granularity of the time domain information is determined.

Optionally, the correspondence between the detection period of the control channel and the indication granularity of the time domain information is configured, so that the indication granularity of the time domain information is determined. Specifically, the base station may notify the terminal of the correspondence between the detection period of the control channel and the indication granularity of the time domain information by using signaling. The signaling may be physical layer signaling or higher layer signaling, and is not specifically limited.

Optionally, the indication granularity of the time domain information may be determined based on the correspondence between the detection period of the control channel and the indication granularity of the time domain information in the following implementations.

For example, when the detection period of the control channel is two symbols, the indication granularity of the time domain information is two symbols or another quantity of symbols.

For example, when the detection period of the control channel is seven symbols, the indication granularity of the time domain information is three symbols or another quantity of symbols.

For example, when the detection period of the control channel is 14 symbols, the indication granularity of the time domain information is four symbols or another quantity of symbols, or the like.

Optionally, the correspondence between the detection period of the control channel and the indication granularity of the time domain information in the present invention is only an example, and other correspondences are not excluded. This is not specifically limited in this application.

Optionally, an indication granularity set of the time domain information is determined based on the detection period of the control channel.

Optionally, the terminal and/or the base station determine/determines the indication granularity set of the time domain information based on the detection period of the control channel.

Optionally, determining the indication granularity set of the time domain information based on the detection period of the control channel may be determining the indication granularity set of the time domain information based on the detection period of the control channel and a correspondence between the detection period of the control channel and the indication granularity set of the time domain information.

In the method, setting the correspondence between the detection period of the control channel and the indication granularity set of the time domain information can simplify a design of the time domain information.

Optionally, the setting in the present invention may be predefining or configuring, and is not specifically limited herein.

Optionally, the correspondence between the detection period of the control channel and the indication granularity set of the time domain information is predefined, so that the indication granularity set of the time domain information is determined.

Optionally, the correspondence between the detection period of the control channel and the indication granularity set of the time domain information is configured, so that the indication granularity set of the time domain information is determined. Specifically, the base station may notify the terminal of the correspondence between the detection period of the control channel and the indication granularity set of the time domain information by using signaling. The signaling may be physical layer signaling or higher layer signaling, and is not specifically limited.

Optionally, the indication granularity set of the time domain information may be determined based on the correspondence between the detection period of the control channel and the indication granularity set of the time domain information in the following implementations.

Optionally, the indication granularity set of the time domain information may include one or more indication granularities.

Optionally, an indication granularity set of the time domain information in each detection period of the control channel may be specified, where the set may include one or more indication granularities. Indication granularity sets of the time domain information in different detection periods of the control channel may be the same or may be different.

For example, when the detection period of the control channel is two symbols, the indication granularity set of the time domain information is one symbol and two symbols.

For example, when the detection period of the control channel is two symbols, the indication granularity of the time domain information is one symbol.

For example, when the detection period of the control channel is seven symbols, the indication granularity set of the time domain information is one symbol and three symbols.

For example, when the detection period of the control channel is seven symbols, the indication granularity set of the time domain information is one symbol, two symbols, and three symbols.

For example, when the detection period of the control channel is 14 symbols, the indication granularity set of the time domain channel is one symbol, two symbols, four symbols, and the like.

Optionally, determining the indication granularity of the time domain information based on the detection period of the control channel may indicate that the indication granularity of the time domain information is equal to the detection period of the control channel.

Optionally, the correspondence between the detection period of the control channel and the indication granularity set of the time domain information in the present invention is only an example, and other correspondences are not excluded. This is not specifically limited herein.

Optionally, the indication granularity set of the time domain information is specified, and the indication granularity of the time domain information in the control information may also be indicated by using physical layer signaling or higher layer signaling. This is not specifically limited herein.

In a possible implementation, for data scheduling in a plurality of first time units, one piece of control information is used to schedule data channel transmission in the plurality of first time units. The first time unit may be a time unit such as a slot, a subframe, a radio frame, or a symbol. For example, the first time unit is a slot. To indicate the time domain information of the data channel in the case 3, that is, multi-slot aggregation (multi-slot aggregation) scheduling, at least one of the following three methods is available.

Method 1: Time domain information of each slot is determined according to the method in the foregoing embodiment.

For example, an indication method for the time domain information of each slot may be indicating the starting time domain position and the ending time domain position, or the like, for example, using a time unit as a symbol, for example, indicating a starting symbol and an ending symbol. This is not specifically limited herein.

In addition, optionally, the starting time domain position and the ending time domain position may be indicated, for example, using a time unit as a slot, for example, indicating a starting slot starting slot and an ending slot ending slot. This is not specifically limited herein.

Optionally, the starting symbol, the ending symbol, the starting slot, and the ending slot may be indicated simultaneously.

Optionally, indicating the starting slot and the ending slot may also be determined by using the foregoing embodiment. The time unit (or the symbol) in the foregoing embodiment may be changed to a slot.

Method 2: A starting symbol in a first slot and an ending symbol in a last slot are indicated according to the method for determining time domain information in the foregoing embodiment.

For example, in an example 1, the ending symbol in the last slot may be indicated by using the detection period of the control channel as the indication granularity of the time domain information.

Example 2: When the indication granularity of the time domain information is two symbols, the ending time domain position (or ending symbol) of the data channel may be a last symbol in the slot, or an antepenultimate symbol in the slot. There are seven cases.

Optionally, the indication granularity of the time domain information may also be a range or a possible value of indication information of the data channel.

Example 3: When the indication granularity of the time domain information is seven symbols, the ending time domain position (or ending symbol) of the data channel may be selected from last seven symbols in the slot. There may be seven cases.

Method 3: Time domain positions in a plurality of slots are repeated, and only time domain information of a first slot is indicated. In this case, the time domain information may be determined according to the method in the foregoing embodiment.

Optionally, the time domain information may indicate a starting slot and an ending slot.

Whether to perform slot aggregation scheduling may be configured by using RRC. Slot aggregation and the method for determining time domain information may be combined to implement flexible resource allocation, and further reduce signaling overheads.

The following describes in detail a solution of a method for determining time domain information according to this application with reference to an accompanying drawing.

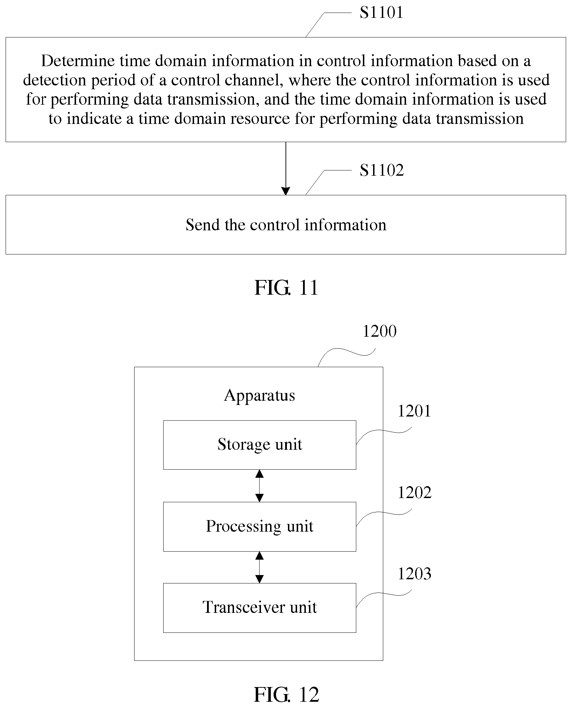

FIG. 11 is a flowchart of a method for determining time domain information according to this application. The method includes the following steps.

S1101. A base station determines time domain information in control information based on a detection period of a control channel, where the control information is used for performing data transmission, and the time domain information is used to indicate a time domain resource for performing data transmission.

A method for determining the time domain information in the control information by the base station based on the detection period of the control channel, descriptions about the control information, descriptions about the time domain information, and descriptions about other related information are the same as corresponding descriptions in the method in FIG. 7 to FIG. 10. Details are not described again herein.

S1102. The base station sends the control information.

Optionally, the base station sends the control information to a terminal.

In a possible implementation, the base station sends configuration information, where the configuration information is used to indicate the detection period of the control channel. Descriptions about the configuration information are the same as the corresponding descriptions in the method in FIG. 7 to FIG. 10. Details are not described again herein.

The foregoing mainly describes the solutions provided in the embodiments of this application from a perspective of different apparatuses. It may be understood that, to implement the foregoing functions, the different apparatuses (such as a base station and a terminal) include a hardware structure and/or a software module for performing corresponding functions. With reference to the units and algorithm steps described in the embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional unit division may be performed on the different apparatuses and so on based on the example of the method. For example, functional units may be divided based on corresponding functions, or two or more than two functions may be integrated into one processing unit. The integrated unit may be implemented in a form of hardware, or may be implemented in a form of a software functional unit. It should be noted that, in the embodiments of this application, unit division is an example, and is merely logical function division. In an actual implementation, another division manner may be used.

FIG. 12 is a schematic block diagram of an apparatus 1200 according to an embodiment of this application. The apparatus 1200 may implement functions implemented by the terminal in each method described above. The apparatus 1200 includes a processing unit 1202. The processing unit 1202 is configured to perform a function of the terminal in the method provided in this embodiment of this application. For example, the processing unit 1202 is configured to support the apparatus 1200 in performing S701 and S702 in FIG. 7, and/or is used in other processes of the technology described in the specification. The apparatus 1200 may further include a transceiver unit 1203, configured to support communication between the apparatus 1200 and another apparatus. For example, the another apparatus may be a base station. The apparatus 1200 may further include a storage unit 1201, configured to store program code and data of the apparatus 1200. The processing unit 1202 may be divided into a first processing unit and a second processing unit. In this embodiment of this application, the program code may also be referred to as a program instruction, a code instruction, or another name. This is not limited in this application.

The processing unit 1202 may be a processor or a controller, for example, may be a CPU, a general-purpose processor, a DSP, an ASIC, an FPGA or another programmable logic device, a transistor logic device, a hardware component, or any combination thereof. The processing unit 1202 may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The transceiver unit 1203 may be a transceiver, a transceiver circuit, a communications interface, a bus, another transceiver apparatus, or the like. The storage unit 1201 may be a memory, configured to store the program code and data. The processing unit 1202 may schedule the program code stored in the storage unit 1201, to implement a function of the terminal in the method provided in this embodiment of this application.

The apparatus shown in FIG. 12 may be a terminal, or may be an apparatus applied to a terminal. For example, the apparatus shown in FIG. 12 may be a chip applied to a terminal.

When the processing unit 1202 is a processor, the transceiver unit 1203 is a transceiver. When the storage unit 1201 is a memory, the apparatus may be a terminal. In this embodiment of this application, the transceiver may also be referred to as a transmitter/receiver or another name. This is not limited in this application.

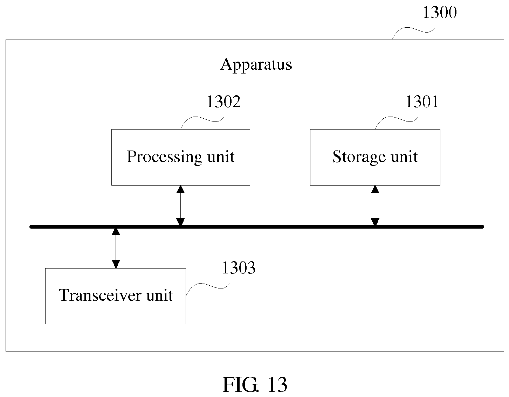

FIG. 13 is a schematic block diagram of an apparatus 1300 according to an embodiment of this application. The apparatus 1300 may implement functions implemented by the base station in each method described above. The apparatus 1300 includes a processing unit 1302. The processing unit 1302 is configured to perform a function of the base station in the method provided in this embodiment of this application. For example, the processing unit 1302 is configured to support the apparatus 1300 in performing S1101 and S1102 in FIG. 11. The apparatus 1300 may further include a transceiver unit 1303, configured to support communication between the apparatus 1300 and another apparatus. The another apparatus may be a terminal. The apparatus 1300 may further include a storage unit 1301, configured to store program code and data. The processing unit 1302 may schedule the program code stored in the storage unit 1301, to implement a function of the base station in the method provided in this embodiment of this application.

The apparatus shown in FIG. 13 may be a base station, or may be an apparatus applied to a base station. For example, the apparatus shown in FIG. 13 may be a chip applied to a base station.

The processing unit 1302 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processing unit 1302 may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The transceiver unit 1303 may be a transceiver, a transceiver circuit, a communications interface, a bus, or the like. The storage unit 1301 may be a memory.

When the processing unit 1302 is a processor, the transceiver unit 1303 is a transceiver. When the storage unit 1301 is a memory, the apparatus may be a base station.

All or some of the methods provided in the embodiments of this application may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, a network device, user equipment, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short), a semiconductor medium (for example, an SSD), or the like.

**Claims**

1. A method implemented by a terminal device for determining time domain information in wireless communications, wherein the method comprises:

   determining time domain information in control information based on a blind detection period of a control channel, wherein the control channel is used to carry the control information, the control information is received from a base station and comprises scheduling information of a data channel, and data transmission is performed based on the scheduling information; and
   determining, based on the time domain information, a time domain resource for performing data transmission.

2. The method according to claim 1, wherein the method further comprises:
   receiving configuration information, wherein the configuration information is used to indicate the detection period of the control channel.

3. A method implemented by a base station for determining time domain information in wireless communications, wherein the method comprises:

   determining time domain information in control information based on a blind detection period of a control channel, wherein the control channel is used to carry the control information, the control information comprises scheduling information of a data channel, and data transmission is performed based on the scheduling information, and the time domain information is used to indicate a time domain resource for performing data transmission; and
   sending the control information.

4. The method according to claim 3, wherein the method further comprises:
   sending configuration information, wherein the configuration information is used to indicate the detection period of the control channel.

5. The method according to claim 1 or 2 or 3 or 4, wherein the determining time domain information in control information based on a detection period of a control channel comprises:
   determining, based on the detection period of the control channel, at least one of a quantity of bits of the time domain information, information indicated by the time domain information, and a time domain information indication method.

6. The method according to claim 5, wherein the determining, based on the detection period of the control channel, a quantity of bits of the time domain information comprises:
   determining the quantity of bits of the time domain information based on the detection period of the control channel and a correspondence between the detection period of the control channel and the quantity of bits of the time domain information.

7. The method according to claim 5 or 6, wherein the quantity of bits of the time domain information may also be a quantity of bits of the time domain information and frequency domain information.

8. The method according to any one of claims 1 to 2 or 3 to 7, wherein the method further comprises:
determining an indication granularity of the time domain information based on the detection period, wherein the indication granularity may be a quantity of third time units comprised in the first time unit and/or the second time unit.

9. An apparatus (1200), comprising a processor (1202) and a memory (1201), wherein the memory is configured to store a program instruction; and
the processor is configured to invoke and execute the program instruction to implement the method according to any one of claims 1 to 2 or 3 to 8.

10. A computer-readable storage medium, wherein the computer-readable storage medium stores a computer instruction, and when the instruction is run on a computer, the computer is enabled to perform the method according to any one of claims 1 to 8.

**Patentansprüche**

1. Verfahren, das von einem Endgerät implementiert wird, zum Bestimmen von Zeitbereichsinformationen in der drahtlosen Kommunikation, wobei das Verfahren umfasst:

   Bestimmen von Zeitbereichsinformationen in Steuerinformationen basierend auf einer Blinderkennungsperiode eines Steuerkanals, wobei der Steuerkanal verwendet wird, um die Steuerinformationen zu übertragen, die Steuerinformationen von einer Basisstation empfangen werden und Zeitplanungsinformationen eines Datenkanals umfassen und die Datenübertragung basierend auf den Zeitplanungsinformationen durchgeführt wird; und
   Bestimmen, basierend auf den Zeitbereichsinformationen, einer Zeitbereichsressource zum Durchführen der Datenübertragung.

2. Verfahren gemäß Anspruch 1, wobei das Verfahren ferner umfasst:
Empfangen von Konfigurationsinformationen, wobei die Konfigurationsinformationen verwendet werden, um die Erkennungsperiode des Steuerkanals anzugeben.

3. Verfahren, das von einer Basisstation implementiert wird, zum Bestimmen von Zeitbereichsinformationen in der drahtlosen Kommunikation, wobei das Verfahren umfasst:

   Bestimmen von Zeitbereichsinformationen in Steuerinformationen basierend auf einer Blinderkennungsperiode eines Steuerkanals, wobei der Steuerkanal verwendet wird, um die Steuerinformationen zu übertragen, die Steuerinformationen Zeitplanungsinformationen eines Datenkanals umfassen und die Datenübertragung basierend auf den Zeitplanungsinformationen durchgeführt wird und die Zeitbereichsinformationen verwendet werden, um eine Zeitbereichsressource zum Durchführen der Datenübertragung anzugeben; und
   Senden der Steuerinformationen.

4. Verfahren gemäß Anspruch 3, wobei das Verfahren ferner umfasst:
Senden von Konfigurationsinformationen, wobei die Konfigurationsinformationen verwendet werden, um die Erkennungsperiode des Steuerkanals anzugeben.

5. Verfahren gemäß Anspruch 1 oder 2 oder 3 oder 4, wobei das Bestimmen von Zeitbereichsinformationen in Steuerinformationen basierend auf einer Erkennungsperiode eines Steuerkanals umfasst:
Bestimmen, basierend auf der Erkennungsperiode des Steuerkanals, wenigstens entweder einer Anzahl von Bits der Zeitbereichsinformationen, von Informationen, die durch die Zeitbereichsinformationen angezeigt werden, und/oder eines Verfahrens zur Anzeige von Zeitbereichsinformationen.

6. Verfahren gemäß Anspruch 5, wobei das Bestimmen, basierend auf der Erkennungsperiode des Steuerkanals, einer Anzahl von Bits der Zeitbereichsinformationen umfasst:

Bestimmen der Anzahl von Bits der Zeitbereichsinformationen basierend auf der Erkennungsperiode des Steuerkanals und einer Entsprechung zwischen der Erkennungsperiode des Steuerkanals und der Anzahl von Bits der Zeitbereichsinformationen.

7. Verfahren gemäß Anspruch 5 oder 6, wobei die Anzahl von Bits der Zeitbereichsinformationen auch eine Anzahl von Bits der Zeitbereichsinformationen und der Frequenzbereichsinformationen sein kann.

8. Verfahren gemäß einem der Ansprüche 1 bis 2 oder 3 bis 7, wobei das Verfahren ferner umfasst:
Bestimmen einer Anzeigegranularität der Zeitbereichsinformationen basierend auf der Erkennungsperiode, wobei die Anzeigegranularität eine Anzahl von dritten Zeiteinheiten sein kann, die in der ersten Zeiteinheit und/oder der zweiten Zeiteinheit enthalten sind.

9. Einrichtung (1200), die einen Prozessor (1202) und einen Speicher (1201) umfasst, wobei
der Speicher dafür ausgelegt ist, eine Programmanweisung zu speichern; und
der Prozessor dafür ausgelegt ist, die Programmanweisung aufzurufen und auszuführen, um das Verfahren gemäß einem der Ansprüche 1 bis 2 oder 3 bis 8 zu implementieren.

10. Computerlesbares Speichermedium, wobei das computerlesbare Speichermedium eine Computeranweisung speichert, und wenn die Anweisung auf einem Computer ausgeführt wird, der Computer befähigt wird, das Verfahren gemäß einem der Ansprüche 1 bis 8 durchzuführen.

## Revendications

1. Procédé mis en œuvre par un dispositif terminal pour déterminer des informations de domaine temporel dans des communications sans fil, le procédé comprenant les étapes consistant à :

   déterminer des informations de domaine temporel dans des informations de commande d'après une période de détection aveugle d'un canal de commande, le canal de commande étant utilisé pour transporter les informations de commande, les informations de commande étant reçues d'une station de base et comprenant des informations d'ordonnancement d'un canal de données, et la transmission de données étant effectuée d'après les informations d'ordonnancement ; et
   déterminer, d'après les informations de domaine temporel, une ressource de domaine temporel servant à l'exécution d'une transmission de données.

2. Procédé selon la revendication 1, le procédé comprenant également l'étape consistant à :
   recevoir des informations de configuration, les informations de configuration étant utilisées pour indiquer la période de détection du canal de commande.

3. Procédé mise en œuvre par une station de base pour déterminer des informations de domaine temporel dans des communications sans fil, le procédé comprenant les étapes consistant à :

   déterminer des informations de domaine temporel dans des informations de commande d'après une période de détection aveugle d'un canal de commande, le canal de commande étant utilisé pour transporter les informations de commande, les informations de commande comprenant des informations d'ordonnancement d'un canal de données, et la transmission de données étant effectuée d'après les informations d'ordonnancement, et les informations de domaine temporel étant utilisées pour indiquer une ressource de domaine temporel servant à l'exécution d'une transmission de données ; et
   envoyer les informations de commande.

4. Procédé selon la revendication 3, le procédé comprenant également l'étape consistant à :
   envoyer des informations de configuration, les informations de configuration étant utilisées pour indiquer la période de détection du canal de commande.

5. Procédé selon la revendication 1 ou 2 ou 3 ou 4, dans lequel la détermination d'informations de domaine temporel dans des informations de commande d'après une période de détection d'un canal de commande comprend l'étape consistant à :

déterminer, d'après la période de détection du canal de commande, au moins un élément parmi une quantité de bits des informations de domaine temporel, les informations indiquées par les informations de domaine temporel, et un procédé d'indication d'informations de domaine temporel.

**6.** Procédé selon la revendication 5, dans lequel la détermination, d'après la période de détection du canal de commande, d'une quantité de bits des informations de domaine temporel comprend l'étape consistant à :
déterminer la quantité de bits des informations de domaine temporel d'après la période de détection du canal de commande et une correspondance entre la période de détection du canal de commande et la quantité de bits des informations de domaine temporel.

**7.** Procédé selon la revendication 5 ou 6, dans lequel la quantité de bits des informations de domaine temporel peut également être une quantité de bits des informations de domaine temporel et des informations de domaine fréquentiel.

**8.** Procédé selon l'une quelconque des revendications 1 et 2 ou 3 à 7, le procédé comprenant également l'étape consistant à :
déterminer une granularité d'indication des informations de domaine temporel d'après la période de détection, la granularité d'indication pouvant être une quantité de troisièmes unités de temps contenues dans la première unité de temps et/ou la deuxième unité de temps.

**9.** Appareil (1200), comprenant un processeur (1202) et une mémoire (1201), dans lequel
la mémoire est configurée pour stocker une instruction de programme ; et
le processeur est configuré pour appeler et exécuter l'instruction de programme pour mettre en œuvre le procédé selon l'une quelconque des revendications 1 et 2 ou 3 à 8.

**10.** Support de stockage lisible par ordinateur, le support de stockage lisible par ordinateur stockant une instruction informatique, et lorsque l'instruction est exécutée sur un ordinateur, l'ordinateur est activé pour effectuer le procédé selon l'une quelconque des revendications 1 à 8.

FIG. 1

FIG. 2

Frequency
domain

System
bandwidth

| Subband 2 |
| Subband 1 |
| Subband 0 |

FIG. 3

PDCCH

PDSCH

FIG. 4

FIG. 5

FIG. 6

S701

Determine time domain information in control information based on a detection period of a control channel, where the control information is used for performing data transmission

S702

Determine, based on the time domain information, a time domain resource for performing data transmission

FIG. 7

FIG. 8

FIG. 9

FIG. 10

S1101

Determine time domain information in control information based on a detection period of a control channel, where the control information is used for performing data transmission, and the time domain information is used to indicate a time domain resource for performing data transmission

S1102

Send the control information

FIG. 11

1200

Apparatus

1201

Storage unit

1202

Processing unit

1203

Transceiver unit

FIG. 12

1300

Apparatus

1302                          1301

Processing unit          Storage unit

1303

Transceiver unit

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170188340 A1